# EUROPEAN PATENT SPECIFICATION

(11) **EP 3 391 530 B1**
(45) Date of publication and mention of the grant of the patent: **01.06.2022**
(21) Application number: 16820495.6
(22) Date of filing: 13.12.2016
(51) Int. Cl.: H02P 9/00, H02P 9/08, H02P 9/30, H02P 5/74, H02P 6/20, H02P 1/54, H02P 1/56, H02J 3/40

(54) **SYNCHRONOUS ELECTRICAL POWER DISTRIBUTION SYSTEM STARTUP AND CONTROL**
ANLAUF UND STEUERUNG EINES SYNCHRONEN ELEKTRISCHEN LEISTUNGSVERTEILUNGSSYSTEMS
DÉMARRAGE ET CONTROLE D'UN SYSTÈME DE DISTRIBUTION DE PUISSANCE ÉLECTRIQUE SYNCHRONE

(30) Priority: 14.12.2015 US 201562267143 P; 31.07.2016 US 201662369191 P; 31.07.2016 US 201662369184 P; 01.08.2016 US 201662369195 P; 20.10.2016 US 201615299051; 01.12.2016 US 201615367032; 01.12.2016 US 201615366954; 01.12.2016 US 201615367023
(43) Date of publication of application: 24.10.2018
(73) Proprietor: Rolls-Royce North American Technologies, Inc., Indianapolis, IN 46241 (US)
(72) Inventor: BLACKWELDER, Mark, Jon, Plainfield IN 46168 (US); RANCURET, Paul, M., Indianapolis IN 46240 (US)
(74) Representative: Rolls-Royce plc
(86) International application number: PCT/US2016/066422
(87) International publication number: WO 2017/106216

(56) References cited:
- GB-A- 871 188
- JP-A- 2004 015 980
- US-A1- 2009 167 231
- US-A1- 2012 306 458
- US-A1- 2012 313 372
- US-B1- 7 116 073

## Description

### TECHNICAL FIELD

This disclosure relates to synchronous alternating current systems and, in particular, to the startup of a synchronous generator.

### BACKGROUND

Synchronous power systems are commonly used for efficiently powering electrical motors that drive fans, compressors, pumps, and other types of loads. Asynchronous electrical machines produce (e.g., motors) or consume (e.g., generators) torque only in conditions where the mechanical speed is different than the electrical speed. The magnitude of the difference of mechanical and electrical speeds is commonly referred to as "slip". Asynchronous motors produce at least partial, and up to full rated, torque at all mechanical speeds less than the electrical voltage speeds, thus allowing acceleration rapidly to near matching electrical and mechanical speeds when connected to an electrical bus operating at constant speed, or "line start". The ratio of electrical speed with respect to mechanical speed of an electrical machine is defined by the number of magnetic pole pairs of the specific design. Examples of asynchronous motors are induction motors which function based on Eddy current phenomena and hysteresis motors which rely on magnetic hysteresis phenomena. Induction motors are commonly used to drive mechanical loads from fixed speed national electric grids due to their "line start" capacity.

Synchronous electrical machines produce (e.g., motors) or consume (e.g., generators) torque only in conditions where the mechanical speed is equal to the electrical speed and the rotor and stator magnetic poles are misaligned. Synchronous machines commonly cannot "line start" due to the impractical requirement to connect the nonrotating motor to the rotating electrical grid at precisely aligned stator and rotor magnetic poles and develop sufficient torque to accelerate the rotor to electrical speed before misalignment exceeds ninety degrees electrical, where accelerating torque decreases and becomes negative at one hundred eighty degrees electrical.

US 2012/313372 A discloses a method and a system for starting and operating an electrically driven load, e.g. a compressor or pump, by power supply from a mechanical driver, e.g. a turbine or combustion engine. The driven load is mechanically connected to a first electrical machine, and the mechanical driver is mechanically connected to a second electrical machine. The first electrical machine is electrically interconnected to the second electrical machine at a standstill or when the first and or second machine have low speed. In an acceleration phase, the first electrical machine is accelerated by accelerating the second electrical machine with the mechanical driver. When the first electrical machine has reached a predefined rotational speed, the first machine is synchronized with a local electrical power network and connected to that network.

### SUMMARY

In a first aspect, the disclosure is directed to a system comprising a prime mover configured to provide mechanical energy to the system by spinning a shaft, a synchronous AC generator comprising a rotor mechanically coupled to the shaft, an exciter mechanically coupled to the shaft and configured to output a variable field current to excite the synchronous AC generator, a plurality of synchronous electric motors electrically direct coupled to the synchronous AC generator and each comprising a rotor rotatable operable to drive one or more mechanical loads, and a controller configured to establish and maintain a magnetic coupling between the rotor of the synchronous AC generator and all of the rotors of the synchronous electric motors by control of a level of the field current during a ramped increase in rotation of the rotor of the synchronous AC generator from zero rotational speed, characterised in that the controller is further configured to control the level of the field current based on a difference in an angle of deflection between a position of the rotor of the synchronous AC generator and a position of each of the rotors of the respective synchronous electric motors.

In a second aspect, the disclosure is directed to a method comprising initiating rotation of a prime mover to commence a ramped increase in rotational speed of a synchronous AC generator from a zero speed condition, establishing, by a controller, a level of a field current to excite the synchronous AC generator to form a magnetic coupling between the synchronous AC generator and a plurality of synchronous electric motors that are electrically coupled to the synchronous AC generator and configured to drive respective mechanical loads, and controlling, by the controller, the level of field current to maintain the magnetic coupling during the ramped increase in rotational speed of the synchronous AC generator to a full rated speed condition so that the plurality of synchronous electric motors stay synchronized with the synchronous AC generator, the level of the field current controlled by the controller by determining a difference in an angle of deflection between a position of the rotor of the synchronous AC generator and a position of each of the rotors of the plurality of synchronous electric motors; and adjusting the field current, by the controller, according to the determined difference in the angle of deflection during the ramped increase in rotational speed of the synchronous AC generator to the full rated speed condition.

A third aspect of the disclosure, not forming part of the present invention, is directed to a system comprising a synchronous AC generator rotated by a prime mover to generator electric power, an exciter rotated by the prime mover to generate a field current to excite the synchronous AC generator, and a controller configured to control a level of excitation of the exciter to form a magnetic coupling between the synchronous AC generator and a plurality of synchronous electric motors electrically coupled with the synchronous AC generator, the field current generated and the magnetic coupling formed as the synchronous AC generator and the exciter are accelerated from a zero speed condition by the prime mover, and the controller further configured to control the level of excitation of the exciter to maintain the magnetic coupling and synchronously accelerate the plurality of synchronous electric motors with the synchronous AC generator toward a rated speed of the synchronous AC generator by variable application of the excitation voltage to the exciter to decrease a magnitude of the excitation voltage in response to stiffening of the magnetic coupling between the synchronous AC generator and the plurality of synchronous electric motors during the ramped increase in rotational speed of the synchronous AC generator to the full rated speed condition.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example synchronous power system for providing electrical power from an alternating current synchronous generator to synchronous motors, in accordance with one or more aspects of the present disclosure.
FIG. 2 is a schematic diagram illustrating a portion of an example synchronous power system for providing electrical power from a synchronous alternating current generator to synchronous motors, in accordance with one or more aspects of the present disclosure.
FIG. 3 is a conceptual diagram illustrating a portion of an example synchronous power system for providing electrical power from a synchronous alternating current generator to synchronous motors, in accordance with one or more aspects of the present disclosure.
FIG. 4 is a flow chart illustrating example operations performed by a controller of an example synchronous power system for providing electrical power from a synchronous alternating current generator to synchronous motors, in accordance with one or more aspects of the present disclosure.
FIG. 5 is a diagram illustrating a variable exciter voltage as compared to rotor speed of an example synchronous power system for providing electrical power from a synchronous alternating current generator to synchronous motors, in accordance with one or more aspects of the present disclosure.
FIG. 6 is a conceptual diagram illustrating a portion of an example synchronous power system for providing electrical power from an alternating current generator to one or more motors, in accordance with one or more aspects of the present disclosure.
FIG. 7 is an example representation of a generator rotor vector and one or more motor rotors vector, or an average of the motor rotor vectors.
FIG. 8 is an example implementation of estimation of rotor position based on apparent power at an output of a generator.
FIG. 9 is an example implementation of pulsed excitation at an accelerating angular difference.
FIG. 10 is an operational flow diagram example of pulsed excitation system startup.
FIG. 11 is a conceptual diagram illustrating a portion of an example synchronous power system for providing electrical power from an alternating current generator to one or more motors, in accordance with one or more aspects of the present disclosure.
FIG. 12 illustrates an example graph of the effect of damping sub-harmonic currents.
FIG. 13 is an operational flow diagram example of actively damping power angle oscillations.
FIG. 14 is a block diagram illustrating operation of a controller in an example configuration for dynamically adjusting the voltage output signal.
FIG. 15 are example diagrams illustrating a transition of a voltage output signal between AC excitation and DC excitation in accordance with shaft speed.
FIG. 16 is a block diagram of an example system that includes a first generator and a second generator.
FIG. 17 is a block diagram of an example of a system controller illustrated in FIG. 16.
FIG. 18 is an example of an operational flow diagram of the system illustrated in FIGs. 16 and 17.

### DETAILED DESCRIPTION

The techniques and circuits described in this disclosure may enable a controller of an example synchronous power system to magnetically couple a generator to one or more load driving synchronous motors by controlling the field current of an exciter during a ramped increase in rotation of the generator from zero rotational speed. The magnetic coupling allows the generator to initiate and sustain synchronous rotation with the synchronous motors so that the generator and the motors may accelerate synchronously throughout the ramped increase in rotational speed. As such, the example synchronous power system may establish and maintain generator to load-motor magnetic coupling during a ramped increase in rotational speed without being subject to an increase in mass or decrease in efficiency that is commonly caused by power electronics, pony motors, and induction rotor devices which are typically used to synchronize motors or loads to a generator in other power systems, where the generator is already rotating at rated speed.

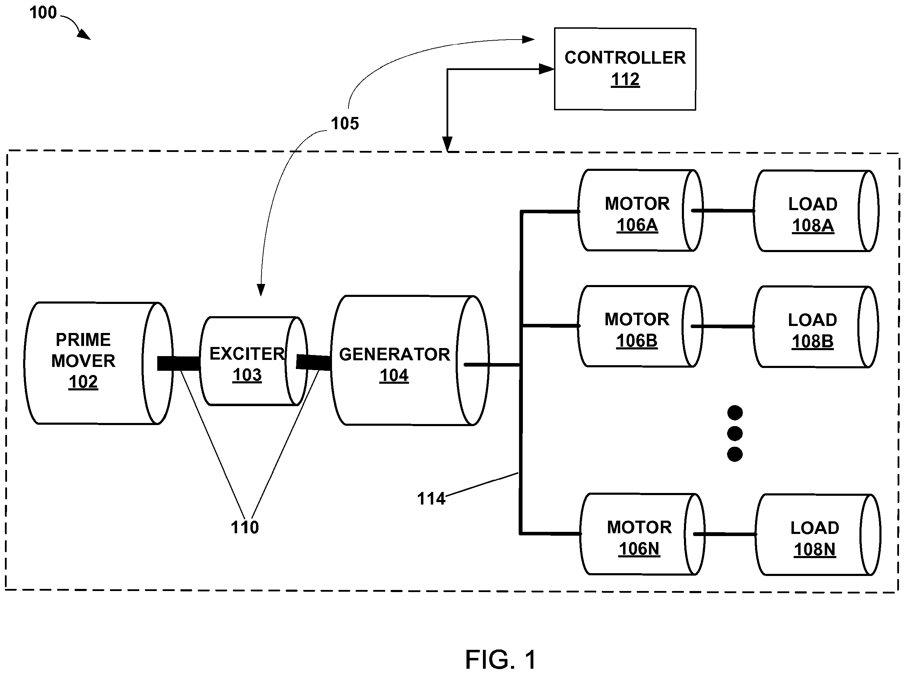

FIG. 1 is a conceptual diagram illustrating system 100 as an example synchronous power system for providing polyphase electrical power from at least one synchronous alternating current generator to synchronous motors, in accordance with one or more aspects of the present disclosure. The polyphase electrical power may be balanced polyphase electrical power, such as three phase or six phase balanced electrical power. System 100 includes prime mover 102, exciter 103, generator 104, motors 106A-106N (collectively referred to as "motors 106), and loads 108A-108N (collectively referred to as "loads 108"). System 100 also includes controller 112 for controlling each of components 102, 103, 104, 106, and 108.

Prime mover 102 is configured to provide mechanical energy to system 100 by rotating or spinning shaft 110. Prime mover 102 is any type of machine, whether an engine or a motor, that is configured to produce mechanical energy for use in a synchronous power system. Examples of prime mover 102 include heat engines (e.g., internal or external combustion engines), electrical motors, pneumatic motors, hydraulic motors, jet engines, or any other type of machine that can be controlled so as to provide a controlled, ramped acceleration of the rotational speed of shaft 110 during startup. As used herein, the term ramped acceleration or ramped increase in rotation or ramp refers to a controlled increasing rate of change of speed of a prime mover and generator from zero rotational speed to rated or operational rated speed, that occurs over a predetermined period of time commensurate with the torque capacity used to accelerate the combined rotational inertias of motors and loads and any losses associated with all devices receiving power from the generator. In example systems, the period of time for the ramped increase from zero rotational speed to rated or operational rated speed of the generators and magnetically coupled motors (loads) is greater than thirty seconds. In some examples, the ramped acceleration or speed of prime mover 102 can be finely controlled during start-up. For example, prime mover 102 may be controllable so that the speed of prime mover 102 increases during a first phase of a start-up period (e.g., from one to two seconds, up to about thirty seconds), from substantially zero to a relatively small predetermined percentage, such as one percent of its operational speed. During the first phase, or establishment phase, of the ramp the magnetic coupling between the generator and the motors may be established. Once prime mover 102 reaches the relatively small predetermined percentage, such as one percent, of its operational speed, and the magnetic coupling is established, prime mover 102 may be controlled so that the ramp speed of prime mover 102 increases during a second phase of the start-up period (e.g., thirty to fifty seconds), from one percent to eighty or one hundred percent of the prime mover's operational speed, such as rated speed. During the second phase, or maintain phase, the magnetic coupling between the generator 104 and the motors 106 may be maintained such that as the generator 104 accelerates, the motors synchronously accelerate to maintain the same rotational speed as the generator. Accordingly, the ramped speed of the generator 104 and motors 106 may continue to increase until rated speed or operational speed is reached. In other examples, the ramped acceleration of the shaft 110 during startup may follow one or more predetermined acceleration profiles. The acceleration profile(s) may be illustrated as one or more curves that increase over a predetermined period of time to reach a target operational speed, such as rated speed. The acceleration profile(s) and/or acceleration ramps may be based on available levels of the field current *I_{FIELD},* load configuration, saturation levels of the generator 104 and the loads, and/or impedances of the generator, loads and system. Thus, the magnitude and rate of ramped acceleration may be controlled such that magnetic coupling between the generator 104 and the motors 106 is established and maintained along the entirety of the predetermined acceleration curve(s) and/or ramped acceleration.

Exciter 103 and generator 104, in combination, convert the mechanical energy provided by prime mover 102 into a suitable form of electrical energy for powering and spinning motors 106 to drive loads 108. Alternatively, exciter 103 and generator 104 may be on separate shafts, or exciter 103 may not be a shaft driven device. The controller 112 and the exciter 103 may cooperatively operate as an excitation system 105 to provide or otherwise output a variable excitation signal. The excitation signal may be, for example, a field current *I_{FIELD}* (also referred to as a "magnetizing current") to generator 104. In this example, generator 104 uses the field current *I_{FIELD}* to magnetize the electromagnets in its rotor such that when the rotor spins with shaft 110, generator 104 produces an alternating current at electrical bus 114. Exciter 103 may produce the field current *I_{FIELD}* by producing an electromotive force (EMF) which induces an alternating (AC) current, and then by rectifying the AC current, exciter 103 outputs the field current *I_{FIELD}* in a direct (DC) current form.

In the example of FIG. 1, generator 104 is a synchronous AC generator. In some examples, generator 104 is configured to output variable frequency, three-phase AC power onto bus 114. In other examples, generator 104 may output any poly-phase (e.g., two or more phase) AC power onto a single bus such as bus 114 or multiple buses. In the example of FIG. 1, exciter 103 may be a brushless field exciter (e.g., a rotating-rectifier exciter). Exciter 103 may be any type of exciter that can produce a controllable excitation signal, such as field current *I_{FIELD}.* The terms excitation signal and field current *I_{FIELD},* are used interchangeably herein, however, the excitation signal may be any other form of variable signal capable of causing a generator to output a variable voltage and current to supply variable power to a load. Thus, it is to be understood that the description of the output of the exciter or excitation system as a field current does not limit the operation of the generator or the output of the exciter or the excitation system to only a field current.

Motors 106 represent any type of synchronous motor for receiving AC electrical power provided by a synchronous power system, such as polyphase electrical power provided by system 100. In the example of FIG. 1, motors 106 are electrically coupled to generator 104 via bus 114. For example, motors 106 may be propulsion motors for an aircraft or marine craft, for example, for driving propellers. Motors 106 may include additional sensors and/or feedback circuitry for providing information (e.g., voltage, current, speed, frequency, phased, etc.) back to the components of system 100 that are used to control motors 106, such as controller 112.

Loads 108 represent any type of motor-driven load. In the example of FIG. 1, loads 108 are mechanically coupled to motors 106. Examples of loads 108 include propellers, fans, compressors, pumps, screws, or any other type of load that is driven by an electrical motor, such as one of motors 106, and do not exhibit zero speed or static torque. Thus, the loads 108 may exhibit a linear increase in counter torque as the rotational speed of individual loads 108 increases with a corresponding increase in the speed of a motor 106. The loads may be non-linear loads having torque that is monotonic to speed so that as speed increases, torque increases. In other words, torque may be continuous through a range of speed such that the motors may have a uniformly smooth torque curve.

System 100 includes controller 112, which is configured to establish and maintain a magnetic coupling between generator 104 and the motors 106 during a ramped increase in rotational speed of the synchronous AC generator 104 from a zero speed condition. The magnetic coupling may be established and maintained controller 112 by operation in the excitation system 105 to control a level of the excitation signal, or field current *I_{FIELD},* being output from exciter 103. For the sake of brevity and clarity, controller 112 is shown as, generally, being operatively coupled to any or all of components 102, 103, 104, 106, and 108, 110, and 114. In other words, controller 112 is configured to provide signals and information to, and receive information from (e.g., as feedback), each of the different components of system 100. For example, controller 112 may send information to prime mover 102 to vary the acceleration or speed of shaft 110. As another example, during operation as part of the excitation system 105, the controller 112 may send information to exciter 103 so the excitation system 105 may vary or otherwise control the variable excitation signal in the form of the field current *I_{FIELD}* provided to generator 104.

Controller 112 may comprise any suitable arrangement of hardware that may include software or firmware configured to perform the techniques attributed to controller 112 that are described herein. Examples of controller 112 include any one or more computing systems, computing devices, microprocessors, digital signal processors (DSPs), application specific integrated circuits (ASICs), field programmable gate arrays (FPGAs), or any other equivalent integrated or discrete logic circuitry, as well as any combinations of such components. Thus, there may be any number of independently operating controllers 112 in the system 100 that may or may not be in direct communication with each other. Controller 112 that includes software or firmware also includes hardware, such as one or more processors, processing units, processing components, or processing devices, for storing and executing the software or firmware contained therein.

In general, a processor, processing unit, processing component, or processing device is a hardware device that may include one or more microprocessors, DSPs, ASICs, FPGAs, or any other equivalent integrated or discrete logic circuitry, as well as any combinations of such components. Although not shown in FIG. 1, controller 112 may include a memory configured to store data. The memory may be any form of storage medium that is other than transitory, and may include any volatile or non-volatile media, such as a random access memory (RAM), read only memory (ROM), non-volatile RAM (NVRAM), electrically erasable programmable ROM (EEPROM), flash memory, and the like. In some examples, the memory may be external to controller 112 (e.g., may be external to a package in which controller 112 is housed) and may include or comprise any suitable storage medium, such as a non-transitory storage medium, for storing instructions that can be retrieved and executed by a processor of controller 112.

In some examples, controller 112, or any portion thereof, may be an internal component or feature of any of components 102, 103, 104, 106, or 108. In other words, any one or more of components 102, 103, 104, 106, or 108 may include controller 112, or any feature or characteristic associated with controller 112 that is described herein, as an internal component.

In operation, controller 112 may provide a signal or command (directly or indirectly) to prime mover 102 that causes shaft 110 to begin spinning with a particular rotational acceleration in accordance with the signal or command provided by controller 112. For example, the controller 112 may accelerate the shaft 110 through the first phase or the establishment phase. A t a time when the rotational acceleration of the shaft 110 and the generator 104 is relatively low, such as during the first phase, the controller 112 may provide an additional signal or command to exciter 103 that causes exciter 103 to produce a particular field current *I_{FIELD},* or excitation signal. The excitation signal and speed with which shaft 110 spins may cause generator 104 to output a two or more phase AC electric power across electrical bus 114. The voltage of the electric power may be only a fraction of the operational voltage of the generator 104 due to the relatively low rotational speed of the generator 104. The current of the electric power may be of sufficient magnitude, however, to provide a torque producing current sufficient to establish the magnetic coupling and induce rotation of motors 106. Motors 106 may be energized by the AC electric power received via bus 114 to rotate synchronously with the ramped increase in rotational speed of the generator to drive loads 108.

By providing signals and/or commands to prime mover 102, exciter 103, and generator 104, controller 112 may establish the magnetic coupling between generator 104 and motors 106 by controlling the field current *I_{FIELD}* exciter 103 provides to generator 104 and by also controlling the acceleration or speed of shaft 110. As such, controller 112 may establish and maintain generator to load-motor magnetic coupling during the startup phase of the generator such that the generator and the motors accelerate at about the same speed during the ramped increase in speed of the generator. Accordingly, system 100 may not suffer from an increase in mass or decrease in efficiency that is commonly caused by power electronics, pony motors, and induction rotor devices which are typically used to synchronize motors to a generator of other power systems, after the generator is already rotating at rated speed.

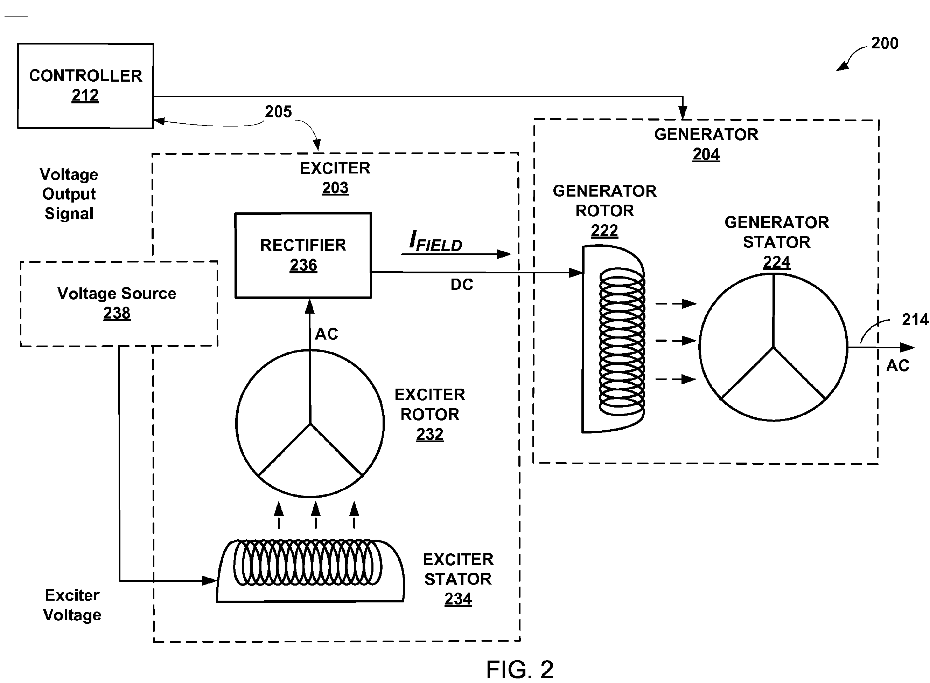

FIG. 2 is a schematic diagram illustrating system 200 as a portion of an example generator of an example synchronous power system, such as system 100 of FIG. 1, for providing polyphase electrical power from an alternating current generator, such as a synchronous generator, to one or more motors, such as synchronous motors, in accordance with one or more aspects of the present disclosure. For the sake of brevity and ease of description, system 200 is described within the context of FIG. 1. For example, exciter 203 and generator 204 of system 200 represent examples of, respectively, exciter 103 and generator 104 of system 100. Exciter 203 and generator 204 are controllable by controller 212 of system 200 which represents an example of controller 112 of system 100, and excitation system 205 represents an example similar to excitation system 105.

Exciter 203 represents an example of a brushless exciter and is configured to output an excitation signal, such as field current *I_{FIELD}* to generator 204. Exciter 203 is controllable by controller 212 such that signals or commands from controller 212 in the form of a voltage output signal (exciter voltage) cause exciter 203 to output a variable level excitation signal, such as a variable field current *I_{FIELD}.* In other words, the excitation system 205 outputs a variable excitation signal, and the generator 204 generates output power for the motors based on the variable excitation signal. Exciter 203 includes exciter rotor 232, exciter stator 234, and rectifier 236. Exciter 203 may include other components required to produce the variable excitation signal

In the example of Fig. 2, generator 204 may include field coils in which the excitation signal in the form of field current *I_{FIELD}* flows. Rectifier 236 rectifies an AC current output from exciter rotor 232 to a DC field current *I_{FIELD}* output that is used by generator 204 to magnetize generator rotor 222. In some examples, rectifier 236 is a full-bridge rectifier.

Exciter stator 234 may include an exciter field coil, which is a set of stationary coils. In other words, the exciter field coil does not move or spin with movement of a prime mover shaft. Exciter stator 234 may be energized, by controller 112 using a controlled variable voltage source 238, to induce a current in the exciter stator 234. The voltage source 238 may supply the exciter voltage. The voltage source 238 may transition the exciter voltage between AC voltage and DC voltage such that an AC current, a DC current or some combination of an AC current waveform and a DC current waveform may be induced with the exciter stator 234. Accordingly, the exciter voltage may selectively include an AC component and a DC component. The level of the AC component and the DC component in the exciter voltage may be selectively and/or independently varied by the controller based on a rotational speed of the exciter rotor 232. Thus, a waveform of the exciter voltage may selectively include at least one of an AC component or a DC component. In addition, the controller may transition a level of the AC component lower and transition of a level of the DC component higher based on an increase in rotational speed of the exciter while electric power output of the synchronous generator is occurring.

Controller 112 may control the voltage level of the voltage source 238 (exciter voltage) via the voltage output signal to vary the level of the DC current that is induced by exciter stator 234. The voltage source 238 is illustrated with dotted lines since the voltage source 238 may be included in the controller 212, and may be controlled using a voltage regulation circuit or through other voltage regulation techniques. Alternatively, the voltage source 238 may be a separate device or system that receives the voltage output signal from the controller 212 and produces the exciter voltage, or may be included in the exciter 203 and receives the voltage output signal. For purposes of brevity, the exciter voltage will be described as being controlled by the controller 212 using a voltage output signal, although it should be recognized that the controller 212 may provide the exciter voltage or control output of the exciter voltage.

Exciter rotor 232 may include an exciter armature, which is a set of balanced coils, coupled to shaft 110 (not shown) of system 100, which is driven by prime mover 102 of system 100, and controlled by controller 212 to spin at a variable speed or acceleration. In other words, unlike the exciter field coil which remains stationary, the exciter armature may move or spin with movement of a prime mover shaft. The balanced coils of exciter rotor 232 are connected through rectifier 236 to generator rotor 222. When the exciter armature of exciter rotor 232 is rotating or spinning, the magnetic flux produced by the exciter field coil of exciter stator 234 is provided by the exciter armature coils of exciter rotor 232 to rectifier 236. This change in magnetic flux in the exciter armature coils of exciter rotor 232 generates an electromotive force (EMF). This EMF induces current in the field winding of generator rotor 222 during a first portion of the EMF AC cycle. The flux produced by the exciter armature coil of exciter rotor 232 then decreases as it leaves the magnetic flux region of exciter field coil of exciter stator 234, and an opposite EMF is generated. Rectifier 236 naturally applies the EMF in a consistent manner to induce current flow in one direction, as field current *I_{FIELD},* through the field coil of generator rotor 222.

Generator 204 is configured to output an AC power to electrical bus 214. Generator 204 is controllable by controller 212 such that a signal and/or command (voltage output signal) from controller 212 controls the exciter voltage, which may cause generator 204 to output AC power at a variable power level or variable frequency at bus 214. Generator 204 includes generator rotor 222 and generator stator 224.

Generator rotor 222 may include a rotating field coil that spins or rotates with shaft 110 of system 100 congruently with the spinning or rotation of exciter rotor 232. The field coil of generator rotor 222 is typically much more inductive than the rotor coils of exciter rotor 232, and as such, the field coil of generator rotor 222 may filter the fundamental frequency of field current *I_{FIELD}* (i.e., the rectified exciter current). Field current *I_{FIELD}* from exciter 203 magnetizes generator rotor 222.

Generator stator 224 includes a set of stationary coils which do not move or spin with movement of shaft 110. As generator rotor 222 rotates with the spinning of shaft 110, the resultant magnetic field produced by field current *I_{FIELD}* running through the rotating field coil of generator rotor 222 induces an AC current out of generator stator 224 at bus 214. The controller 212 controls the level of the field current by application of the excitation voltage to the exciter with a magnitude and/or frequency to induce a terminal voltage at the generator terminals. During the ramped increase in rotation of the generator rotor 222, the frequency of the voltage varies from just a hertz or two during the establishing phase, up to full load rated speed during the maintaining phase.

During the establishing phase, when the controller 112 is establishing the magnetic coupling between the synchronous generator 204 and the synchronous motors 106, the generator rotor 222 may be spinning at a frequency that is just high enough to produce some fraction of the rated voltage output of the generator 204. In addition, based on the field current *I_{FIELD},* generator 204 may also output torque producing current on the bus 214. The torque producing current may be controlled with the field current *I_{FIELD}* so as to produce enough current at the motors 106 to initiate rotation by establishing the magnetic coupling.

The generator 204 and exciter 203 may be designed to provide a predetermined range of the field current *I_{FIELD}.* The predetermined range of the field current may be greater than 0 - 100 percent of the expected operational range of the field current during rated speed operation of the generator 204. Thus, during the ramped acceleration, the field current may be increased above 100 percent to establish the magnetic coupling, and then may be reduced, as the generator 204 and the motors synchronously accelerate at a common rotational speed. In an example, the field current *I_{FIELD}* may be increased to 150%, or some other percentage, during the establishing phase of ramped acceleration to initially commence the magnetic coupling (e.g. overcome non-rotational force to get the motors to start rotating), and then reduced during the maintaining phase as the rotation speed accelerates. In other examples, other percentages of the field current *I_{FIELD}* may be used in accordance with system design parameters such as system impedance, cooling capabilities of the generator 204 and the motors, and also operating parameters such as rotational speed, counter torque forces in the motors, and other factors affecting the ability to initiate rotation and maintain rotation of the motors during the ramped acceleration without exceeding system capabilities.

In an example configuration, the synchronous motors may drive loads that are close to zero counter torque at low speed, and the synchronous motors will have no back electromagnetic force (EMF) at zero rotational speed. Thus, in this example, the magnitude or level of the torque producing current during the establishing phase need only overcome the static friction or stiction of the motors 106 and corresponding loads to initiate rotation of the motors synchronously with the generator. In other examples, some additional counter torque related forces may be present such that the magnitude of the torque producing current may need to be high enough to overcome such forces. In an example of a 4KV generator, the generator may rotate during the ramped acceleration of the establishing phase at a low speed and sufficiently excited, such as at 125%, to produce millivolts of voltage a frequency of 1 or 2 Hz (such as at .5 revolutions-per-minute), while also producing enough torque producing current, such as 5 amps of starting current, from the bus 214 to energize and initiate rotation of each of the motors.

As the rotational speed of the generator 204 accelerates, the generator 204 enters the second phase, or maintaining phase, of ramped acceleration where the field current *I_{FIELD}* is controlled by the controller 112 to maintain the magnetic coupling. The level of the field current *I_{FIELD}* may be controlled by the controller 112 based on a relational difference in an angle of deflection between a position of the generator rotor 222 and a position of the rotors of the motors 106. As the speed changes, or as the load fluctuates during ramped acceleration, there may be changes in the angular deflection between the rotor angle of the generator rotor 222 and an average of the rotor angles of the synchronous motors. In response to such changes in angular deflection, the field current *I_{FIELD}* may be adjusted correspondingly by the controller 112, according to the determined relation, to maintain the magnetic coupling. In an example, as the speed accelerates during the ramped acceleration, and the voltage on the bus 214 increases, the field current *I_{FIELD}* may be correspondingly reduced below 100% as the magnetic coupling stiffens due to changing system parameters, such as increased voltage on the bus 214.

Differences in angular deflection between the angular position of the generator rotor 222 and an average of the angular position of the rotors of the synchronous motors may be directly measured using sensors, such as shaft position sensors. Alternatively, or in addition, the angular position of the respective generator and motors may be determined based on operational parameters. Examples of operational parameters from which the angular deflection may be inferred include power angle of the electric power generated by the generator 204; voltage and current of the bus 214 and speed of synchronous rotation of the generator 204 and the motors; voltage and current vectors of the power at the bus 214; or any other combination of system parameters from which a difference in angular rotor positions may be determined.

In an example system, the impedance of the generator 204 may be substantially matched with the system impedance so as to substantially balance the torque producing current being supplied to the motors during the ramped acceleration. System impedance may include the parallel impedance of all the motors, and other impedance in the system, such as cable impedance and the like. In this configuration, the generator 204 may be substantially matched to the characteristics of the motors so that the ramped acceleration profile provides a "soft start" capability. This soft start capability may be sufficient to initiate rotation of the motors and maintain the magnetic coupling without overcurrent conditions based on controlling the ramped acceleration and the generator excitation. Overcurrent conditions may also be accounted for in substantially matching the generator 204 and the motors by provided an increased saturation margin of the exciter and/or the generator rotor. In addition, generator or motor cooling and/or other forms of increased current carrying capability, such as larger connecting power cables may be employed to substantially match the generator and the motors.

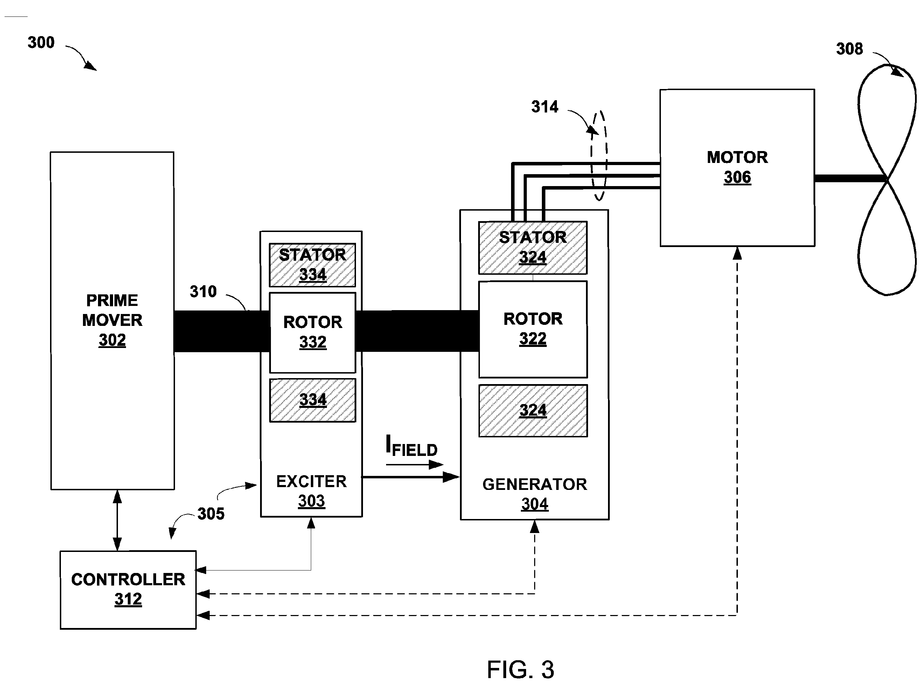

FIG. 3 is a conceptual diagram illustrating system 300 as a portion of an example synchronous power system, such as system 100 of FIG. 1, for providing polyphase electrical power from an alternating current generator, such as a synchronous generator, to one or more motors, such as synchronous motors, in accordance with one or more aspects of the present disclosure. For the sake of brevity and ease of description, system 300 is described within the context of system 100 of FIG. 1 and system 200 of FIG. 2. For example, exciter 303 and generator 304 of system 300 represent examples similar to, respectively, exciter 103 and generator 104 of system 100 or exciter 203 and generator 204 of system 200. Exciter 303 and generator 304 are controllable by controller 312 of system 300 which represents an example similar to the controllers 112 and 212 of systems 100 and 200, and excitation system 305 represents an example similar to excitation systems 105 and 205.

System 300 includes prime mover 302 as an example of prime mover 102 of system 100. Prime mover 302 produces mechanical energy that spins shaft 310 which causes rotor 332 of exciter 303 and rotor 322 of generator 304 to also spin or rotate as exciter 303 and generator 304 may be both mechanically coupled to shaft 310. In other words, rotor 332 and rotor 322 may be mechanically coupled to prime mover 302 via shaft 310. In other examples, exciter 303 and generator 304 may be on separate shafts, or exciter 303 may not be a shaft driven device.

System 300 further includes motor(s) 306 and load(s) 308. Motor 306 is driven by a three-phase AC electrical signal output from generator 304 onto link 314. In the example of system 300, motor 306 is a synchronous propulsor motor which is mechanically coupled to load 308 by a rotatable shaft 336. A rotor 338 included in the motor 306 is rotatably coupled with the shaft 336, and is magnetically coupled with the rotor 322 of the generator 304 to drive the shaft 336. In the example of FIG. 3, load 308 is a fan or a propeller, or another load having a torque curve starting from substantially zero counter torque at zero speed. In the illustrated example, system 300 includes one motor 306, however, is it understood that system 300 may include more than one motor 306 and more than one load 308, including any and all other examples of motors 106 and loads 108 described above with respect to system 100.

Controller 312 of system 300 may send and receive information for controlling the speed at which shaft 310 spins, the current or voltage level at bus 314, and/or the speed at which motor 306 spins load 308. For example, controller 112 may provide a signal or command to prime mover 302 that causes prime mover 302 to initiate a ramped increase of spinning shaft 310 from zero speed with a acceleration profile defined by the signal from controller 312. Controller 312 may also operate within the excitation system 305 to provide a signal or command (voltage output signal) to exciter 303 that causes exciter 303 to output a variable excitation signal such as a particular field current *I_{FIELD}* in accordance with the signal or command from controller 312 that provides the exciter voltage. The field current *I_{FIELD}* produced by exciter 303 and the speed with which shaft 310 spins may cause generator 304 to output three-phase AC electric power across electrical bus 314. Motor 306 may use the voltage and current from the AC electric power received via bus 314 to magnetically couple the rotor 338 to the rotor 322 and drive load 308. Thus, the generator 304 may generate variable power to magnetically couple the motors 306 based on a variable excitation signal output by the excitation system 305. Magnetic coupling of the generator 304 and the rotors 304 may be established when electrical poles in the generator 304 are substantially aligned with magnetic poles in the motors 306.

Substantial alignment of the electrical poles in the generator 304 and the motors 306 may be based on an angular difference between a position of the generator rotor and a position of the motor rotors. For example, the generator and motors may remain substantially aligned when angular differences between the generator rotor and the motor rotors remain within about ninety degrees. During operation, different parameters, such as variations in the load, and variation in the rotational speed can vary a torque deflection angle or angular difference between a vector representing a position of the generator rotor and a vector representing a position of the motor rotors. For example, changes in motor load torque for some or all of the loads, or a ramped increase in rotational speed of the generator and motors may vary the angular difference. In some example, the motor rotors vector may represent an average of the rotor positions of different motors. The controller 312 may correspondingly vary the field current to control the angular difference by varying the amount of torque producing current supplied to the motors during ramped acceleration and during operation at rated rotational speed. For example, the controller may vary the field current to minimize the deflection angle, or maintain the deflection angle, or keep the deflection angle at less than ninety degrees.

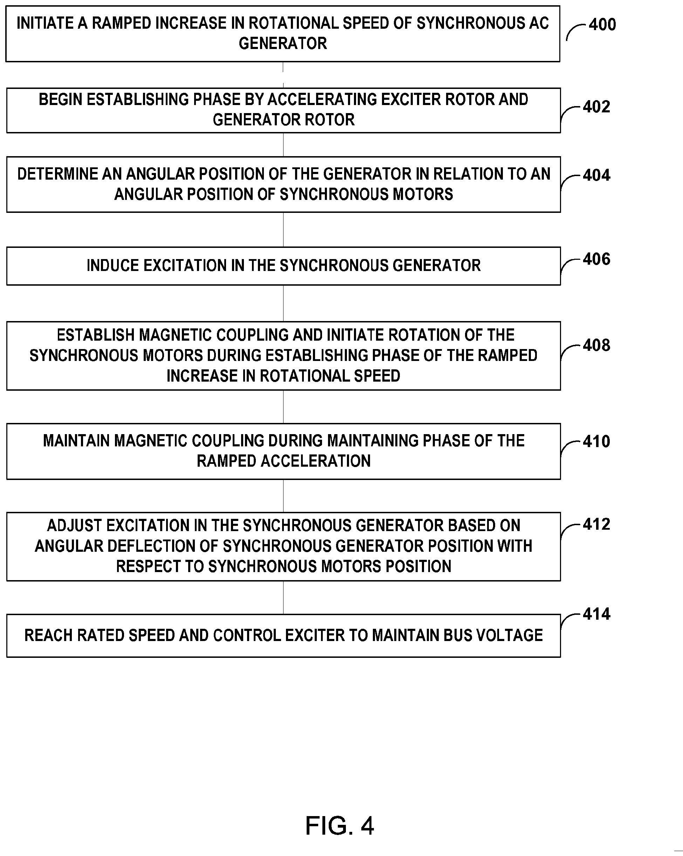

FIG. 4 is a flow chart illustrating example operations performed by a controller of an example synchronous power system, such as system 100 of FIG. 1, for providing polyphase electrical power from a synchronous alternating current generator to synchronous motors, in accordance with one or more aspects of the present disclosure. FIG. 4 is described below within the context of FIGS. 1-3. For the sake of brevity, operations 400 - 420 are described as being performed by controller 112 of FIG. 1 although controllers 212 and 312 may also perform operations 400 - 420.

Controller 112 may magnetically couple generator 104 to motors 106 during ramped acceleration of generator 104 by providing signals and commands, to prime mover 102, exciter 103, and generator 104. The signals and commands include controlling the excitation signal, such as the field current *I_{FIELD}* exciter 103 provides to generator 104, and controlling the rotational acceleration of shaft 110. Controller 112 therefore may have control with respect to the start of prime mover 102 and its rate of ramped acceleration of shaft 110, and controller 112 may have control with respect to the excitation signal, such as the field current *I_{FIELD},* provided to generator 104. Since system 100 powers loads 108 that have a torque requirement that increases in accordance with rotational speed, controller 112 may control system 100 to establish and maintain the magnetic coupling using voltage and torque producing current sufficient to initiate rotation of the motors with the generator, and synchronously maintain the acceleration of the generator and the motors during the ramped increase in rotation. The magnitude and duration of voltage and current generated by the generator and supplied to the loads may be based on system design, such as substantially matching the impedance of the generator and the loads, providing sufficient margin for supply of excitation voltage of 125% to 150% of full rated output of the generator 104, and otherwise tailoring the operation of the generator 104 to the characteristics of the motors and/or loads being magnetically coupled. As such, controller 112 may perform generator to load-motor magnetic coupling during ramped acceleration of the generator without the need for additional power electronics, pony motors, and induction rotor devices that are typically used to synchronize motors to a generator of other power systems, after the generator is already rotating at rated speed.

To implement the control concept provided by controller 112, motors 106 and generator 104 may be impedance matched and controller 102 may control the excitation signal, such as the field current *I_{FIELD}* provided by exciter 103, to enable rotor magnetic flux at generator 104 to produce sufficient voltage and torque producing current at the motors even when ramped acceleration of shaft 110 is in the establishing phase, or just greater than zero speed. In other words, with motors 106 and generator 104 having substantially matched impedances within the system, the magnitude of the voltage and current needed by the motors 106 to initiate and maintain synchronous acceleration during ramped acceleration of the generator are within the operating capacity of generator 104. In addition, the generator 104 may include sufficient capacity to produce excess (e.g., 125% - 150%) of the voltage and/or torque producing current required by motors 106 for predetermined periods (e.g., 5 seconds) without detrimental effect. Substantially zero speed of the shaft 110 refers to the lowest speed in which the generator 104 can source sufficient terminal voltage and current to supply the very small static friction torque, negligible load torque, and torque to accelerate the moment of inertia of the motors 106 to the speed of the generator 104 during the ramped acceleration. For example, the generator may be commencing ramped acceleration and still be at substantially zero speed such that the generator rotates about 1/4 of an electrical revolution before the motors are imitated to begin synchronously rotating with the generator. By controlling the speed of shaft 110 and the energizing voltage (voltage output signal) provided to exciter 103, controller 112 may be able to control establishing and maintaining the magnetic coupling of motors 106 and loads 108 without additional power electronics, pony motors, and induction rotor devices. The magnetic coupling may be controlled so that when prime mover 102 and generator 104 start (e.g., as shaft 110 first begins to rotate and starts to increase from a zero speed to an operational speed over a period of time ranging from seconds to minutes) and the load torques associated with motors 106 and loads 108, which are of negligible magnitude at low speeds, correspondingly increase, the magnetic coupling, once established, can be correspondingly stiffened to avoid loss of synchronous acceleration of the generator and the motors during ramped acceleration. Controller 112 may control system 100 based on the following theory of operations.

For controller 112 to induce a terminal voltage (V_{GEN}) of generator 104 (e.g., a voltage sufficient to provide enough torque producing current to initiate rotation of motor 106 and loads 108), during system start-up and at low rotational rotor speeds (ω) of generator 104, controller 112 may energize the field coil of the stator of exciter 103 to induce a voltage with a significantly high magnitude at the frequency of rotation to provide sufficient starting current. That is, the voltage used to energize the field coil of the stator of exciter 103 may have a combination of magnitude and frequency that causes the magnetic flux produced by the stator of exciter 103 to couple across the exciter air-gap between the stator and rotor, so as to produce an excitation signal, such as a field current *I_{FIELD}* from the rotor of exciter 103, that is sufficient to establish and maintain magnetic coupling between the rotor of the generator 104 and the rotors of all of the synchronous motors 106, without exceeding the voltage and/or current rating of the exciter stator insulation. Establishment of the magnetic coupling occurs by initiating rotation of the rotors of the respective motors 106, and the magnetic coupling is maintained by avoiding excessive torque angle deflection between the rotors of the motors 106 and the rotor of the generator 104. Thus, the excitation signal, such as field current *I_{FIELD},* is capable of producing sufficient generator phase voltage and torque producing current at whatever speed the generator 104 is rotating.

For example, consider Table 1, which shows example variations in field current *I_{FIELD}* and terminal voltage V_{GEN} that produce sufficient torque producing current at different rotor speeds (ω) within the acceleration profile of the generator to establish and maintain the magnetic coupling using the magnitude of the exciter voltage at exciter 103. Note: The values shown in Table 1 are examples only for the purposes of illustration; actual values vary depending on system parameters and load requirements.

**Table 1**

| Exciter Voltage (V) | Exciter Frequency (Hz) | Field Current - *I_{FIELD}* (A) | Rotor Speed - ω (RPM) | Terminal Voltage - V_{GEN} @ Rotor speed (V) |
|---|---|---|---|---|
| 6V | 0 | ~0 | 1 | ~0 |
| 260V | 200 | 13 | 1 | ~0.19 |
| 200V | 200 | 10 | 1000 | 145.5 |
| 6V | 0 | 10 | 1000 | 145.5 |
| 200V | 200 | 10 | 3300 (rated) | 480 |
| 2V | 0 | 3.3 | 10000 | 480 |

According to Table 1, with an exciter voltage of 6V, 0Hz (AC waveform), when a rotor speed (ω) of generator 104 is substantially zero (or low), the field current *I_{FIELD}* out of exciter 103 may be negligible or zero, which may not be sufficient to produce anything above a negligible terminal voltage V_{GEN} at generator 104, and therefore will not be of sufficient magnitude to produce enough torque producing current to drive motors 106. On the other hand, at an exciter voltage of 260V, 200Hz, when the rotor speed (ω) of generator 104 is substantially zero (or low), the field current *I_{FIELD}* out of exciter 103 may be 13A and may be sufficient to produce a terminal voltage V_{GEN} of generator 104 that is approximately 0.19V, which may produce sufficient magnitude of torque producing current to magnetically couple and initiate rotation of motors 106.

As the rotor speed (ω) increases, the required magnitude of the exciter voltage becomes less and less, to produce a sufficient field current *I_{FIELD}* out of exciter 103 that is sufficient to produce a terminal voltage V_{GEN} of generator 104 and corresponding torque producing current to magnetically couple and drive motors 106. For example, at an exciter voltage of only 200V, 200Hz, when the rotor speed (ω) of generator 104 is approximately 1/3 the operational speed of 3300 RPM (e.g., 1000 RPM), the field current *I_{FIELD}* out of exciter 103 of 10A may be sufficient to produce a terminal voltage V_{GEN} of generator 104 that is approximately 145.5V, which may be of sufficient magnitude to magnetically couple and drive motors 106.

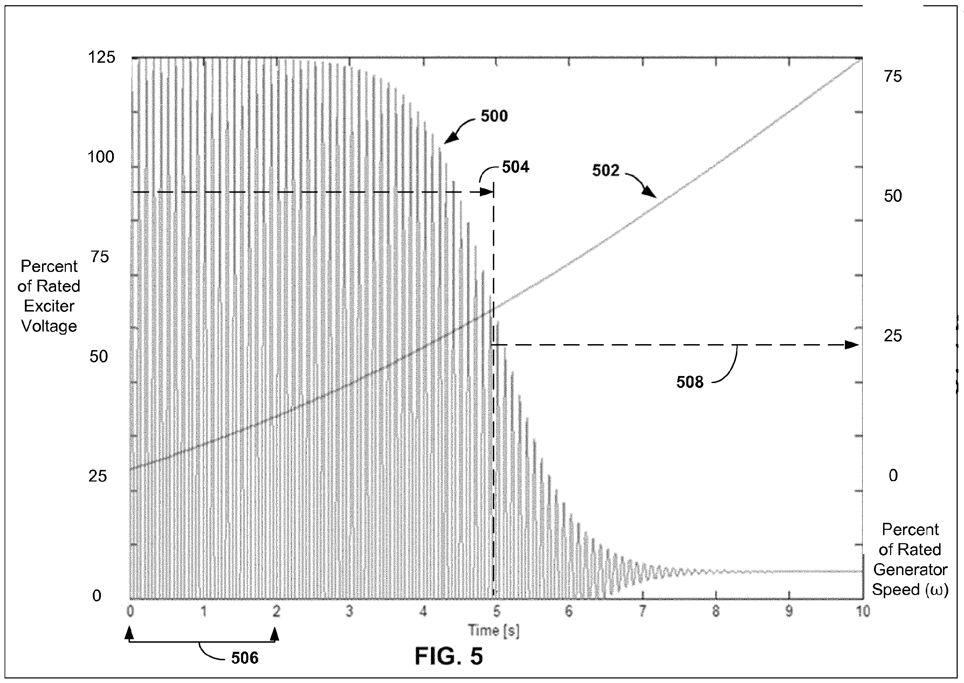

Table 1 also shows that when the rotor speed (ω) of generator 104 is relatively high (e.g., at 1000 RPM or some other operational speed), an exciter voltage of only 6V, 0Hz (DC waveform) may produce a field current *I_{FIELD}* out of exciter 103 of 10A which may be sufficient to produce a terminal voltage V_{GEN} of generator 104 that is approximately 145.5V In other words, Table 1 shows that, when the exciter voltage of exciter 103 is increased to a relatively high frequency (e.g. 200Hz), by increasing the magnitude of the exciter voltage to sufficiently high levels (e.g., 200V), exciter 103 may produce a field current *I_{FIELD}* that is sufficiently high (e.g., 10A), even near substantially zero or low speed (ω), to produce a terminal voltage V_{GEN} that is sufficient for driving motors 106 to begin and maintain rotation. As the rotor speed (ω) of the generator 104 increases beyond a threshold speed (e.g., 1/3 operational or 1/3 max speed), the magnitude of the exciter voltage can be reduced and still cause exciter 103 to produce a sufficiently high field current *I_{FIELD}* to maintain the magnetic coupling and drive the motors 106. When the rotor speed (ω) reaches a predetermined rotational speed, such as an operational speed or a maximum speed, the AC component of the exciter voltage can be removed entirely and the exciter voltage can be a nominal DC voltage (e.g., 6V, 0Hz). See FIG. 5 for a graphical view of an example of the relationship between exciter voltage and rotor speed (ω).

The above theory of operations may enable controller 112 to re-configure exciter 103 from operating as an "inside out" field wound motor, to operating as a transformer, such as an air gap transformer. In other words, when the magnetic coupling between the generator 104 and motors 106 is established and maintained as the shaft 110 is increasing from substantially zero speed up to its operational speed, controller 112 may provide an exciter voltage to exciter 103 that is of sufficiently "high magnitude and frequency" for inducing the terminal voltage V_{GEN} at bus 114 that is needed to initiate and maintain rotation of motors 106 and load 108 synchronous with the accelerating rotational speed of the generator 104.

In operation, referring to FIG. 4, controller 112 may initiate a ramped increase in rotational speed of the shaft 110 that mechanically couples the prime mover 102, such as a jet engine, of the system 100 to the synchronous AC generator 104 of the system (400). The ramped increase in rotational speed may be from a zero speed condition of the AC generator 104. For example, during a period of time that is associated with the start-up of prime mover 102, controller 112 may provide a signal and/or command to prime mover 102 that causes shaft 110 to begin a ramped acceleration, such as an acceleration profile, from a zero speed condition to an operational speed. At the onset of an establishing phase, or start-up phase of the ramped acceleration (e.g., lasting anywhere from between zero and five seconds), the rotors of exciter 103 and generator 104 begin spinning congruently with shaft 110. (402) During the ramped acceleration, controller 112 may receive sensor information indicative of an angular position of the rotor of the synchronous generator 104 in relation to the angular position of the rotors of the synchronous motors 106, as prime mover 102 mechanically spins or rotates shaft 110 (404). For example, controller 112 may infer the relation of the angular positions based on voltage and/or current measurements taken within the system 100 (such as from AC generator 104), power angle measurements (such as from bus 214), or any other sensed parameters indicative of the relation of the angular positions of the generator 104 and motors 106.

While the speed of shaft 110 is at substantially zero, or at any time during the establishing phase while shaft 110 is in ramped acceleration, controller 112 may induce excitation in system 100. (406) The resulting field current *I_{FIELD}* causes motors 106 and loads 108 to "spin-up" or be induced (energized) to begin rotating synchronously with AC generator 104 by establishing a magnetic coupling between the rotor of the generator 104 and the rotors of all of the motors 106 during the establishing phase. (408) Controller 112 may determine a level of a field current *I_{FIELD}* needed to excite the AC generator 104 in order to establish a magnetic coupling between the AC generator 104 and the electrical motors 106 that are electrically coupled to the AC generator and are configured to drive one or more mechanical loads 108. For example, controller 112 may utilize a function or a look-up table of values to determine the level of field current *I_{FIELD}* needed by AC generator 104 to produce a terminal voltage V_{GEN} at bus 114 that is of sufficient magnitude and frequency to supply starting current to establish the magnetic coupling and begin turning motors 106 and loads 108 as shaft 103 accelerates during the establishing phase. In some examples, controller 112 may input the speed into a function or look-up table and determine, based on the function or look-up table, that the level of the field current *I_{FIELD}* is at a maximum level of current when the speed of the shaft is at substantially zero speed.

After the magnetic coupling is established, the ramped acceleration enters a maintaining phase in which the controller 112 controls the field current *I_{FIELD}* to maintain the magnetic coupling so the generator 104 drives the motors 106 to accelerate at the same speed as the generator toward the rated speed of the system (410) During the maintaining phase, the controller 112 may adjust the field current *I_{FIELD}* based on the angular deflection of the angular position of the generator 104 with respect to the angular positions of the motors 106 (412). In an example system, as the speed increases, the stiffness of the magnetic coupling increases, and the level of the field current *I_{FIELD}* may be correspondingly reduced. Accordingly, at the conclusion of the ramped acceleration, the level of the field current may be at a minimum level when the speed of the shaft is at an a operational speed (e.g., 3300 RPM or some other speed needed to drive AC generator 104 to produce the rated V_{GEN} at bus 114). Upon reaching rated operational speed, the ramped synchronous acceleration of the generator and the motors concludes, and the controller 112 may control the exciter to output the field current *I_{FIELD}* to maintain the voltage on the bus 114 (414).

In example operation, establishing and the maintaining the magnetic coupling may involve the controller 112 determining the speed of the shaft 110, a power angle of the AC generator 104 and changes, over time, in the speed of the shaft 110 and the power angle of the AC generator 104 with respect to a power angle of the loads 106. In this case, controller 112 may determine the level of the field current *I_{FIELD}* needed to excite the AC generator sufficiently to establish and maintain the magnetic coupling between the AC generator and all of the motors that are electrically coupled to the AC generator and configured to drive one or more mechanical loads based on the speed of the shaft 110, the power factor of the AC generator, and changes, over time, in the speed of the shaft 110 and the power factor of the AC generator. Thus, in some examples, the function, look-up table, and/or algorithm that controller 112 may use to determine the field current *I_{FIELD}* needed for a particular load condition may be determined by other than the angular deflection of the rotor positions. Controller 112 may input at least one of the rotational speed, the power factor, or changes in the speed and/or the power factor, into a function and/or look-up table and determine, based on an output from the function and/or look-up table, the level of the field current *I_{FIELD}* to maintain, increase or decrease the stiffness of the magnetic coupling.

The excitation system 105 may adjust the excitation signal, such as the field current *I_{FIELD},* to maintain the power factor of the AC generator in a predetermined range, such as greater than -0.9, less than +0.9, or otherwise near 1.0, as the power factor fluctuates in the predetermined range. As the speed of the shaft 110 changes and the power factor changes, controller 112 may update its determination at any given time regarding the level of field current *I_{FIELD}* needed to excite the AC generator 104 and maintain the synchronous AC generator 104 magnetically coupled with all of the synchronous electric motors 106 that are electrically coupled to the AC generator 104 and configured to drive one or more mechanical loads 108. In other words, the function and/or look-up table used by controller 112 may factor in changes in speed, motor load, and/or power factor to cause controller 112 to adjust the field current *I_{FIELD}* accordingly.

Controller 112 may control the exciter 103 of the system 100 to cause the exciter 103 to output the level of the field current *I_{FIELD}*to excite the AC generator 104 and establish and maintain the magnetic coupling between the synchronous AC generator 104 and the synchronous electrical motors (420) during ramped acceleration. For example, controller 112 may establish magnetic coupling of the AC generator 104 and the motors 106 by increasing the level of the field current *I_{FIELD}* above a rated level to induce rotation of the motors 106 when the generator first begins to rotate. After the magnetic coupling has been established, the controller 112 may vary the output from exciter 103 during ramped synchronous acceleration of the generator 104 and the motors 106 to maintain, increase or decrease and angular deflection between the generator rotor angle and the motor rotor angles. Alternatively, during start-up of system 100, the field current *I_{FIELD}* may be varied to adjust the stiffness of the magnetic coupling in response to controller 112 determining that the speed of the shaft 110, the power factor of the AC generator 104, and/or changes, overtime, in the speed of the shaft 110 and the power factor of the AC generator 104 warrant such variation in the field current *I_{FIELD}.*

Controller 112 may control the field current *I_{FIELD}* using a voltage output signal or command to control the exciter voltage. Although referred to herein as a "voltage output signal," control of exciter 103 by the controller 112 to output the field current *I_{FIELD}* may be a command, a variable excitation voltage output by the controller 112, or a control signal provided directly to the exciter 103 to create the exciter voltage, or to a power supply or other device that may directly or indirectly create the exciter voltage to induce the exciter 103 to output the field current *I_{FIELD}.* The voltage output signal may cause application of an exciter voltage to the exciter 103 that has a sufficient magnitude or frequency to induce (when the shaft 110 is at substantially zero speed) a field current *I_{FIELD}.* and therefore a terminal voltage V_{GEN}, at the AC generator. The terminal voltage V_{GEN} may cause sufficient torque producing current at the synchronous electric motors 106, during ramped acceleration of the generator 104, to initiate synchronous rotation with the generator 104 to drive the one or more mechanical loads 108. For instance, in some examples, the terminal voltage V_{GEN} is a minimum voltage needed by motors 106 to accelerate loads 108 from substantially zero speed. By utilizing the principles of Table 1, controller 112 may apply a relatively high level of exciter voltage at a relatively high frequency, to the armature of exciter 103 such that a field current *I_{FIELD}* is induced out of exciter 103, even if shaft 110 is not spinning or spinning slowly. As the speed of shaft 110 accelerates along an acceleration profile to operational speed, controller 112 may reduce the magnitude of the exciter voltage back down to predetermined operating levels associated with the operational speed(s).

In some examples, controller 112 may apply the exciter voltage directly (e.g., via an internal voltage source) using the voltage output signal. In other examples, exciter 103 may include a variable voltage source and controller 112 may control the variable voltage source of exciter 103 to output the exciter voltage based on the voltage output signal to produce a sufficiently high voltage or frequency at the field coil of exciter 103 to induce a terminal voltage V_{GEN} at AC generator 104 that causes motors 106 to drive loads 108.

In some examples, controller 112 may continue to monitor the speed of shaft 110, the power factor of AC generator 104, the magnitude of the terminal voltage V_{GEN}, the level of field current *I_{FIELD}* out of exciter 103, and the rotational speed or acceleration of loads 108 and dynamically adjust the amount of excitation that controller 112 applies to exciter 103 accordingly. For example, controller 112 may dynamically adjust the exciter voltage to exciter 103 by decreasing a magnitude of the exciter voltage in response to determining an increase in the rotational speed of the shaft 110 or an increase in a speed of the one or more mechanical loads. For example, controller 112 may dynamically decrease the magnitude of the exciter voltage proportionally to the level of increase in the speed of the shaft 110, or an increase in the speed of the one or more mechanical loads. In other words, at speeds where the DC excitation becomes effective, as the speed of shaft 110 increases or as the speed of the one or more mechanical loads 108 increases, controller 112 may decrease the level of exciter voltage or in some examples, may transition to modulated low voltage DC excitation, since the increasing speed of shaft 110 or the increasing speed of the one or more loads 108 may lead to an increase in the level of field current *I_{FIELD}* out of exciter 103, and thereby lead to an increase or maintaining of the level of the terminal voltage at bus 114.

In some examples, as also described elsewhere, controller 112 may monitor the power factor of AC generator 104 and dynamically adjust the field current by adjusting the magnitude or frequency of the exciter voltage so as to substantially maintain unity power factor. As used herein, substantially maintaining unity power factor refers to maintaining the power factor within a predetermined range of unity such as +/- .1, such that the power factor ranges from .90 lagging to 1.10 leading. For example, controller 112 may dynamically vary the exciter voltage magnitude and frequency to increase the field current *I_{FIELD}* to move the power factor to the lagging region (e.g., in response to determining the power factor is greater than one or "leading"). Conversely, controller 112 may dynamically vary the exciter voltage magnitude and frequency to decrease the field current *I_{FIELD}* to move the power factor to the leading region (e.g., in response to determining the power factor is less than one or "lagging").

In some examples, controller 112 may apply the exciter voltage to the exciter, so as to induce a field current *I_{FIELD}* and terminal voltage, at low speeds by setting the magnitude of the exciter voltage to a maximum voltage when the speed of the shaft is at a substantially zero speed and setting the magnitude of the exciter voltage to a minimum voltage when the speed of the shaft is at an operational speed. In other words, controller 112 may utilize the principles of Table 1 and as described above to use a relatively high magnitude and frequency exciter voltage when the speed of shaft 110 is low (e.g., less than operational speed) and use a lower magnitude and frequency exciter voltage when the speed of shaft 110 is high (e.g., at operational speed).

By energizing exciter 103 with a particular high level and high frequency voltage in this way, controller 112 may control the field current *I_{FIELD}* output from exciter 103 even at low rotational speeds. Controller 112 may control exciter 103 using a speed independent exciter armature or exciter voltage, and therefore, dynamically control the field current *I_{FIELD}* providing the magnetic flux of the rotor of generator 104 so as to permit a significant terminal voltage V_{GEN}, even at very low shaft speeds. The significant terminal voltage V_{GEN} may induce current flow in the attached load motors 106 and thus torque, thereby accelerating load motors 106 to match the electrical speed of generator 104.

As the components of system 100 spin-up to a predetermined operational speed, the exciter field energizing voltage may increase in frequency, decrease in AC magnitude, and an additional DC component may increase. Near operational speed, the AC component of the exciter field voltage may be eliminated and controller 112 may use techniques, such as power factor control, to control the DC component to ensure continued synchronization of load motors 106 under varied load conditions.

FIG. 5 is a diagram illustrating a variable exciter voltage 500 as compared to rotor speed (ω) 502 during ramped acceleration of an example synchronous power system, such as a system for providing polyphase electrical power from a synchronous alternating current generator to synchronous motors, in accordance with one or more aspects of the present disclosure. The variable exciter voltage 500 is delivered to the exciter as an AC signal during an establishing phase 504 of the ramped acceleration, which, in this example, is about 5 seconds. In other examples, the establishing phase may be longer or shorter. During the establishing phase 504, the magnetic coupling between the generator and the motors may be established. In the example of FIG. 5, the magnetic coupling is illustrated as being established in a magnetic coupling establishment range 506 of about 1-2 seconds after start of rotation of the generator from a stopped condition, and generate the exciter voltage 500 at 125% of rated so as to create a field current *I_{FIELD},* such as at 125% of rated output. For example, with reference to Table 1, the variable exciter voltage 500 may be at 260V, the field current may be at 13 Amp, and the generator rotor speed may be substantially zero, such as 1 RPM. In other examples, the magnetic coupling establishment range 506, the level of exciter voltage 500, and the level of field current may be different. In FIG. 5, once the magnetic coupling is established, the exciter voltage 500 is adjusted by the controller to be less than 100% before the end of the establishment phase 504 while still maintaining the magnetic coupling due to the accelerating speed of both the generator and the motors.

During a maintaining phase 508, after the magnetic coupling has been established, the variable exciter voltage 500 transitions from delivery as an AC signal to delivery as a DC signal. As the rotor speed (ω) 502 of generator increases during the maintaining phase, a controller, such as controller 112, may decrease the magnitude of the exciter voltage. For instance, with reference to Table 1, when the rotor speed (ω) 502 of generator reaches approximately 1000 RPM or 1/3 its operational speed, controller 112 may apply a 200V, 200Hz exciter voltage to the exciter to generate a field current of 10A. And eventually, once the rotor speed (ω) 502 of generator reaches approximately 3300 RPM and higher, up to is maximum operational speed, the controller may decrease the magnitude of exciter voltage further, eventually only applying only a minimal 5V, 0Hz exciter voltage to the exciter. The example of FIG. 5 only shows a portion of the maintaining phase 508. In other examples, other durations of the maintaining phase are possible.

In examples where the generator includes a relatively high impedance when compared to a relatively low impedance of motors, such as motors 106, the voltage at the output of the generator may be largely dictated by the motors. For example, the impedance of the generator may be three or four per unit (p.u.) and the impedance of the motors, as viewed from the generator may be one or two p.u. In such examples, changes in the exciter voltage supplied to the generator may result in changes in a magnitude of the torque producing current output of the generator with relatively little change in voltage output of the generator due to the flux linkage between the synchronized rotating motors and rotating generator.

During a startup condition, such as when the speed of the generator is substantially zero and first begins to rotate, or at rotational speeds of less than full speed, such as less than 50% of rated speed of the generator, the motors and the generator may be magnetically coupled and synchronously rotating at the same rotational speed. Under these conditions, the synchronous coupling, or magnetic coupling, between the generator and the motors may be a relatively "loose" coupling or a relatively low "stiffness" in the magnetic coupling of the generator rotor and the motor rotors due to the low rotational speed conditions. (e.g. low change in electrical torque transfer with electrical angle of displacement of motor(s) with respect to generator) For example, a relatively high per unit generator with a relatively low per unit load motors and fixed exciter current may have a significantly reduced increase in power with motor electrical displacement angle.

As described herein, a "loose coupling" or "stiffness" refers to the capability of the rotors of the motors and the generator to maintain electrical phase synchronization and magnetic coupling during changing operating conditions, such as perturbations within the system 100. Such perturbations or disturbances may be, for example, a result of changes in the load, such as load 108, on one or more motors, changes in rotational speed of the generator, and/or changes in the field current supplied to the generator. Examples of other changing operating conditions may include changes in the rotational speed of both the generator 104 and corresponding synchronized motors 106. The robustness of the magnetic coupling of the generator rotor and the motor rotors may be affected by system operating conditions such as the rotational speed, the magnitude of current flow to the motors, and the power factor angle. As the rotational speed of the generator 104 increases, and/or the current flow to the motors 106 increases, the magnetic coupling between the generator 104 and the motors 106 may increase in stiffness making a loss of synchronism between the generator 104 and the motor 106 less likely to occur. In addition, a power factor angle between the voltage and current that is lagging may result in a stiffer coupling when compared to, for example, a unity power factor.

At the time the generator first begins to rotate, via mechanical rotational force, such as provided by a prime mover, the motors may be magnetically coupled with the generator. Since the motors are not rotating at this time, magnetic coupling between the generator rotor and the motor rotors has not yet been established. Establishment of such magnetic coupling will result in the motors beginning to rotate synchronously with the accelerating speed of the generator.

At substantially zero, or very low rotational speed of the generator, the generator may be excited by the exciter to generate electric power, which is supplied to the motors. Based on the excitation, the generated electric power may be supplied at sufficient voltage and torque producing current to overcome any anti-rotational forces, such as static friction present at the motors. The static friction of the motors 106, or stiction, may include mechanical friction, however counter torque, or back EMF is not yet present in the motors, since the motor are not yet rotating synchronously with the generator. Due to the absence of rotation (or low frequency rotation of the generator - such as less than one or two Hz) the magnetic coupling of the rotor of the generator and the rotor of the motors may be initiated or enhanced based on control of the field current by the controller to supply starting current to the motors.

As the field current is introduced, the magnetic coupling between the generator rotor and the motor rotors can be correspondingly established such that the motors are induced to begin rotating in electrical synchronism with the generator. In addition, in response to the magnetic coupling of the generator and the motors, a bus voltage may be established and maintained while the magnetic coupling is maintained. The magnetic coupling between generator and motors is maintained by the controller selectively varying the field current as the rotational speed is ramped from substantially zero to rated speed.

Commencing rotation of the generator 104 may be initiated with a prime mover driving a shaft that is coupled with the generator 104. In example systems where it may not be desirable to operate the prime mover at a relatively slow rotational speed, an auxiliary rotational source may be temporarily coupled with the generator 104 to commence ramped acceleration during the establishing phase. Examples of systems without relatively slow rotational speed of the prime mover may include systems where the prime mover operates with a fixed ramped acceleration profile once started, or where there is a lack of granularity of speed adjustment of a prime mover at such low speeds. In such systems, the prime mover may remain off, or not driving the generator 604, until such time as the first stage, or establishing stage is completed (magnetic coupling completed), and ramped uniform acceleration during the second stage (the maintaining stage), is desired to accelerate the generator and motors up to full rated speed. The auxiliary rotational source may be an electric motor or other source of mechanical rotational force that may be controlled to achieve a relatively slow rotational speed upon demand during the establishing phase. In such a system, the controller 612 may control the activation and speed of the auxiliary rotational source, as well as transition from the auxiliary rotational source to the prime mover when exiting the establishing phase and entering the maintaining phase of ramped acceleration to full rated speed.

In an example system, an auxiliary rotational device, such as an electric machine, is available on the same shaft/drivetrain, such as a 'hotel' generator. In this example system, the auxiliary rotational device is capable of operating as a motor or as a generator. Thus, the auxiliary rotational device may be used as a motor to provide a controlled slow start of the generator, such as via generator shaft, before the prime mover is introduced. For example, where the prime mover is a jet engine, the auxiliary rotational device may rotate the generator at relatively low rotational speed as controlled by the controller prior to any actual engine combustion within the jet engine being introduced. This would allow the system to come up to a very low speed magnetically coupled condition before introducing fuel. This example system may allow operation during starting, where a relatively low speed (such as about 10 rpm) may be the ramped acceleration target while magnetic coupling of the generator and the motors occurs. Once the motors are magnetically coupled with the generator, starting of the prime mover, such as jet engine starting, may be commenced. Thus, in this example, the generator may be magnetically coupled with the motors before the prime mover is started.

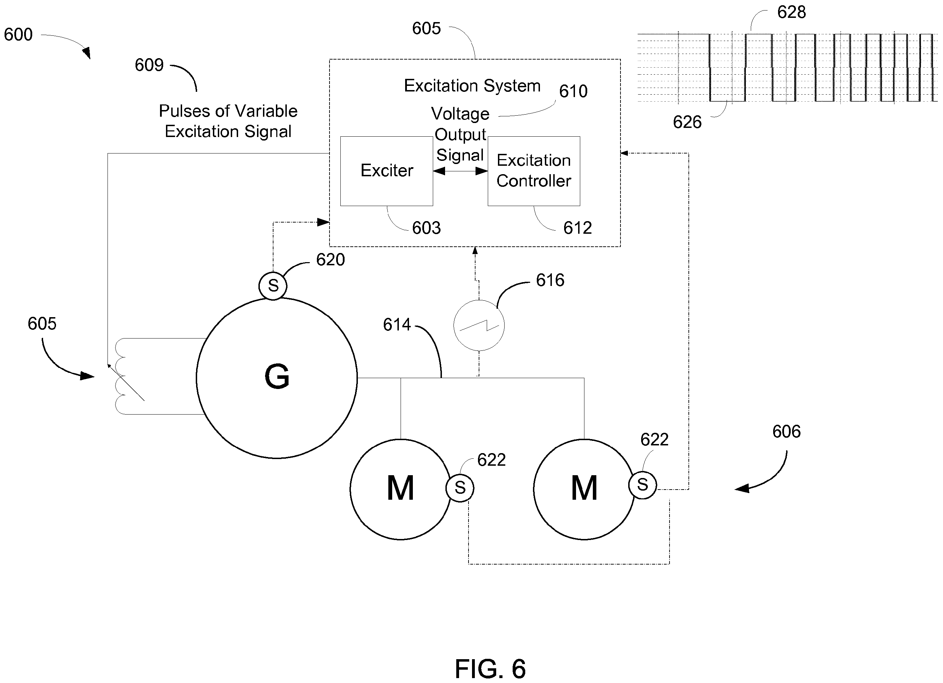

FIG. 6 is a block diagram of an example system 600 that includes a generator 604 having a rotor 605 and providing a voltage and current at an output 614 of the generator 604 in accordance with a field current *I_{FIELD}* 609 supplied by an excitation system 605. The excitation system 605 includes an exciter 603 controlled by a controller 612. The excitation system 605 outputs a variable excitation signal 609, such as the field current *I_{FIELD},* to supply motors 606, such as synchronous motors, that are driving loads. For the sake of brevity and ease of description, system 600 is described within the context of system 100 of FIG. 1, system 200 of FIG. 2 and system 300 of FIG. 3. For example, exciter 603 and generator 604 of system 600 represent examples similar to, respectively, exciter 103 and generator 104 of system 100 or exciter 203 and generator 204 of system 200 or exciter 303 and generator 304 of system 300. Exciter 603 and generator 604 are controllable by controller 612 of system 600, which represents an example similar to the controllers 112 and 212 and 312 of systems 100 and 200 and 300.

The controller 612 operable as an excitation controller within the excitation system 605 may monitor the voltage and/or current of two or more phases at the output 614 of the generator 604 using a power sensor 616. The output 614 may also be considered the system bus, or system voltage and current. The power sensor 616 may be a current transformer (CT), a potential transformer (PT) or any other form of voltage and/or current measurement device capable of outputting phase related measurement signal(s) to the controller 612. Based on the sensed voltage and/or current, the excitation system 605 may output pulses of the excitation signal 609 in either one or both of a first operational stage and a second operational stage. The first and second stages may occur during startup of the system 600, when motors 606 are not yet rotating in synchronism with the generator 606.

Pulses of the excitation signal 609 may be based on pulses of a voltage output signal 610 by the excitation controller 612. The voltage output signal 610 may transition between a AC waveform at relative low generator speeds, and transition to a DC waveform at relatively high generator speeds. During startup of the system 600, when the motors 606 are not yet rotating in synchronism with the generator 606, and the generator 604 is not rotating, or rotating relatively slowly, the voltage output signal 610 may be in the form of an AC waveform, or sinusoidal voltage output signal, if the exciter 603 is also stopped or rotating at the relatively low speed. As previously discussed, at stopped or low speed, the exciter stator of the exciter 603 may not induce EMF in the exciter rotor of the exciter 603 unless the voltage output signal 610 (exciter voltage) is an AC waveform signal. Thus, the magnitude of step change pulses of the excitation signal provided to the generator 604, are in accordance with a step change in the magnitude of the sinusoidal voltage output signal 610 provided by the excitation controller 612.

In the first stage, rotation of the generator 604 has not yet begun. Pulses of the excitation signal 609 output during the first stage may temporarily energize the motors 606. The temporary energization of the motors 606 may create torque producing current at the motors 606, causing the rotors of the motors 606 to move, or rotate towards synchronous alignment with the rotor of the generator 606. The degree of rotational movement of the motors 606 may be dependent on the relational position of the motor rotors and the generator rotor and the static friction of the motors 606. The static friction of the motors 606, or stiction, may include mechanical friction and counter torque, or back EMF present in the motors 606. Movement of the motors 606 in response to receipt of the excitation pulses may be in the form incremental changes in rotational position of the motor rotors.

These incremental movements may also urge alignment of the rotors of different motors 606 into a similar electrical position in preparation for synchronization. In addition, or alternatively, the incremental movements may be a rocking motion due to the motors 606 being in equilibrium. Such a rocking motion may indicate that the motor rotors have been urged into mutual alignment between the motors 606 and with the rotor of the generator 604. In addition, the rocking motion may transition the rotatable rotors of the motors 606 to dynamic friction, which may be lower than static friction of stationary rotors, and therefore require less torque to being rotation of the motors 606 in synchronism with the generator 604 upon the generator commencing rotation.

The excitation pulses provided by the excitation system 605 may occur repetitively on a predetermined schedule, such as at a predetermined time interval. Alternatively, or in addition, the excitation pulses may be at a predetermined frequency and at a predetermined time interval. In addition, or alternatively, a position of rotors of the motors 606 may be monitored with the excitation system 605, and the excitation pulses may be applied until the motor rotors no longer move or are subject to a rocking motion (dynamic friction) in response to receiving a pulse. Individual positions of motor rotors, or an average of positions of the motor rotors may be used.

In the second stage, rotation of the generator 604 has commenced. The excitation system 605 my provide pulses of the variable excitation signal to coincide with the electrical alignment of the generator 604 and motors 606. Thus, the pulses of the variable excitation signals may be provided at times when the generator rotor and the motor rotors are substantially aligned to urge or initiate synchronism. The position of the rotors of the motors 606 and/or the generator 604 may be sensed, or estimated. In addition, or alternatively, an average position of the generator and/or motor rotors may be used.

In an example, during the second stage, the excitation system 605 may selectively output a pulse of the variable excitation signal at a fundamental synchronization frequency of the generator power output, such as at 2 Hz or 4 Hz. The fundamental synchronization frequency may be once per electrical cycle in accordance with the rotational speed and corresponding electrical frequency of the generator 604. In other examples, two pulses of the excitation signal may be output during a cycle of the fundamental synchronization frequency of the voltage and current output of the generator 604.

The pulses of the excitation signal may have step change in magnitude sufficient to induce torque producing current flow at the motors. The step change of the excitation level may be from a lower level to a higher level. The lower level may in a range from zero to a level that would produce an open circuit flux linkage similar to that of the synchronous motor loads, or in other words, an excitation signal of sufficient magnitude to create an effective rated motor voltage at rated motor frequency. The higher level may be a step change above the lower level such as to a level at which saturation of open circuit flux linkage similar to that of the synchronous motor loads occurs, or in other words, an excitation signal of sufficient magnitude to create a percentage overvoltage above effective rated motor voltage at rated frequency. Accordingly, the back EMF flux linkage of the generator 604 may be pulsed between, for example, nominal full load flux linkage (lower level) and some predetermined percentage above the nominal full load flux linkage (upper level).

During the first stage, the magnitude of the pulses may be a step change from an excitation signal presently being applied to the generator to a higher magnitude excitation signal, such as 20% higher. Such a step change in the magnitude of the excitation signal may have a step change impact on the generator current output to the motors 606. For example, torque producing current flow to the motors 606 may double in response to a 120% pulse of the excitation signal. In an example, as illustrated in FIG. 6, the excitation signal during the first stage may be a step repetitive change in magnitude from a zero % level 626 to 100% level 628. As further illustrated in FIG. 6, the excitation pulses may occur at with a variable predetermined frequency resulting in a predetermined variable time interval between excitation pulses. In other examples, other step changes, such as from 80% to 100%, and other variable predetermined frequencies may be used.

In the second stage, the step change may also be from a currently level of magnitude of the excitation signal to a 20% higher (or more) magnitude of the excitation signal. For example, the pulse of the excitation signal during the second stage may be a step change pulse from 100% excitation signal output to 125% excitation signal output. In other examples, other step changes in the magnitude of the excitation signal that result in a desired amount of torque producing current may be used during the second stage.

The position of the generator rotor may be provided by a position signal provided to the excitation system 605 by a generator sensor 620. The generator sensor 620 may be a shaft position sensor, such as an optical shaft encoder, a linear Hall Effect sensor, or any other form of sensing device capable of sensing position of the generator rotor. Alternatively, the position of the generator rotor may be estimated based on the voltage and phase angle sensed with the power sensor 616. In addition, the generator sensor 620 may provide a rotational speed of the generator 604. A position of each of the motor rotors may be provided by a respective position signal provided to the excitation system 605 by respective motor sensors 622. The motor sensors 622 may be a shaft position sensor, such as an optical shaft encoder, a linear Hall Effect sensor, or any other form of sensing device capable of sensing position of a motor rotor. Alternatively, the position of a motor rotor may be estimated based on the voltage and phase angle sensed with the motor sensor 622 at each motor. In addition, the motor sensor 622 may provide a rotational speed of the respective motor 606. The generator sensor 620 and/or the motor sensor 622 are optional and may be omitted.

The excitation system 605 may cause pulses to turn 'on' at the moments in time when the generator rotor and synchronous motor load rotors are aligned with one another. Note that with multiple motor rotors in the system 600, this may be the average position of the rotors. Once the rotors have just passed through alignment relative to one another and are moving out of alignment, the addition of field excitation may have the effect of trying to pull the relative positions of the rotors back together, thus reducing the momentum of frequency slip. Conversely, when the rotor positions have revolved past their most misaligned position, and are moving back towards alignment, removal, reduction, or reversal of the field excitation pulses may be implemented to avoid additive misalignment. Adding additional positive excitation while the rotors are already moving towards alignment may increase the speed at which the rotors move towards alignment. The increased speed at which the rotors move toward alignment may increase the momentum of the frequency slip such that once the rotors pass through alignment, the rotors may significantly overshoot alignment. By removal, reduction, or reversal of the field excitation pulses, such significantly overshooting alignment may be reduced.

Commencing rotation of the generator 604 may be initiated with a prime mover driving a shaft that is coupled with the generator 604. In example systems where it may not be desirable to maintain the prime mover at a relatively slow rotational speed, an auxiliary rotational source may be coupled with the generator 604. Examples of systems where maintained slow rotational speed of the prime move may include systems where the prime mover operates with fixed linearly increasing speed once started, or where control of a prime mover at such low speeds lacks the granularity to maintain such a slow rotational speed. In such systems, the prime mover may remain off, or not driving the generator 604, until such time as the second stage is completed and a ramped uniformly increasing speed is desired to bring the generator up to full rated speed. The auxiliary rotational source may be an electric motor or other source of mechanical rotational force that may be controlled to achieve and maintain a relatively slow rotational speed upon demand. In such a system, the controller 612 may control the activation and speed of the auxiliary rotational source, as well as transition from the auxiliary rotational source to the prime mover.

In an example system 600, an auxiliary rotational device, such as an electric machine, is available on the same shaft/drivetrain, such as a 'hotel' generator. In this example system, the auxiliary rotational device is capable of operating as a motor or as a generator. Thus, the auxiliary rotational device may be used as a motor to provide a controlled slow start of the generator 604, such as via generator shaft, before the prime mover is introduced. For example, where the prime mover is a jet engine, the auxiliary rotational device may rotate the generator at relatively low rotational speed as controlled by the controller 612 prior to any actual engine combustion within the jet engine being introduced. This would allow the system 600 to come up to a very low speed synchronized condition before introducing fuel. This example system may allow operation in the second stage during starting, where a relatively low speed (such as about 10 rpm) may be held while synchronization of the generator 604 and the motors 606 occurs. Then, the motors 606 are synchronized with the generator 604, starting of the prime mover, such as engine starting, may be commenced. Thus, the motors 606 may be synchronized with the loads before the prime move is started.

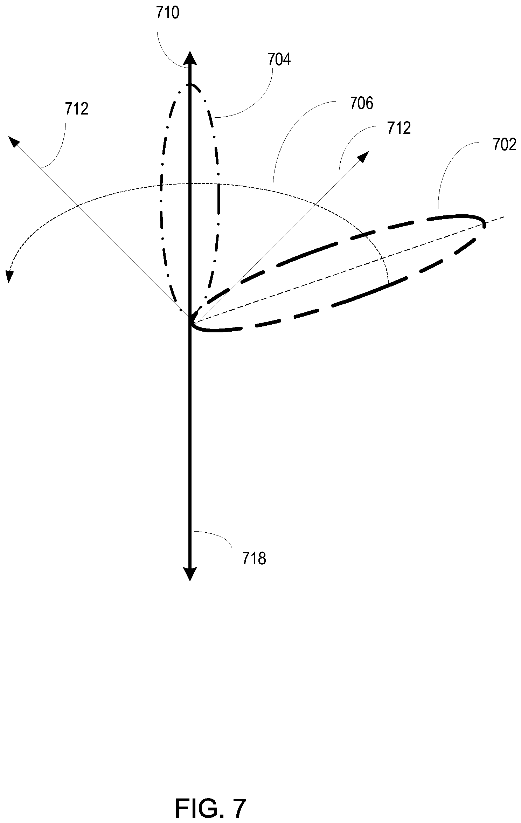

FIG. 7 is an example representation of a generator rotor vector 702 and one or more motor rotors vector 704, or an average of the motor rotor vectors. It should be understood that FIG. 7 is not an accurate representation of multi-phase current and voltage vectors or flux linkage between the generator 604 and the motors 606, but rather is a simplified diagram provided for the reader to facilitate a basic understanding of simplified electrical phase alignment of the generator rotor vector 702 and the motor rotors vector 704. In FIG. 7, the motor rotors vector 704 are illustrated as remaining stationary, whereas the generator rotor vector 702 is illustrated by arrow 706 as rotating in a counterclockwise direction. Also, although illustrated in FIG. 7 as "phasing" positioning of a generator rotor vector 702 and a motor rotors vector 704, it is to be understood that it is electrical phase alignment of the poles of the generator rotor and the motor rotors that provide flux linkage, corresponding voltage, and represent synchronism.

As previously discussed, the excitation system 605 may selectively pulse the excitation signal so that a pulse 710 is present during a time when the moving generator rotor vector 702 and the stationary motor rotors vector 704 are substantially aligned. Ideally, the pulse 710 may occur when the generator rotor vector 702 is aligned with the motor rotors vector 704 as illustrated by the position of the pulse 710 with respect to the position of the motor rotors vector 704. In FIG. 7, however, upon substantially alignment of the rotor vectors 702 and 704 enough torque producing current may be provided at the motors 606 to cause the motors 606 to change position, or rock back-and-forth into synchronism during the first stage. During the second stage, flux linkage and synchronism may be established between the generator 604 and the motors 606 due to occurrence of the pulse 710 as the generator rotor vector 702 sweeps past the motor rotors vector 704.

As used herein, the term "substantially aligned" refers to the pulse of the excitation signal occurring within +/- 90 degrees of the phase of the rotor poles as illustrated by the window edges 712 in FIG. 7. In order to generate the excitation signal when alignment can occur, the exciter voltage may be applied before the phase of the rotor vectors 702 and 704 substantially align. Thus, the exciter voltage may be applied by the excitation controller 612 before the generator rotor vector 702 enters the window of substantial alignment with the motor rotors vector 704, such as when the generator rotor vector 702 is in the position illustrated in FIG. 7, to account for system lag. Since the generator rotor is moving at a relatively low rotational speed, such as 30 RPM, and correspondingly low electrical frequency, by the time the generator rotor vector 702 becomes substantially aligned with the motor rotors vector 704, the generator 604 may be outputting additional torque producing current in response to the pulse 710 of the variable excitation signal.

The pulse 710 of the excitation signal generated by the excitation system 605 may be a positive pulse of increased magnitude due to the phasing of the poles of the generator and motor rotors being substantially aligned. In some examples, a second pulse may be applied by the excitation system 605 as a negative pulse 718 to decrease the level of flux linkage between the generator rotor and the motor rotors. The negative pulse 718 may be applied to the generator 604 when the generator rotor vector 702 is substantially 180 degrees in phase (where substantially = +/- 90 degrees) away from the position of the motor rotors vector 704, as illustrated in FIG. 7. The negative pulse 718 may be, for example, a negative 120% step change in magnitude in order to urge the motor rotors to move toward synchronous alignment with the generator rotor.

The excitation system 605 may selectively provide the pulses of the variable excitation signal based on the relative positions of the generator rotor and motor rotors. The relative positions may be determined in any number of ways, such as, for example: 1) by actual measurements; 2) by model based estimation; 3) by monitoring of apparent power; and/or 4) by pulsed excitation at an accelerating angular difference.

The relative position of the generator rotor with respect to the motor rotors may be based on a measured position of the generator rotor and an average of the measured positions of the motor rotors. Alternatively, only one of the measured positions of the generator and motor rotors may be used to determine when to provide the pulse of the excitation signal. In another example, model based estimation may be used by the excitation system 605 to determine the timing of when to output a pulse of the variable excitation signal. In the model based estimation, a flux estimation model may be used to identify, for example, a generator rotor position using feedback of the generator output voltage.

In another model based approach, an angular difference between the generator rotor and the motor rotor may be found by the excitation system 605. The angular difference may be based on estimated relative positions of the motor rotors and the generator rotors. In an example, model based approach, the angle of the generator 604 may be estimated based on the measured voltages and currents and corresponding phase angle at the output 614 of the generator 604. In addition, based on the voltage and current magnitudes at the output 614, an estimated average motor rotor position may be established. Such modeling may be based on simulation of operation of the system at various generator startup speeds, or other system parameters, or actual testing of the system and measurement of such system parameters, to obtain corresponding generator rotor and motor rotor position estimates. Once the estimated positions of the generator rotor and the motor rotors have been established to correspond to system operational parameters, these estimated positions may be used in connection with parameters of the system observed during startup. Using the estimated positions, the excitation system 605 may selectively output pulses during the first and second stages based on the parameters and the estimated positions to achieve synchronized operation of the generator 604 and the motors 606.

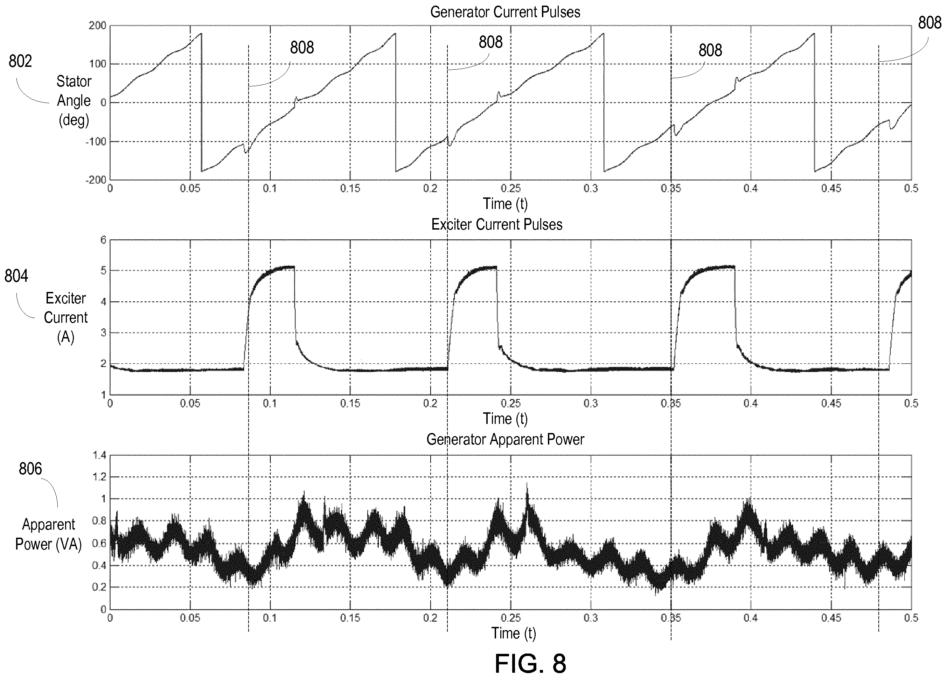

FIG. 8 is an example implementation of estimation of rotor position based on apparent power at the output 614 of the generator 604. This may provide another mechanism for the timing for output of the pulses of the excitation signal during the first and second stages. In some example system 600, it may be impractical to directly sense or estimate the angles of all the motor rotors. Thus, the difference in angle between the generator rotor and load rotors may be inferred using measurements of current and voltage at the output 614 of the generator 604 (at the stator).

For example, while the generator 604 is rotating at low speed, and the loads are not synchronized (i.e. the motor rotors are twitching with dynamic friction with each pole passage), the apparent power seen at the generator stator may have a cyclic behavior which is periodic with these pole passages as illustrated in FIG. 8. As the average rotor position comes into alignment with the generator rotor position, the apparent power (voltage magnitude times current magnitude) at the generator output 614 may be minimized. Based on the minimized apparent power during each electrical cycle, occurrences of the apparent power minima (and hence where to apply the pulses) may be modeled.

Such modeling may, for example take the form of a real-time memory table to store and seek out where apparent power minima may occur. An example approach may use measured generator current vector angles as the x-axis of the table, and then record corresponding measurements of apparent power as the y-axis of the table. Limits and filtering may be necessary so that the table values change smoothly in time, depending on measurement and process noise of the system 600. Filtering, such as Kalman filtering, may also be applicable here due to the signal to noise ratios at relatively low currents and voltages associated with system startup. The minimum y-axis value of this table (apparent power) may be used to reference the corresponding x-axis location (current vector angle) at which the minima of the apparent power occurred. This referenced current vector angle may then be identified by the excitation system 605 as a point in time at which the field pulses should 'turn on.'

In FIG. 8, a stator angle of the generator 802 is time aligned with an exciter current of the excitation signal 804 and an apparent power indication 806. The stator angle of the generator 802 is representative of the current (Amps) pulse of the generator 604 resulting from the pulse in the excitation signal. The exciter current 804 (such as field current *I_{FIELD})* represents the pulse of the variable excitation signal. The apparent power 806 is the absolute value of the measure voltage and current at the output 614 of the generator 604, which may be calculated by the excitation system 605.

This approach may be based on determination and modeling of minimum of apparent power. Apparent power may be observed relative to the measured current vector angle and/or the voltage vector angle to find minimums in apparent power during a predetermined period, such as during a positive half cycle (such as from 0 to 180 degrees) of the AC power output by the generator 604. The time during the positive half cycle of the minimum apparent power may be an indication of the synchronous alignment of the generator rotor and the motor rotors due to the minimum apparent power having a cycle that substantially aligns with the slip frequency. The slip frequency may be indicative of the increase and decrease in flux linkage as the electrical poles in the generator and the motors cyclically align and misalign prior to being electrically synchronized.

Based on modeling of the delay between the output of the pulse, and the corresponding increased output current of the generator 604, the excitation system may selectively apply pulses ahead of a projected minimum apparent power as illustrated by dotted lines 808 in FIG. 8. Alternatively, a high gain control may be used so that the generator reacts quickly to the output of pulses by the excitation system 605. Thus, during operation in at least one of the first stage and the second stage minimum apparent power may be used by the excitation system to selectively output pulses of the variable excitation signal.

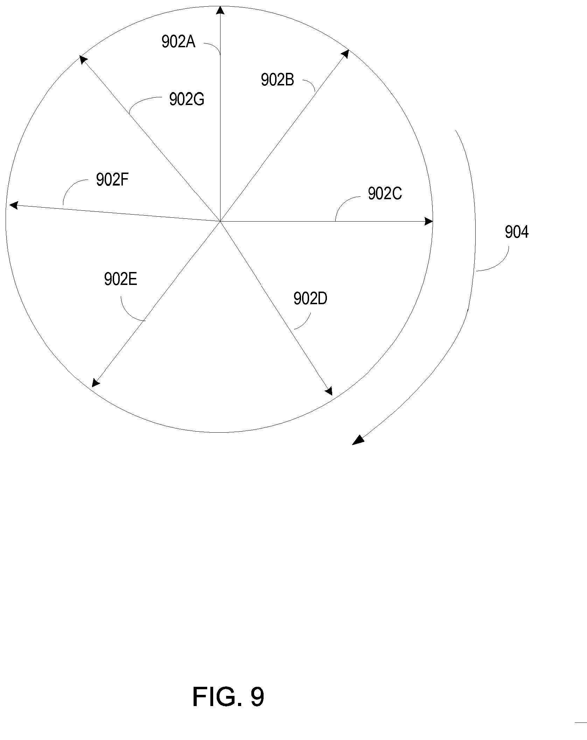

FIG. 9 is an example implementation of pulsed excitation at an accelerating angular difference. In FIG. 9, a plurality of pulses 902 are shown at different angular locations in a polar plot. Instead of identifying an electrical position of the generator rotor and/or the motor rotors, a predetermined number of pulses may be applied at each of different angular locations so as to urge the motors 606 to become electrically aligned with the generator 604. For example, a predetermined number of pulses, such as one pulse in each cycle, of a predetermined increased magnitude, such as increased by at least 20%, may be applied as pulses 902A. Subsequently, a predetermined number of pulses may be applied as pulses 902B, followed by pulses applied at 902C, and so on through 902G, as indicated by arrow 904. The process of applying the pulses at different angular locations may be repeated at an accelerating rate in order to transition the motors electrically align the motors and/or transition the motors from static friction to dynamic friction. It is to be understood that any number of angular locations are possible, and that the pulses at different angular locations do not need to be sequential as illustrated in FIG. 9.

Based on the application of pulses at different angular locations, the rotors of the motors 606 may be attracted to the different locations. In addition, the movement of the pulses to different angular locations may encourage the motors 606 to begin to rotate, or at least rock back-and-forth so as to reduce stiction by transitioning the motors to dynamic friction. The application of pulses with accelerating angular difference may be used during the first stage or the second stage to initiate synchronization of the generator 604 and the motors 606.

The first stage or the second stage may be used independently and singly by the excitation system 605 to synchronize the generator 604 and the motors 606. Alternatively, the first stage and the second stage may be used cooperatively by the excitation system 605 to startup the system and synchronize the generator 604 and the motors 606 while the generator 604 is at substantially zero speed, or at a relatively small percentage of the rated speed of the generator 604. When using both the first stage and the second stage, the excitation system 605 may output pulses of the excitation system during the first stage to align the motor rotors. In addition, output of pulses during the first stage may be used to transition the motors from static friction to dynamic friction. Upon motor rotor alignment, and transition to dynamic friction, the excitation system may initiate rotational movement of the generator and output pulses of the excitation signal in the second stage. Pulses may be selectively output during the second stage to take advantage of the dynamic friction initiated during the first stage. In other words, timing of pulses during the second stage may be timed to occur when the rotors are rocking back-and-forth in an appropriate direction that coincides with rotation of the motors 606 in synchronism with the generator 604.

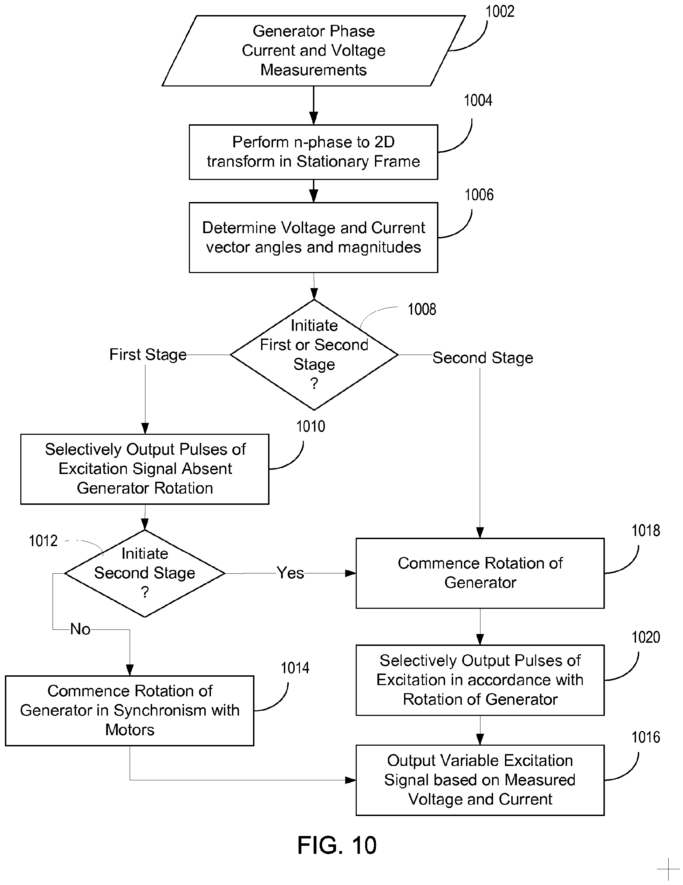

FIG. 10 is an operational flow diagram example of pulsed excitation system startup that is applicable to any of the system described, however, for ease of understanding, reference will be made to FIG. 6 unless otherwise noted. During operation, voltage and current may be sensed at the generator terminals 604 by a power sensor 616. (1002) In this example, the generator 604 may include multiple phase sets and the voltage and current signals from the sensor 616 may then be transformed such as by Clark's transform (α, β) for a fixed frame of the stator to obtain two-dimensional Cartesian coordinates. (1004). For example, in a Clark's transformation, current differences between phase sets may be transformed into their own two dimensional (2D) stationary frame. Using the two-dimensional Cartesian coordinates, the magnitude and vector angles for the voltage and current may be determined, using, for example, arctan functions with appropriate filtering, or with a phase-locked loop to track angles. (1006). The excitation system 605, and more specifically the excitation controller 612 may use the voltage and current vector angles, to determine the timing of outputting pulses of the excitation signal to the generator 604. The viability of different approaches to obtain the magnitude and vector angles for the voltage and current may be dependent on other factors, such as voltage/current sensor quality, or processing power.

If, for example, a position sensor providing the shaft position of the generator 604 was provided to the controller 612, such that the position of the rotor was known by the controller 612, a Park's transform could be used in which the quadrature axis (q) provides the torque producing component and the direct axis (d) provides the reactive component. In FIG. 10, the use of sensed voltage and current is described, however, it should be understood that other sensed parameters, such as the shaft position may also be used by the excitation system 605 to selectively output the pulses of the excitation signal in order to synchronously align the generator 604 and the motors 606 during startup. Using, for example, the vector angles, and magnitudes of the voltage and current, a phase position of the generator rotor and the motor rotor may be determined by the excitation system so as to determine when to selectively output pulses of the excitation signal.

The excitation system 605 may determine phase positions, or phase segments within which to selectively output pulses of the excitation signal, such as the field excitation. This determination may be performed by the excitation signal 605 by determining to use at least one of the first stage or the second stage in accordance with the particular configuration and operational characteristics of the system 600. (1008) If first stage operation is warranted, the excitation system 605 may selectively output field pulses prior to the generator commencing rotation. (1010) Pulses may be selectively output at a predetermined time, duration, and or frequency as determined by the excitation system 605.

Following output of pulses during the first stage, the excitation system 605 may determine if second stage operation is warranted based on, for example, system configuration or characteristics and/or the status of the motor rotors following implementation of the first stage. (1012) If transition to the second stage is determined by the excitation system 605 to not be warranted due to the motors 606 being substantially synchronized with the generator 604, the excitation system 695 may commence rotation of the generator 604. (1014) Since the motors were substantially synchronized during the first stage, the excitation system 605 may output the variable excitation signal based on a voltage and current being supplied by the generator to the rotational synchronous motor loads during ramped increases in speed of the generator 604 to reach a predetermined rated rotational speed. (1016)

If, the excitation system 605 determines that operation in the second stage is warranted instead of first stage operation (1008), the controller 612 may commence rotation of the generator 604 (1018), and initiate output of pulses of the excitation signal in the second stage operation. (1020). Alternatively, if the excitation system 305 determines following first stage operation that second stage operation is warranted (1012), the excitation system may commence rotation of the generator 604 (1018), and initiate output of pulses during the second stage operation. (1020) Following successful synchronization during the second stage of operation, the excitation system 605 may output the variable excitation signal based on a voltage and current being supplied by the generator to the rotational synchronous motor loads during ramped increases in speed of the generator 604 to reach a predetermined rated rotational speed. (1016)

In the first stage and/or the second stage, output of the pulses may not be a step change of the excitation signal from 0% and 100% flux, but could instead be 50% and 125%, for example. Using the first stage or the second stage, or cooperatively using the first stage and the second stage, the excitation system 605 may selectively output positive pulses when the generator rotor and the load rotors are substantially aligned, and avoid output of pulses, or output only negative pulses, when the generator rotor and the motor rotors become misaligned, such as more than 90 degrees in difference in the pole locations. Measurement of generator and load rotor positions may not be available, so positional estimations of the generator rotor and/or the motor rotors may be performed by the excitation system 605. In some examples, such estimations by the excitation system may require more computational power, and may have decreased accuracy at relatively low rotational speed of the generator 604. In an example, the excitation system 605, may reference these pulses with respect to the current vector angle at the output 614 of the generator 604. In this example, the excitation system 605 and more specifically, the excitation controller 612 may effectively infer the average relative angle between generator rotor and the motor rotors without necessarily measuring or estimating the positions of the rotors individually. Accordingly, as described with reference to FIG. 8, the pulses could be timed to be output, or be turned on, at the phase of the current vector where apparent power at the output 116 of the generator is minimal, and not output, or turned off, before apparent power is at its maxima. Alternatively, the excitation system 305 may use another approach by selective outputting pulses at turn-on angles in an open-loop manner, and sweeping through increasing angle increments at each cycle until synchronization is detected, as discussed with reference to FIG. 9.

After synchronization of the generator with the motors, such that rotational speeds are substantially equal, changes in system operating conditions may result in mechanical modes occurring at one or more resonant frequencies of rotating inertia of the load that coincides with a phase delay of the inductance of the generator. A mode may be self-sustaining and reinforce decoupling action between the generator and the motors. Modes may occur at any frequency where the system is underdamped. Under underdamped system conditions, torque oscillations (or torque ripple) may develop between the generator and the motors, and be reinforced at the motors 106 such that the power angle between voltage and the current being supplied at the output of the generator 104 begins to oscillate creating a resonant mode. The torque oscillations and corresponding changes in the power angle may occur at a subharmonic frequency to the frequency of the voltage and current. As the rotational speed of the generator and synchronized motors changes, such as during a ramped speed system startup, different power angle oscillations (and corresponding torque oscillations) may occur at different sub-harmonic frequencies.

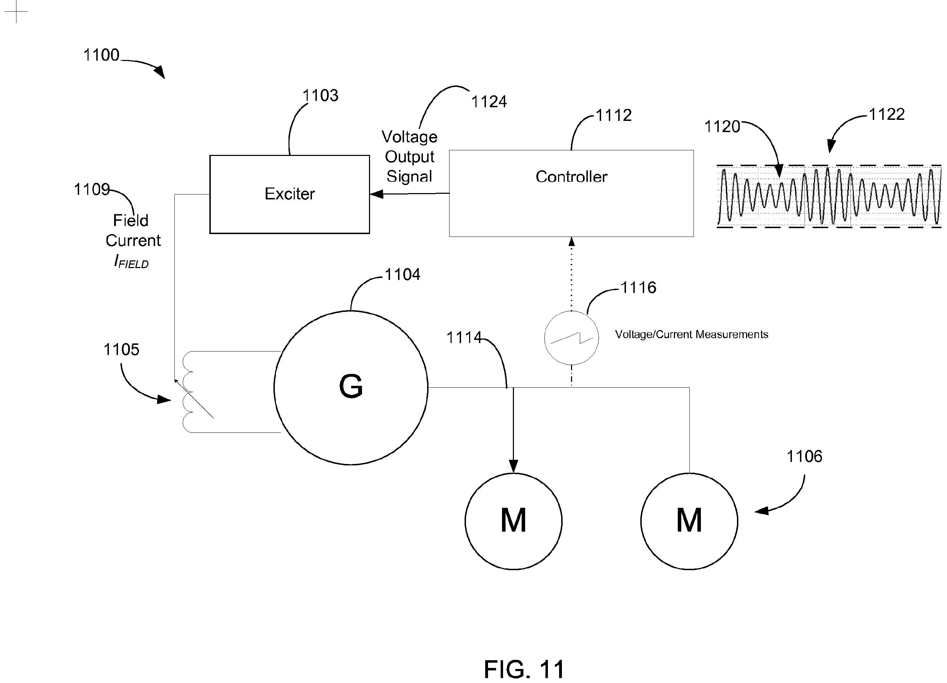

FIG. 11 is a block diagram of an example system 1100 that includes a generator 1104 having a rotor 1105 and providing a voltage and current (polyphase electrical power) at an output 1114 of the generator 1104 in accordance with a field current *I_{FIELD}* 1109 supplied by an exciter 1103 as controlled by a controller 1112 to supply motors 1106, such as synchronous motors that are driving loads to form synchronous loads. For the sake of brevity and ease of description, system 1100 is described within the context of system 100 of FIG. 1, system 200 of FIG. 2, system 300 of FIG. 3, and system 600 of FIG. 6. For example, exciter 1103 and generator 1104 of system 1100 represent examples similar to, respectively, exciter 103 and generator 104 of system 100 or exciter 203 and generator 204 of system 200 or exciter 303 and generator 304 of system 300 or exciter 603 and generator 604 of system 600. Exciter 1103 and generator 1104 are controllable by controller 1112 of system 1100, which represents an example similar to the controllers 112 and 212 and 312 and 612 of systems 100 and 200 and 300 and 600.

The controller 1112 may monitor the voltage and/or current of two or more phases at the output 1114 of the generator 1104 using a sensor 1116. The output 1114 may also be considered the system bus, or system voltage and current. The sensor 1116 may be a current transformer (CT), a potential transformer (PT) or any other form of voltage and/or current measurement device capable of outputting measurement signal(s) to the controller 1112. Based on the sensed voltage and/or current, the controller 1112 may identify torque oscillations between the generator 1104 and the motors 1106 within a mode at a sub harmonic frequency. In other examples, torque oscillations within a mode may be identified by the controller 1112 from other sensed inputs provided by other forms of sensors, such as a position sensor for the shaft 110 of the generator 1104. The subharmonic frequency of a mode may be below the rotational speed of the shaft 110 and corresponding AC frequency of the sensed voltage and current. For example, the subharmonic frequency can be low, such as 1 to 4 Hz, when the frequency of rotation of the shaft (the voltage and current frequency) is much higher, such as 300 or 400 Hz.

An example in FIG. 11 includes the voltage or current signal 1120 illustrated at a relatively high frequency and the sub harmonic frequency being within a subharmonic envelope 1122 at a relatively low frequency. Any number of resonant modes may occur at different resonant sub harmonic frequencies during the ramped speed startup of the generator 104 and motors 106. Occurrence of such sub harmonic frequencies may be dependent on, for example, machine parameters such as moments of inertia, internal impedance, and distribution impedance. In addition, sub harmonic frequencies may be any frequency less than the frequency of the voltage and current.

During one of these resonant modes, current demand by the motors 1106 may correspondingly oscillate due to the effect of the oscillation of the power angle and the corresponding complex power requirements of the motor 1106 (e.g. oscillatory changes in reactive power (VAR) requirements at the motor). Due to the oscillations in the corresponding power angle and complex power at the resonant frequency, if the generator 1104 and the motors 1106 are loosely magnetically coupled, the magnitude of the oscillations may increase until one or more of the motors 1106 lose synchronization with the generator 1104 such that the generator 1104 and one or more of the motors 1106 are no longer magnetically coupled. The loss of synchronization may also be referred to as "slipping a pole" since the poles of the generator rotor and the poles of the motor rotor are no longer electrically magnetically coupled between corresponding poles. As an example analogy for understanding by the reader, the synchronous operation of the generator 1104 and motors 1106 can be viewed as an "electronic mass spring damper" that is either underdamped, overdamped, or critically damped at a given frequency. As such, variations in synchronization between the generator 1104 and motors 1106 during an underdamped condition can be thought of as being analogous to changes in the loading of a mechanical spring. Such variations in the synchronization (spring loading) may be reduced or damped by damping the oscillations of the power angle (and corresponding oscillations in torque loading) so as to avoid loss of synchronization conditions when the system is otherwise underdamped.

Damping of the power angle oscillations may be performed using the controller 1112 and the exciter 1103 by selective changes of the field current *I_{FIELD}* at the exciter 1103 to counteract the power angle oscillations and resulting torque oscillations. The controller 1112 may dynamically modulate a level of a voltage output signal 1124 supplied to the exciter 1103 (directly or indirectly) to correspondingly increase and decrease the stiffness of the coupling between generator 1104 and the motors 1106. The timing by the controller 1112 for increasing and decreasing the stiffness of the coupling may be at substantially the same frequency as the resonant frequency of a mode such that the torque oscillations and corresponding oscillations in the power angle during the mode are damped, or reduced. Modulation of the voltage output signal may be timed by the controller 1112 with respect to the phasing of the current output by the generator 1104 such that increases in the level of the voltage output signal are 180 degrees out of phase with the phasing of the current/voltage inducing the undesirable power angle oscillations (torsional oscillations) in order to provide a canceling or counteracting effect and thereby actively damp out the oscillations. Thus, modulation of the voltage output signal may have the effect of changing the system from be critically damped or underdamped to being over damped.

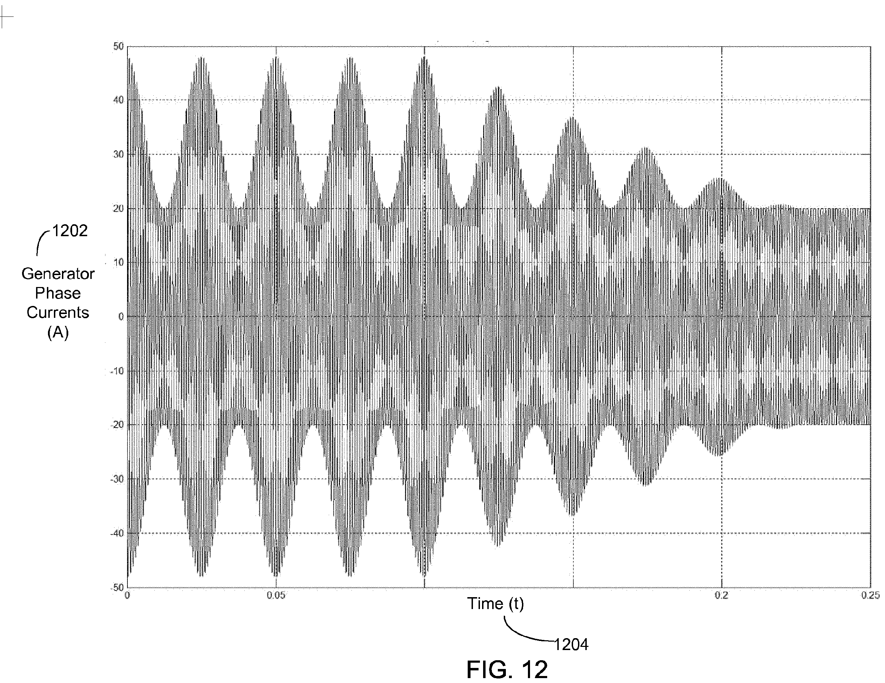

Damping of the power factor, power angle, or reactive power oscillations may effectively damp out sub-harmonic oscillations in the terminal currents of the generator 104. FIG. 12 illustrates an example graph of the effect of damping sub-harmonic currents. In FIG. 12, generator phase currents on the y-axis 1202 are damped over a period of time illustrated along the x-axis 1204. In the illustrated example, at time t=0 until time t=0.1, there are relatively large sub-harmonic oscillations in power factor (power angle). In this example, the power factor is initially oscillating between approximately 100% and 42% (i.e. power angle between 0 degrees and 65 degrees lagging). When active damping is enabled at about time t=0.1 to t=0.25, the power angle oscillations are reduced and the power angle is stabilize at a desired 0 degrees (for this example). This example is for purposes of explanation only, and may not represent the power angle oscillation levels, frequencies, power factors, etc. of a particular system, and therefore does not limit the scope of the present disclosure.

Determination by the controller 1112 of the level of the field excitation to be applied to the exciter 1103 may be based on a determination of a desired reactive power, power angle or power factor. The desired reactive power, power angle or power factor may be determined based on system operating conditions and/or objectives. For example, it may be desirable for the system to substantially maintain zero reactive power (unity power factor), or some non-zero amount of reactive power at full rated speed. The desired reactive power, power angle or power factor may be a fixed value independent of system operating conditions, such as rotational speed of the generator 1104. Alternative, the controller 1112 may dynamically determine the desired reactive power, power angle or power factor based on system operating conditions, such as rotation speed of the generator 1104.

In some examples of system operation, the controller 1112 may use a lookup table to dynamically determine a desired reactive power, power angle or power factor. In other examples, modeling, adaptive control, fuzzy logic or any other control scheme may be used to dynamically determine a desired reactive power, power angle or power factor for the system.

Table 2 is an example of a table for dynamic determination by the controller 1112 of a desired power angle using the voltage and current measured, for example, by the sensor 1116 at the output of the generator 1104. In other examples, Table 2 could be used to determine a desired power factor or reactive power or other desired parameter. In Table 2, a magnitude of the voltage and current output by the generator 1104 are inputs to the controller 1112, which are multiplied to determine a total apparent power (kVA) along a vertical axis in Table 2. In addition, a horizontal axis in Table 2 provides the voltage magnitude of the output voltage of the generator 1104 at the output 1114. In example systems where system voltage is dominated by low-impedance synchronous loads, such as permanent magnet synchronous motors, the voltage may be proportional to speed of rotation of the shaft of the generator 1104. In other examples, the rotational speed of the generator 1104, or some other parameter indicative of speed may be used.

In this example, as indicated in Table 2, the desired power angle becomes progressively closer to zero (power factor becomes closer to unity) as power increases, since efficiency is improved at higher generator power output resulting in tighter magnetic coupling between the generator 1104 and the motors 1106. At lower power levels, a progressively more lagging power factor is provided in this example to leave greater margin in the stiffness of the magnetic coupling between the generator 1104 and the motor 1106 to allow for potential load imbalances. In this example, the desired power factor also becomes closer to one as speed increases. This is because in this example system, the magnetic coupling between generator rotor and load rotors is determined to be stiffer at higher speed, so that greater torque margin is provided.

**Table 2**

| Reference Lagging Power Angle (deg) | | \|V\| (Volts) | | | | | | |
|---|---|---|---|---|---|---|---|---|
| | | 10 | 50 | 100 | 200 | 350 | 600 | 1000 |
| \|V\|^{∗}\|I\| (kVA) | 1 | 48 | 45 | 42 | 39 | 36 | 33 | 30 |
| | 5 | 44 | 40.8 | 37.7 | 34.5 | 31.3 | 28.2 | 25 |
| | 10 | 40 | 36.7 | 33.3 | 30 | 26.7 | 23.3 | 20 |
| | 20 | 36 | 32.5 | 29 | 25.5 | 22 | 18.5 | 15 |
| | 35 | 32 | 28.3 | 24.7 | 21 | 17.3 | 13.7 | 10 |
| | 60 | 28 | 24.2 | 20.3 | 16.5 | 12.7 | 8.8 | 5 |
| | 100 | 24 | 20 | 16 | 12 | 8 | 4 | 1 |
| | 200 | 6 | 5 | 4 | 3 | 2 | 1 | 0 |

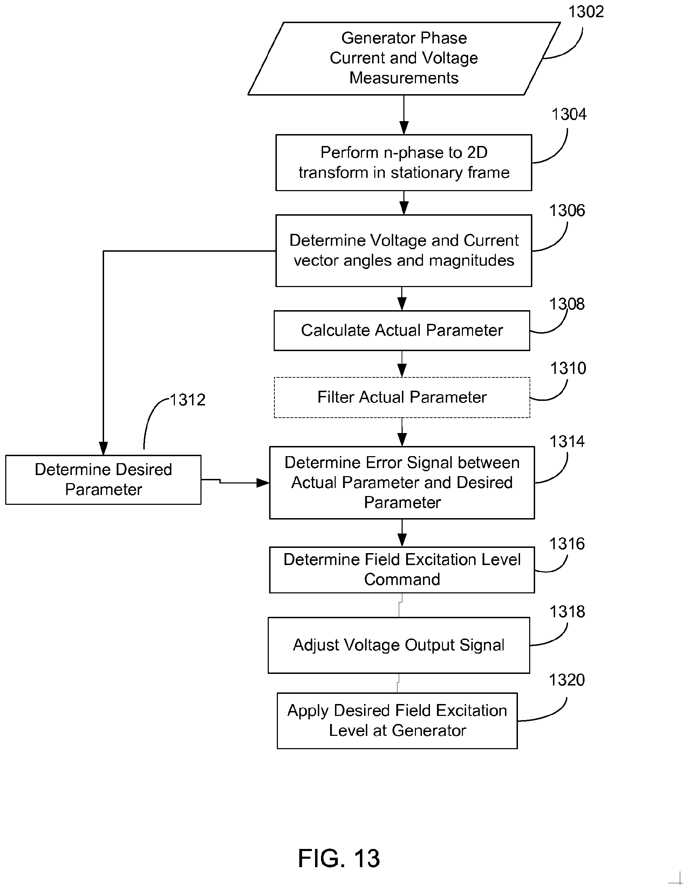

FIG. 13 is an operational flow diagram example of actively damping power angle oscillations (torque oscillations) that is applicable to any of the system described, however, for ease of understanding, reference will be made to FIG. 11 unless otherwise noted. During operation, voltage and current may be sensed by at the generator terminals 1104 by a sensor 1116. (1302) The voltage and current signals from the sensor 1116 may then be transformed such as by Clark's transform (α, β) for a fixed frame of the stator to obtain two-dimensional Cartesian coordinates. (1304). For example, in a Clark's transformation, current differences between phase sets may be transformed into their own two dimensional (2D) stationary frame. Using the two-dimensional Cartesian coordinates, the magnitude and vector angles for the voltage and current may be determined, using, for example, arctan functions with appropriate filtering, or with a phase-locked loop to track angles. (1306). The controller 1112 may use oscillations between the voltage and current vector angles, to identify corresponding torque oscillations. The viability of different approaches to obtain the magnitude and vector angles for the voltage and current may be dependent on other factors, such as voltage/current sensor quality, or processing power.

If, for example, a position sensor providing the shaft position of the generator 1104 was provided to the controller 1112, such that the position of the rotor was known by the controller 1112, a Park's transform could be used in which the quadrature axis (q) provides the torque producing component and the direct axis (d) provides the reactive component. Oscillations in the reactive component could then be used by the controller 1112 to identify corresponding torque oscillations. In FIG. 13, the use of sensed voltage and current is described, however, it should be understood that other sensed parameters, such as the shaft position may also be used by the controller 1112 to detect and damp power angle oscillations and corresponding torque oscillations.

Using, for example, the vector angles, and magnitudes of the voltage and current, an actual parameter, such as the actual power angle, reactive power and/or power factor at the present shaft speed may be determined. (1308). Filtering of the actual parameter, such as the reactive power, power angle, or power factor term may optionally be applied by the controller 1112. (1310). In example configurations, the controller 1112 may provide one or more filters. Alternatively, or in addition, one or more separate and independent filter devices may be controlled by the controller 1112.

Filtering may be applied to the actual parameter depending, for example, on the bandwidth of controller 1112 in controlling the exciter 1103 and/or the desired feedback characteristics. For example, frequency filtering may be applied so the controller 1112 is focused on oscillations in sub harmonic frequencies where modes are likely to occur, such as in a predetermined range of frequencies. Thus, the frequency filtering may be a notch filter, low pass filter, high pass filter, or a filter may be omitted if the entire frequency spectrum is used, or the controller 1112 is capable of focusing on the desired subharmonic frequencies.

If implemented, the goal of any such filtering is to ensure any un-desirable oscillation frequencies of the actual parameter are passed through the filter so they can be cancelled with regulation using the exciter 1103. Frequencies, or ranges of frequencies, which should not be considered by the controller 1112 to determine the voltage output signal 1124 can be blocked by the filtering, which may improve stability of the control loop. In some examples, the controller 1112 may dynamically apply filtering in accordance with an operational parameter, such as the speed of the shaft, the magnitude of output current from the generator 1104, or the magnitude of the voltage at the generator output 1114. Alternatively, or in addition, the filter may include one or more fixed filters that are dynamically switched in and out by the controller 1112 based on operational parameters. Alternatively, or in addition, the filter may be one or more filters that are fixed and consistently applied to the actual parameter.

The determined voltage and current vector angles and magnitudes may be used as variables by the controller 1112 to determine a desired parameter, such as a reactive power, power angle or power factor value that results in an over damped condition in a given system at the present shaft speed. (1312) For example, the variables may be used to track zero reactive power (unity power factor), or some non-zero amount of reactive power based on system objectives and conditions. A "desired parameter" may be system specific and may vary from system to system depending on the particular system configuration and characteristics.

In example operation, the controller 1112 may determine a magnitude of KVA as a variable based on the absolute value of the measured voltage and current. The controller 1112 may use the determined KVA and measured voltage in conjunction with Table 2 to dynamically determine the desired parameter as a desired power angle, as the speed of the shaft dynamically changes. The dynamically determined desired power angle may be used as a first setpoint for the system. In other examples, models, adaptive control, fuzzy logic, or any other decision based process or mechanism could be used to determine the desired parameter used as the first setpoint for the system.

Using the desired value as the first setpoint, and the dynamically changing calculated actual parameter (filtered or unfiltered), the controller 1112 may determine an error signal using an actual parameter regulator included in the controller 1112. (1314) The error signal may represent power angle oscillations due to differences between the desired parameter and the actual parameter varying at one or more sub-frequencies. The error signal may be used by the controller 1112 to determine a field excitation level command. (1316) The field excitation level command may be used as a second setpoint to regulate the reactive power, power angle or power factor to damp power angle oscillations and corresponding torsional oscillation. In an example, the field excitation level command may be expressed as an RMS exciter current. The actual parameter regulator may include a dynamic feedback controller such as proportional integral derivative (PID) controller, a lead-lag controller, an adaptive controller or model-based controller. Alternatively, or in addition, the actual parameter regulator may regulate the actual parameter by operation as a neural network, fuzzy logic, or any other form of controller scheme. The actual parameter regulator may be tuned so that any un-desirable oscillations in power angle, reactive power, or power factor are damped out with application of field excitation in such a way that oscillation energy is removed.

The determined field excitation level command is used by the controller 1112 to dynamically adjust the voltage output signal 1124 to counteract undesirable power angle oscillations and corresponding torque oscillations. (1318). The dynamically adjusted voltage output signal 1124 results in the exciter 1103 applying a desired field excitation level at the generator. (1320). As described in detail elsewhere, voltage output signal 1124 is dynamically adjusted in accordance with the sub-frequency at which power angle oscillations have been identified by the controller 1112 to correspondingly adjust the exciter voltage and corresponding output current of the generator 1104. As such, the dynamic adjustment of the output current of the generator 1104 at the sub-frequency has the effect of damping oscillations of the power angle and corresponding torque oscillations at the sub-frequency.

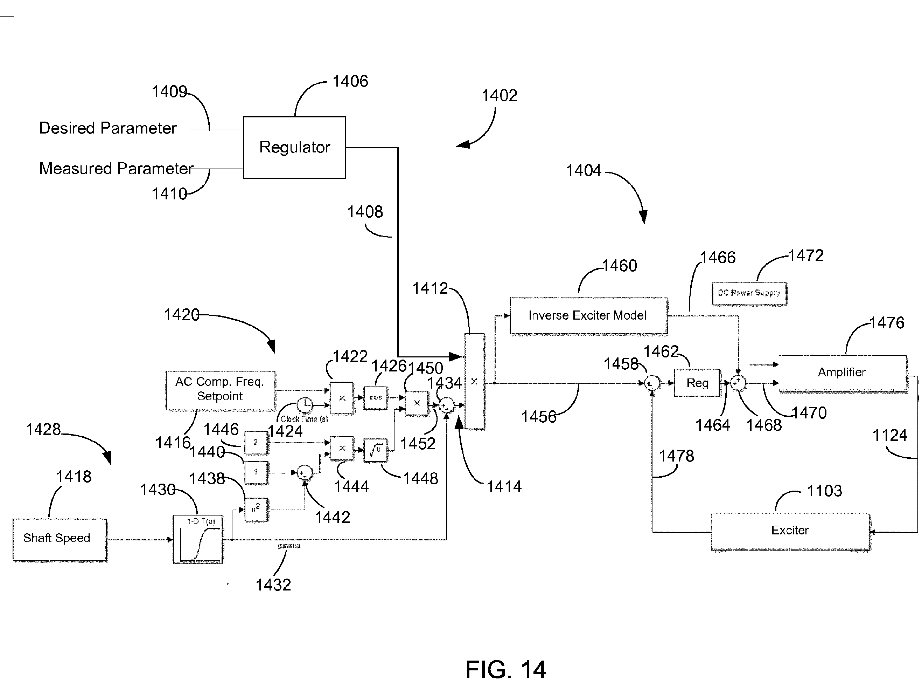

FIG. 14 is a block diagram illustrating operation of the controller 1112 in an example configuration for dynamically adjusting the voltage output signal 1124. In FIG. 14, the configuration of the controller 1112 is illustrated as having an outer control loop 1402 and an inner control loop 1404. In other examples, the controller 1112 may be configured as a single multi-input control loop, or additional control loops. In addition, implementation of the controller 1112 to dynamically adjust the voltage output signal 1124 may be accomplished in any number of ways to meet the described functionality, configuring the controller 1112 as a state-space based controller, a nonlinear controller, a model-predictive controller, fuzzy-logic or neural network controller, or any other form of controller that can accomplish the described functionality.

The configuration in FIG. 14 illustrates an example of regulation of the power angle and generator field excitation in which the bandwidth of the inner control loop 1404 may be made sufficiently faster than the outer control loop bandwidth 1402 in order to maintain suitable phase margin for stability and robustness purposes. The outer control loop 1402 includes a regulator 1406, such as a PID controller or lead-lag based controller. The regulator 1406 may provide the error signal 1408, which may be the difference between the desired parameter 1409, such as a desired power angle, and the measured parameter 1410, such as a measured power angle. The error signal 1408 output by the regulator 1406 may be the field excitation level, which may be expressed as an RMS exciter current command.

The regulator 1406 may operate in a determined bandwidth of frequencies. If the bandwidth of the regulator 1406 (combined with the bandwidth of any filtering done on the measurements) is sufficient to act on the oscillatory frequencies identified as a mode, the regulator may be tuned to damp power angle oscillations in a stable manner. Alternatively, or in addition, system models may be used instead of or in addition to PID or lead-lag control to increase performance using model-based control methods. Other example control architectures include model-reference adaptive control, L1 adaptive control, H-∞ adaptive control, fuzzy logic, and neural network.

The inner loop control 1404 may receive the error signal 1408 at a multiplier 1412. The multiplier 1412 may also receive an AC/DC component 1414 of the excitation signal. The AC/DC component 1414 of the excitation signal is developed based on an AC compensation frequency setpoint 1416, such as in rad/s, and a shaft speed 1418 of the generator 1104 to transition between an AC signal and a DC signal.

An AC component generator 1420 may generate an AC component of the excitation signal. The AC component generator 1420 receives the AC compensation frequency setpoint 1416, which may be multiplied at a multiplier 1422 by a clock signal provided by a system clock 1424 and converted from radians to a time varying unitary magnitude sinusoid by a converter 1426 to generate a per unit AC sinusoidal component contribution to the exciter voltage.

A DC component generator 1428 may generate a DC component of the excitation signal. The DC component receives the shaft speed 1418 which may be a measured shaft speed provided by a shaft speed sensor, or an estimated shaft speed determined by the controller 1112 based on other system parameter(s) such as the stator voltage frequency of the generator 1104. An actual shaft speed measurement may be provided by a sensor such as speed sensor on the generator 1104. An estimated shaft speed may be determined, for example, based on phase-locked loop tracking of the current or voltage angle waveforms at the output 1114 of the generator 1104, a "sensor-less" speed estimation algorithm using the voltage and current measurements at the output 1114 of the generator 1104, or a magnitude of generator terminal voltage, which may be approximately proportional to speed in some systems. In other example systems, the shaft speed may the exciter 1103 shaft speed instead of the generator shaft speed. The shaft speed 1418 may be used to determine a DC component contribution to the exciter voltage in connection with a DC component contributor 1430.

In this example, the DC component contribution to the exciter voltage may be determined from a table using the shaft speed, such as a table of DC component contribution v. shaft speed. As further discussed elsewhere, the DC component contribution may be dynamically changed in accordance with changes in the speed of the exciter to transition between a DC exciter voltage and an AC exciter voltage. The DC component may be represented with a gamma value 1432 in a predetermined range, such as between zero and one, where one indicates a fully DC exciter voltage signal, and zero represents a fully AC exciter voltage signal. In other examples, other measurement/calculation technique may be used to determine the DC component contribution in the exciter voltage.

In addition to being supplied to a summer 1434, the gamma value 1432 may also be provided to a u^2 1438 for use in generation of the AC component contribution. The output of the u^2 1438 may be subtracted from a first constant (1) 1440 at a difference 1442, and an output of the difference 1442 may be provided to a multiplier 1444 where it is multiplied by a second constant (2) 1446 and output to a square root 1448. The output of the square root 1448 may provide the peak in per unit of desired AC exciter current to be multiplied by the time varying per unit sinusoid at a multiplier 1450 to provide the resulting time varying sinusoidal per unit current command component 1452. The time varying sinusoidal per unit current command component 1452 may be summed at the summer 1434 with the gamma value 1432 to form the AC+DC per unit current command component 1414 of the excitation signal. The AC+DC per unit current command component 1414 is calculated such that the effective root of the mean of the square is equivalent, independent of the DC component magnitude. The output of the multiplier 1412 may be an exciter instantaneous current command 1456, provided in units such as amps, which may be provided to a summer 1458 and an inverse exciter model 1460 as a current command. In this example, a regulator 1462, such as a PID controller, is used in conjunction with the inverse exciter model 1460 to generate the voltage output signal. An output signal 1464 of the regulator 1462 may be summed with an output signal 1466, such as a required voltage signal, of the inverse exciter model 1460 at a summer 1468 to provide a terminal voltage command 1470.

The output signal 1466 of the inverse exciter model 1460 may serve as a feed-forward term in order to increase response rate of the controller 1112 in instances where the controller 1112 may not have the bandwidth to otherwise operate at a sub frequency where a mode is identified. In this capacity, the inverse exciter model 1460 may provide a voltage output that is summed with the output signal 1464 of the regulator 1462. The voltage command may be limited based on the voltage available from a supply of DC voltage, such as a DC power supply 1472. In addition, anti-windup protection may be used in the regulator 1462.

The voltage command 1470 and the supply of DC voltage may be provided to an amplifier 1476, such as an H-bridge. The amplifier 1476 may be controlled by the controller 1112 to amplify the voltage command 1470 using the DC voltage to produce the desired voltage output signal 1124, which is provided to the exciter 1103. In an example, an H-bridge may be controlled by the controller 1112 to perform PWM modulation to produce the desired output voltage 1124 at the terminals of the brushless exciter 1103. A measurement of the exciter current from the exciter 1103, which may also be a terminal voltage input, may be used as a feedback term to calculate an exciter current error signal 1478 provided to the regulator 1462. In another example, the current measurement may also be used to dynamically update parameters of the inverse exciter model 1460 such that the inverse exciter model 1460 would be capable of more quickly and accurately converging to voltage level required for a particular sub-frequency.

In some examples, based on voltages available and bandwidth requirements, it may also be advantageous to account for phase delay between the voltage output signal and the current response of the exciter 1103. Accounting for phase delay may be accomplished by estimation of what this phase lag may be using the inverse exciter model 1460. The estimate may be dynamically determined during changing operating conditions, or may be a predetermined time constant, such as an off-line calculated time constant, depending on system sensitivities. Since an AC portion of the exciter current command 1456 is periodic at a known fixed frequency, a lagging time constant corresponding to an integer multiple of this period minus the modelled exciter lag time constant (using the smallest integer multiple required to still get a positive lagging time constant) could then be applied to the error signal input into the regulator 1462. Effectively, this may allow the regulator 1462 to track a 'future' current exciter instantaneous current command by assuming there is little change in the exciter instantaneous current command value from cycle to cycle. In some example systems, the AC proportion of the excitation current frequency may typically be 200 Hz or greater, and the fundamental power angle oscillation frequencies (generator oscillation frequencies) to damp out may be in the 10's of Hz or lower, so there may be sufficient phase margin for the assumption of little change in the exciter instantaneous current.

The output signal 1466 of the inverse exciter model 1460 may be used to account for lag in a similar manner, so that the reference voltage outputs from both the regulator 1462 and the inverse exciter model 1460 are each tracking the periodic reference current at the same phasing in time. Effectively, this lag approach can greatly improve the gain accuracy of the current tracking loop at higher frequencies, however, such an approach may sacrifice phase accuracy. Since the phase accuracy of a relatively high frequency excitation current does not affect its overall RMS value or the generator primary field excitation level, but the gain accuracy does directly affect excitation level, this tradeoff may be desirable.

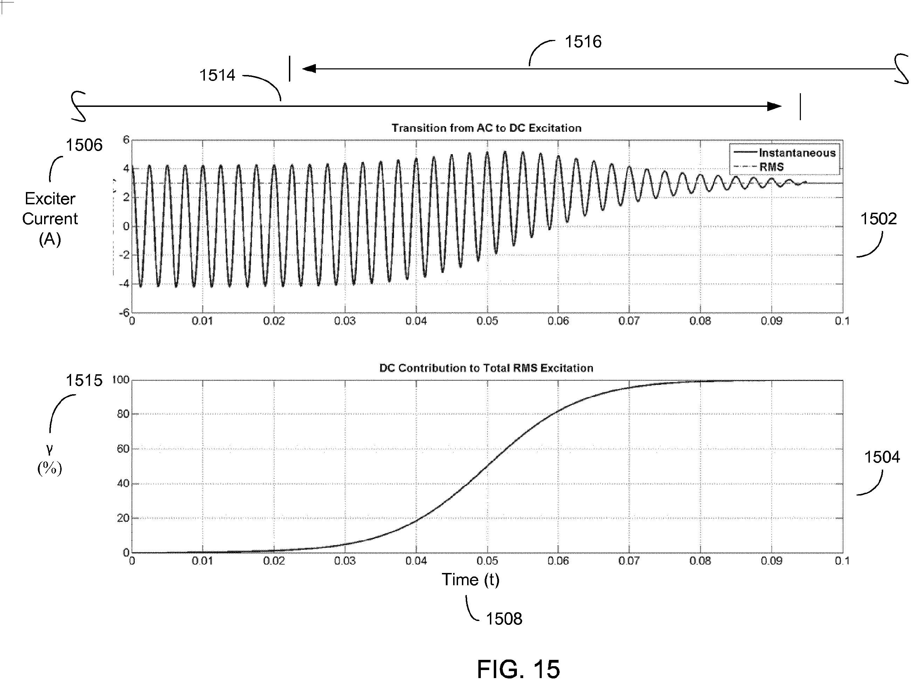

FIG. 15 are example diagrams illustrating a transition of the exciter voltage between AC excitation and DC excitation in accordance with shaft speed. In the example of FIG. 15, the exciter 1103 and the generator 1104 may rotate on a common shaft 166, as illustrated in FIG. 1. In other examples, the exciter 1103 may be rotated by a separate shaft driven by the same prime mover driving the generator 1104, or by a different source of mechanical rotational energy. Although described hereafter in a common shaft configuration, it should be understood that the exciter 1103 may be separately driven.

Transition of the exciter voltage between AC excitation and DC excitation may occur anywhere along the range of shaft speed from zero speed to full rated speed. In an example system, at a shaft speed from 0% to about 25% of rated speed, the controller 1112 may control the exciter voltage to include only an AC component. The transition of the exciter voltage between AC excitation and DC excitation may occur anywhere between about 25% and 35% of rated speed, and above about 35% of rated speed the controller 1112 may control the exciter voltage to include only a DC component. In other examples, the speed range where the exciter voltage includes only the AC component, the speed range where the exciter voltage includes both the AC component and the DC component (during the transition), and the speed range where the exciter voltage includes only the DC component may be different. In some examples, the rotational speed of the exciter may match the rotational speed of the generator, regardless of whether the exciter and the generator are on a common shaft.

In FIG. 15, a first diagram 1502 illustrates the transition from AC to DC excitation, and a second diagram 1504 illustrates the DC contribution to total RMS excitation. In the first diagram 1502, an exciter input current in amps (A) 1506 is illustrated as transitioning from an AC waveform to a DC waveform over a period of time (t) 1508. In the second diagram 1502, in alignment with the time (t) 1508, the % contribution of the DC component (γ) to the RMS excitation is illustrated to correspond with the transition from of the exciter voltage from an AC waveform to a DC waveform. As illustrated in the example of FIG. 15, the excitation controller 1112 may maintain a true RMS value of an exciter current during the transition period as the level of the AC component and the level of the DC component included in the waveform of the exciter voltage are varied based on the rotational speed of the exciter.

In order to provide excitation at low rotational speed of the generator 1104, an AC current waveform may be used as the exciter voltage at the exciter terminals to avoid decoupling of the exciter rotor and the exciter stator. At substantially zero or low speed of the generator shaft, there may not be enough change in flux per time across the air gap of the exciter 203 for the flux to couple between the exciter stator 234 and the exciter rotor 232. (FIG. 2) Once the shaft speed of the exciter 203 is above a determined system specific threshold (such as about 30% rated shaft speed), then a transition may occur to the use of DC current as an input to the exciter stator terminals without decoupling the exciter rotor and the exciter stator. Thus, the controller 1112 may initiate a decrease in the AC component and a corresponding increase in the DC component during a transition period in response to the rotational speed of the exciter 203 increasing above a determined threshold. In other words, the controller 112 may control the exciter voltage to produce flux in the air gap with the AC component within a first range of rotational speed 1514 starting from zero speed and ramping the speed through a part of the transition. In addition, the controller 112 may control the exciter voltage to produce flux in the air gap within a second range of rotational speed 1516 with the DC component starting within the transition and ramping up to full rated speed. As illustrated in FIG. 15, the first range of rotational speed 1514 and the second range of rotational speed 1516 may overlap during the transition, and the second range of rotational speed 1516 may include rotational speeds that are greater than any rotational speeds included in the first range of rotational speed 1514. In the example transition period shown in FIG. 15, the AC component is included in the exciter voltage from 0.0 to 0.095 seconds, and the DC component is included from 0.02 to 0.1 seconds. In other examples, the transition period may be faster, or slower than that illustrated in FIG. 15.

In examples of the present system only one excitation circuit may be used to supply both AC and DC components. As described herein, the single excitation circuit may include the excitation controller 112 and the source of the AC and DC components of the exciter voltage, which are provided based on the voltage output signal 1124. The single excitation circuit may smoothly transition the excitation waveform of the exciter 1103 between AC and DC. The transition between AC and DC excitation waveform may be accomplished in a manner which preserves the true RMS value of the exciter current, but varies the contribution of AC and DC components towards that total true RMS value. Thus, during the transition the controller 1112 may maintain a true RMS value of the exciter current substantially constant by offsetting variations in the AC component and the DC component. The excitation controller 1112 may control the waveform of the exciter voltage to include at least one of the AC component and the DC component throughout the time the field current is varied and the generator is outputting variable electric power.

In FIG. 15, an example transition in the time domain is illustrated. In this example, a constant excitation level of three Amps RMS is maintained, while dynamically transitioning between a fully AC waveform (at 400Hz) to fully a DC waveform of the exciter voltage, based on the voltage output signal 1124. This transition of the exciter voltage from AC to DC may occur while shaft speed is increasing through a determined speed range. In addition, the speed of the generator 1104 may be increasing through a determined speed range that corresponds to the increasing speed of the exciter 1103. Thus, the controller 1112 may control the level of the AC component of the exciter voltage so that the generator 1104 outputs electric power at the zero speed condition or at a time rotation of the exciter 1103 and the generator 1104 begins. In addition, during the transition, the controller 1112 may decrease the level of the AC component of the exciter voltage while increasing the DC component of the exciter voltage as a rotational speed of the exciter 1103 and the generator 1104 increases. Further, following the transition, the controller 1112 may control the level of the DC component of the exciter voltage so that the generator 1104 outputs electric power at a ramped speed up to full rated speed.

Dynamically transitioning while decreasing speed through the determined range of shaft speed may be reversed (from a fully DC waveform to a fully AC waveform). Thus, during the transition period, the controller 1112 may decrease the contribution of the AC component and increase the contribution of the DC component to maintain a linear transition of the exciter voltage as the rotational speed of the exciter 1103 increases. Alternatively, the controller 1112 may decrease the contribution of the DC component and increase the contribution of the AC component to maintain a linear transition of the exciter voltage as the rotational speed of the exciter decreases.

While transitioning from the AC component to the DC component, or from the DC component to the AC component, the controller 1112 may maintain a liner transition of the exciter voltage as the rotational speed of the exciter increases and decreases. During the transition period, when both the AC component and the DC component are present in the exciter voltage, the AC waveform may be modulated on the DC waveform as illustrated in FIG. 15. The exciter voltage may be controlled to include only the AC component at zero speed, or low rotational speed, of the exciter 1103, and may be transitioned to include only the DC component above a predetermined exciter speed threshold. During the time when the exciter voltage includes only the AC component, a combination of the AC component and the DC component, or only the DC component, the generator 1104 may continuously generate electric power at the output 1114 using the field current produced with the exciter voltage.

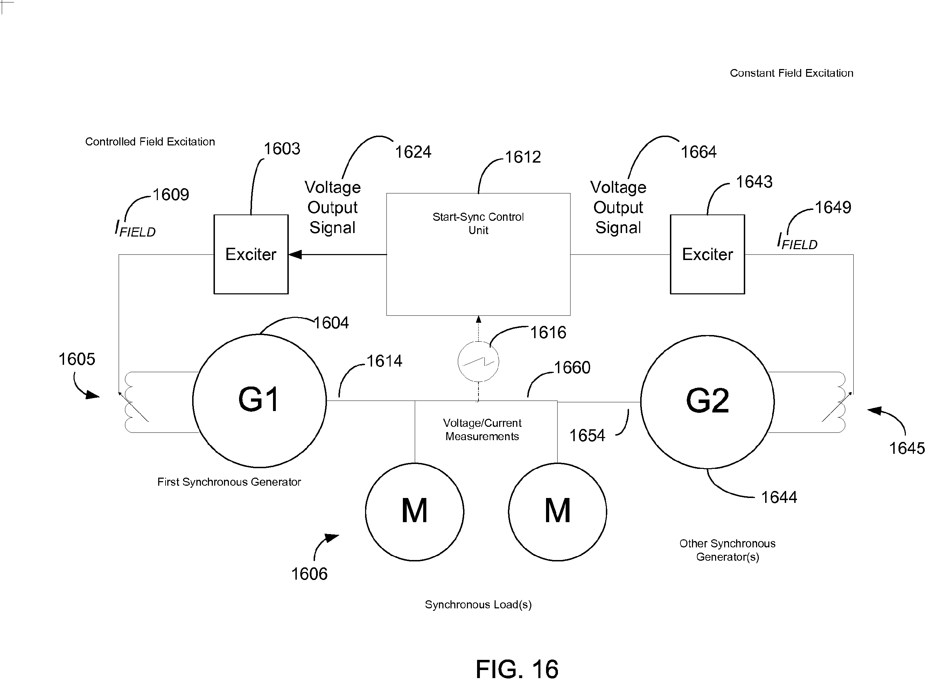

BOOK FIG. 16 is a block diagram of an example system 1600 that includes a first generator 1604 and a second generator 1644. The first generator 1604 may be a synchronous generator, having a rotor 1605 and providing a voltage and current (polyphase electrical power) at an output 1614 of the generator 1604 in accordance with a field current *I_{FIELD}* 1609 supplied by an exciter 1603 as controlled by a voltage output signal 1624 provided by a system controller 1612 to supply loads 1606, such as synchronous motors that are driving loads. The second generator 1644, such as a synchronous generator, may include a rotor 1645 and provide a voltage and current (polyphase electrical power) at an output 1654 of the second generator 1644 in accordance with a field current *I_{FIELD}* 1649 supplied by an exciter 1643 as controlled by a voltage output signal 1664 provided by the system controller 1612 to supply the loads 1606. For the sake of brevity and ease of description, system 1600 is described within the context of system 100 of FIG. 1, system 200 of FIG. 2, system 300 of FIG. 3, system 600 of FIG. 11, and system 1100 of FIG. 11. For example, exciter 1603, 1643 and generator 1604, 1644 of system 1600 represent examples similar to, respectively, exciter 103 and generator 104 of system 100 or exciter 203 and generator 204 of system 200 or exciter 303 and generator 304 of system 300 or exciter 603 and generator 604 of system 600 or exciter 1103 and generator 1104 of system 1100. Exciter 1603, 1643 and generator 1604, 1644 are controllable by system controller 1612 of system 1600, which includes example functionality similar to the controllers 112 and 212 and 312 and 612 and 1112 of systems 100 and 200 and 300 and 600 and 1100.

In the system 1600, the first generator 1604 may be described as a master generator, and the second generator 1644 may be described as a slave generator. Although only one slave generator is illustrated and described, the system 1600 may include any number of slave generators. In addition, the controller 1612 is illustrated as a single unit in FIG. 16, however, in other examples, each of the generators may have a separate and independent controller in communication with the other controllers in the system 1600. Further, in some examples, the master generator may have a separate controller, whereas one or more of the slave generators may share a controller.

The system 1600 includes multiple generators and may include multiple prime movers on a weak synchronous grid. Similar to the previously discussed systems, the loads are supplied electric power at a time when the first generator 1604 (master generator) is first driven by a first prime mover to rotate such that the rotors of those loads that are rotating loads align with the position of the rotor 1605 of the first generator 1604 and are magnetically coupled to rotate in synchronism with the first generator 1604. In addition, the second generator 1644 (slave generator(s)) is electrically coupled with the first generator 1604 and operates as a rotating load at the time when the first generator 1604 (master generator) is first driven by the first prime mover. Thus, the rotor 1645 of the second generator 1644 synchronously rotates with the rotor 1605 of the first generator 1604 and the first generator 1604 energizes the second generator 1644 as a motor.

To operate as a motor, the second generator 1644 may be excited with a constant field excitation so as to operate with a magnetic field similar to a permanent magnet motor. In examples, the rotor 1645 of the second generator 114 may include a damper winding to allow the second generator 1644 to start and operate similar to operation as an induction machine. The constant excitation may be set to a level that creates a flux (Volts/Hz) in the second generator 1644 that substantially matches the flux of the other loads 1606 within the system. Thus, the controller 1612 may control a level of excitation of the second generator to a constant level to create a flux of the second generator that substantially matches a flux of the loads within, for example, plus and minus two percent.

During operation as a motor, the second generator 1644 produces torque based on the electric power supplied by the first generator 1604 instead of being driven by a prime mover. Since the second generator 1644 is energized to begin rotating in synchronism with the first generator 1604 at the time the first generator 1604 begins to rotate, as the first generator 1604 is driven by the first prime mover to increase in rotational speed, the second generator 1644 similarly increases in rotational speed while being supplied electric power by the first generator 1604. Upon the first and second generators 1604 and 1644 synchronously reaching a predetermined rotational speed, a second prime mover may initiate driving the second generator 1644 by transitioning the second generator 1644 from producing torque as a motor, to receiving torque from the second prime mover. During the transition of the second generator 1644 from a motor to a generator, synchronous rotation of the first and second generators 1604 and 1644 may be maintained. Since synchronous rotation of the first and second generators 1604 and 1644 is maintained from the start of rotation of the first generator 1604, and during the transition of the second generator 1644 from operation as a motor to operation as a generator, there is no need to separately start up and then synchronize the second generator 1644. In other words, since the first and second generators 1604 and 1644 are electrically coupled and operate in phase (same frequency) from the time the first generator 1604 initially commences rotation, there is no need to synchronize the second generator when the second generator transitions from operation as a motor load to operation as a generator supplying electric power. The second generator 1644 may be controlled as both a motor and a generator by the controller 1612. In addition, the controller 1612 may be active in controlling operation of the second prime mover during the transition of the second generator 1644 from operation as a motor to operation as a generator.

In an example system the first and second prime movers may be turbine engines, such as gas turbine engines. The master generator 1604 and the slave generator(s) 1644 may each be turbine-engine driven generators. Each turbine engine prime mover may include multiple shafts, some of which are not directly coupled with the turbine engine core. For example, a turbine engine may include a shaft driven by a low pressure (LP) spool that is only very loosely coupled through turbine aerodynamics. Due to the relatively loose coupling, a generator coupled with the shaft of the LP spool may freely rotate to some low rpm without affecting or being affected by the turbine engine core. In example operation of such a system, a first turbine engine may be initially started as a first prime mover to drive the first generator 1604 (master generator) to begin rotation and generation of alternating current (AC) electric power. The slave generator(s), such as the second generator 1644, may be mechanically coupled with the shafts of an LP spool(s) in one or more other turbine engines (second turbine engine(s)). The slave generator(s), which are operated as motors by being fed a constant field excitation to substantially match the flux of the loads 1606, are energized by the electric power generated by the first generator 1604 and begin to synchronously rotate when the rotation of the first generator 1604 commences, thereby also rotating the LP spool(s) of the corresponding un-started second turbine engines. In addition, the other loads 1606 begin to synchronously rotate when the rotation of the first generator 1604 commences.

As the first generator 1604 begins to slowly rotate, the field of the first generator 1604 may be manipulated in such a way that synchronization occurs between the first generator 1604 and all other rotors on the system, namely the rotor 1645 of the second generator 1644 and the rotors of the loads 1606 that are rotational loads. In general, the field of the first generator 1604 may be manipulated at the time or before the time the first generator 1604 first begins to rotate, via mechanical rotational force, such as provided by a prime mover, so as to synchronize the loads (including the second generator 1644) with the first generator 1604. Since loads such as motors, and the second generator 1644 are also not rotating at this time, magnetic coupling between the generator rotor and the other rotors in the system has not yet been established. Establishment of a magnetic coupling results in the loads 1606 and the second generator 1644 beginning to rotate synchronously with respect to the electrical frequency of the first generator 1604.

At substantially zero, or very low rotational speed of the first generator 1604, the first generator 1604 may be excited by the exciter 1603 to generate AC electric power, which is supplied to the loads 1606 and the second generator 1644. The generated electric power may be supplied at sufficient voltage and current to overcome any anti-rotational forces present at the loads 1606 and the second generator 1644. Due to the absence of rotation (or low frequency rotation of the first generator - such as less than one or two Hz) the magnetic coupling of the rotor 1605 of the generator 1604 with the rotor 1645 of the second generator 1644 and the rotors of the loads 1606 may be initiated or enhanced by selectively increasing and decreasing, or pulsing, the electric power output of the first generator 1604. The output 1614 of the first generator 1604 may be selectively pulsed to coincide with the position of the rotors of the loads 1606 and the second generator 1644 so that a relatively high magnitude of electric power is provided while the rotors of the first generator 1604, the second generator 1644, and the loads are substantially aligned, and conversely a relatively lower magnitude of electric power is provided while the rotors of the second generator 1644 and the loads 1606 are substantially out of alignment with the rotor 1605 of the first generator 1604. During the pulses while the rotors are substantially aligned, the stiffness of the magnetic coupling between the first generator rotor 1605, the second generator rotor 1645, and the load rotors may be increased such that the second generator 1644 and the loads 1606 are induced to begin rotating in electrical synchronism with the first generator 1604. In addition, in response to the magnetic coupling of the first generator 1604 with the second generator 1644 and the loads 1606, a bus voltage may be established and maintained on a bus 1660 while the magnetic coupling is maintained. An example system that performs such magnetic coupling prior to or at commencement of rotation of a master generator is described in U.S. Provisional Patent Application No. 62/369,191 filed July 31, 2016 and entitled "Synchronous Electric Power Distribution Startup System,".

The controller 1612 may monitor the voltage and/or current of two or more phases at the output 1614 and 1654 of the first and second generators 1604, 1644 using one or more sensors 1616. The outputs 1614 and 1654 of the generators 1604 and 1644 may be electrically coupled via the bus 1660. The bus 1660 may be considered the system bus, or system voltage and current. The sensor(s) 1616 may include a current transformer (CT), a potential transformer (PT), or any other form of voltage and/or current measurement device capable of outputting measurement signal(s) to the controller 1612.

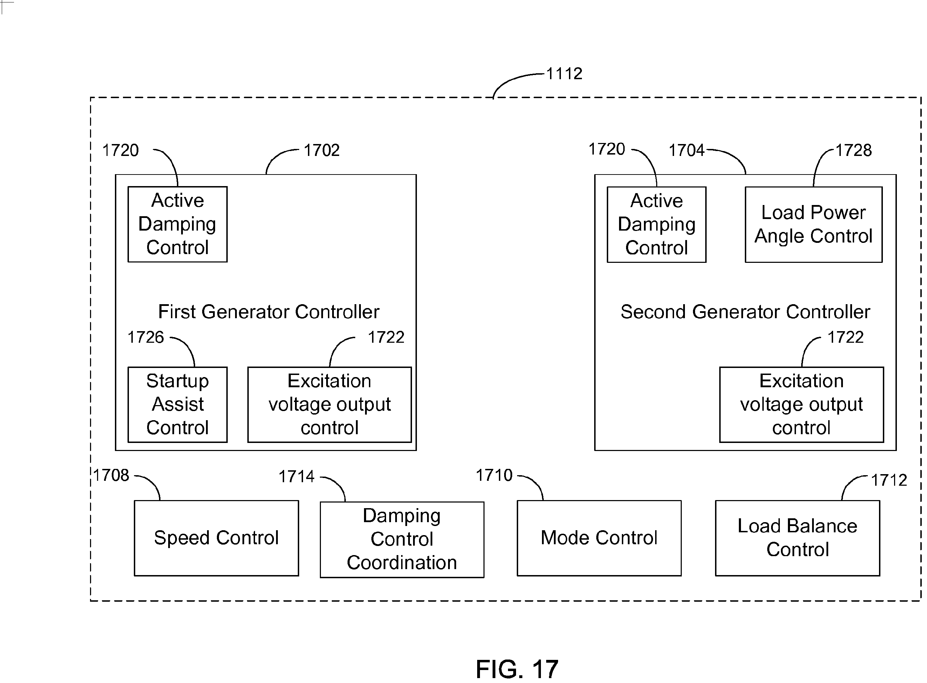

FIG. 17 is a block diagram of an example of the system controller 1612 illustrated in FIG. 16. The system controller 1612 may include a first controller 1702, or master controller, to control the first generator 1604 and a second controller 1704, or slave controller, to control the second generator 1644. In addition, the controller 1612 may include a speed control 1708, a mode control 1710, a load balance control 1712 and a damping control coordination 1714. In other examples, additional or fewer blocks may be used to illustrate the functionality of the system controller 1612. In addition, in other examples, additional or fewer controllers may be included within the system controller 1612. Also, for purposes of brevity, functionality and operation similar to the controllers 112 and 212 and 312 and 612 and 1112 of systems 100 and 200 and 300 and 600 and 1100 may be present in the controllers 1702 and 1702.

The speed control 1708 may monitor the rotational speed of the first generator 1604 and therefore the rotational speed of the second generator 1644 and the loads 1606 which are synchronized with the first generator 1604. Rotational speed may be monitored using a rotational speed detection sensor, and/or by derivation from the frequency of the electric power (voltage or current) output by the first generator 1604. Using the rotational speed, the speed control 1708 may control increases and decreases in the rotational speed of the first generator 1604 during the startup mode. The rotation speed of the first generator 1604 may be controlled to ensure that a speed-vs-time profile of the master prime mover is a continuous and a smoothly increasing curve, such as a linear curve, an s-curve or a hyperbolic tangent shape curve, as the speed increases. In addition, or alternatively, the speed control 1708 may control the speed of the generator 1708 to increase the rotational speed of the first generator 1604 with a sufficiently slow acceleration rate. The acceleration rate may be restrained to avoid decoupling of the synchronous speed of the first generator 1612 with the second generator 1644 and the rotating loads 1606. For example, the acceleration rate may be controlled by the speed control 1708 to be slow enough that the slave generator(s) (such as second generator 1644) are able to accelerate at the same rate despite limitations of how much torque-producing current can be sourced from the primary generator (such as generator 1704) at these low speeds to maintain the coupling.

The mode control 1710 may control the transition of the system from the startup mode to the operational mode. During startup mode, the mode control 1710 may direct/manage the first controller 1702 to control the first generator 1604 as the master generator, and direct/manage the second controller 1704 to control the second generator 1644 as a motor (slave generator). The mode control 1710 may also direct/control the first controller 1702 and the second controller 1704 to transition from the startup mode to the operational mode. As part of the transition, the mode control 1710 may cooperatively operate with the speed control 1708 to convert the second generator 1644 from operation as a motor to operation as a generator. Using the rotational speed, the mode control 1710 may determine the appropriate time to initiate the prime mover of the second generator 1644, slave prime mover(s), to cause the second generator 1644 to begin producing power.

During the startup mode, when the mode control 1710 is monitoring to transition from the startup mode to the operational mode. At this point, the second generator(s) 1644 (slave generator) and respective slave prime mover(s) are already rotating synchronously with the first generator 1604 (master generator) and respective master prime mover. Thus, the mode control 1710 may determine when the rotational speed has reached the predetermined speed to allow the second generator 1644 to begin operation as a generator generating electric power. The predetermined speed may be determined based on, for example, a percentage of rated speed, a level of electric power output, a range of system power angle, an electrical frequency, or a stiffness, such as a sufficient level of stiffness to maintain electrical phase synchronization during changing operating conditions.

In the example of the slave prime mover being a turbine engine, a high pressure (HP) spool of the slave turbine engine may be started to initiate the transition from the startup mode to the operational mode. The mode control 1710 may enable startup of the HP spool of the slave turbine engine, and then fuel and combustion may be added to the slave turbine engine to increase the speed of rotation of the HP spool, so that power in the form of rotational energy (or rotational torque) begins to flow into the alreadyspinning LP spool. As the rotational speed of the HP spool continues to increase, at some point, the generator torque changes direction such that the second generator 1644 begins flowing power out of the output 1654 to the bus 1660 to supply the loads 1606.

The load balance control 1712 may manage/direct the controller 1702 and the second controller 1704 to balance the electric power output of the first generator 1604 and the second generator 1644 once the system transitions to the operational mode where both the first generator 1604 and the second generator 1644 are generating electric power on the bus 1660 to supply the loads 1606. Load balancing by the load balance control 1712 may involve monitoring parameters of the outputs 1614 and 1660, such as the respective output currents and communicating with both the first controller 1702 and the second controller 1704 to independently control the output of electric power. In examples, the load balance control 1712 may maintain loading of the first and second generators 1604 and 114 within a predetermined relative loading, such as within plus and minus ten percent. In other examples, such as when the generators 1604 and 1644 have different power output capabilities, the load balance control 1712 may maintain a predetermined loading ratio of output power from the generators 1604 and 1644. In still other examples, the output power can be maintained at a predetermined loading ratio so that suitable spinning reserve is available from or more of the generators 1604 and 1644. In other examples, the load balancing control 1712 may operate with a droop control strategy, such as frequency (rotational speed) droop control that allows for similar and parallel adjustments in output power of the generators as a function of changes in frequency of the output power.

During the operational mode, synchronous speed of the system may still be dictated by the master prime mover driving the first generator 1604, and all other generators and loads may be synchronously rotating with the first generator 1604. If a generator's load increases/decreases during the operational load, the power/torque/speed setting of its prime mover (master or slaves) may be decreased/increased as directed, managed by the load balancing control 1712 to maintain a substantially balanced split of electric power being supplied to the loads 1606, such as by using a frequency-based droop control. For example, each prime mover, such as a turbine engine, may be controlling speed of the respective generators to 100% - k^{∗}Pgen, where Pgen is the generator output power and k is a gain, which determines how much "droop" to allow in order to maintain a substantially balanced supply of electric power by the generators. In examples, k may be a determined value, such as a gain value to reduce speed by about 5% when the generator is at full rated power.

The load balancing control 1712 may also cooperatively operate with the speed control 1708 and the mode control 1710. For example, during a transition from startup mode to operational mode, load support may be smoothly and efficiently transferred using the load balancing control 1712 from the first generator 1604 to the second generator 1644, as the second generator 1644 transitions from consuming electric power as a motor, to generating electric power as a generator. The load balancing control 1712 may also manage and control hunting between the first generator 1604 and the second generator 1644 during the operational mode when both generators are generating electric power for supply to the loads 1606.

Each of the controllers 1702 and 1704 may also include independently operating active damping control 1720, and excitation voltage output control 1722. Active damping control 1720 may direct operation when the respective generator is outputting electric power to supply loads 1606. Coordination of the active damping control between the generators 1604 and 1644 may be performed with the damping control coordination 1714. The damping control coordination 1714 may operate to coordinate operation of the generators 1604 and 1644 so that one or both of the generators 1604 are actively damping sub harmonic oscillations using the respective active damping control 1720. In startup mode, the damping control coordination 1714 may direct only the active damping control 1720 of the first generator 1604 (master generator) to perform active damping control, whereas in operational mode, the active damping control 1720 of both the first generator 1604 and the second generator 1644 may be directed/managed by the damping control coordination 1714 to perform active damping control.

As previously discussed, based on the sensed voltage and/or current, or shaft position or other mechanisms for identifying oscillations, the controllers 1702 and/or 1704 may identify torque oscillations between the generators 1704, 1744 and the loads 1606 within a mode at a sub harmonic frequency. In examples of operation, the damping control coordination 1714 may provide coordinated operation of the generators 1704 and 1744 via the respective active damping controls 1720 such that both generators address the same subharmonic frequency of a mode, whereas in other examples, the damping control coordination 1714 may direct the generators to address different modes, such as where different modes have oscillations at different subharmonic frequencies.

The excitation voltage output control 1722 may be independently operated in each of the controllers 1702 to set the respective field currents *Ifield* 1609 and 1649 by providing respective voltage output signals 1624 and 1664 to the respective exciters 1603 and 1643. During the startup mode, the voltage output signals 1624 output by the first controller 1702 may be dynamically varied to perform startup assist, to damp power angle oscillations and to output electric power to the bus 1660 by selective changes of the field current *I_{FIELD}* 1609 at the exciter 1603. The voltage output signals 1664 output by the second controller 1704, may remain relatively constant during the startup mode, since the field current *I_{FIELD}* 1649 at the exciter 1643 should remain substantially constant so that the second generator 1644 operates as a permanent magnet motor. During the operational mode, the voltage output signals 1624 and 1664 are both dynamically varied to dynamically vary the respective field currents *Ifield* 1609 and 1649. The respective controllers 1702 and 1704 may independently dynamically modulate a level of the respective voltage output signals 1624 and 1664 supplied to the exciters 1603 and 1643 (directly or indirectly) to correspondingly and cooperatively increase and decrease the stiffness of the coupling between generators 1604 and 1644 and the loads 1606.

The first controller 1702 may also include a startup assist control 1726 to align the rotors of the second generator 1644 and the loads 1606 with the first generator 1604, by pulsing the field current *Ifield* 1609 at or during commencement of rotation of the first generator 1604, as previously discussed. Thus, the startup assist control 1726 is only operational during the startup mode. A startup assist control may not be present in the second controller 1704 since the second controller 1704 operates the second generator 1644 as a motor during the startup mode.

The second controller 1704 may include a load power angle control 1728, which operates only during the startup mode while the second generator 1644 is operating as a motor load. During the startup mode, the load power angle control 1728 may direct the excitation voltage output control 1722 to adjust the constant field current *Ifield* 1649 via the exciter 1643 so as to adjust the power angle of the motor load being represented by the second generator 1644. Adjustment of the power angle to be more leading or more lagging may advantageously stiffen the coupling between the first generator 1604 and the second generator 1644. Adjustment of the constant field current *Ifield* 1649 by the load power angle control 1728 may be based on monitoring the phase of the voltage and current supplied to the second generator 1644 by the first generator 1604.

The relative back-emf voltages of the first and second generators 1604 and 1644 may be affected by adjusting the excitation of the second generator 1644 with respect to the first generator 1604. Changes in the back-emf voltages may affect the amount of current that is produced by a given generator at a given rotor angle mismatch between the rotors of the generators. Changes in the amount of current produced by a generator at a given rotor angle mismatch may affect the torque produced vs angle mismatch, which may be correlated to the stiffness between the rotors 1605 and 1645 of the first and second generators 1604 and 1644.

Stiffness may be maintained in a range so as to avoid the stiffness being reduced to the point of losing synchronism among the rotating devices, or increased to the point of limiting the current producing capacity of the generator(s). In an example, where the coupling is "stiffened" too much, the current-producing capacity of the primary generator (first generator 1604) to supply the loads 1606 may be effectively reduced by too much of the output current of first generator 1604 being supplied to the second generator 1644. In this example, due to the second generator 1644 "taking" too much (or all) of the current output by the first generator 1694, little of the current output by the first generator 1604 is available and being supplied to the loads 1606. In other words, stiffening of the coupling between the first and the second generators 1604 and 1644 may be at the "expense" of loosening the coupling between a main generator, such as the first generator 1604 or the second generator 1644, and the load 1606, such as load motors. The system controller 1612 may control the first and second generators 1604 and 1644 to achieve a balance between stiffness of the generator coupling and stiffness of the coupling between the loads 1606. The balance may nominally be achieved by substantially matching the back-emf of the loads 1606, such as motors, in the system, however some predetermined relatively small dynamic mismatch due to differences in machine inertias (and hence starting torque requirements) may be desirable.

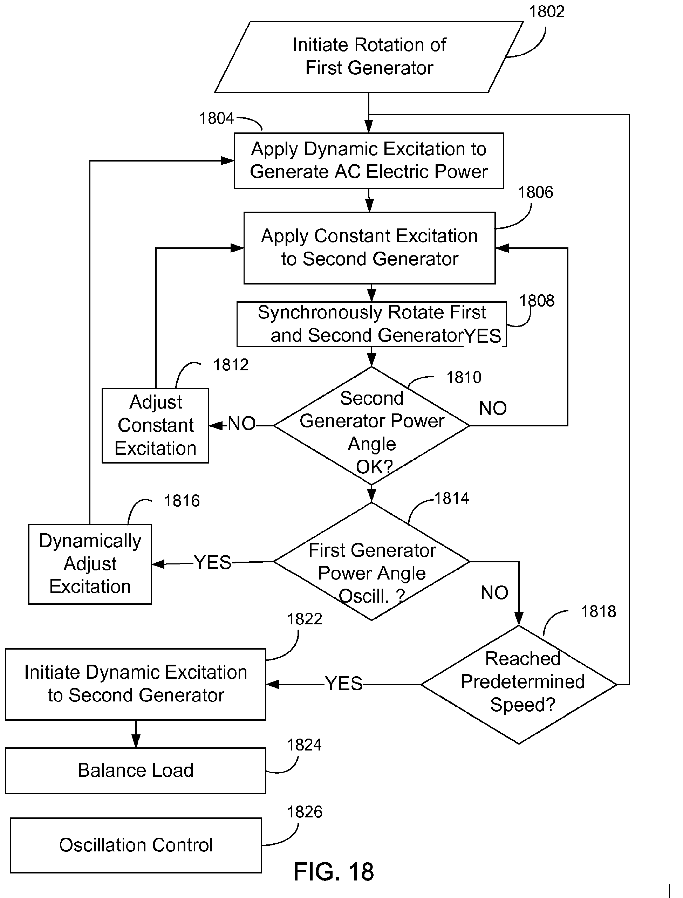

FIG. 18 is an example of an operational flow diagram of the system 1600 illustrated in FIGs. 16 and 17. The system may begin operation by initiating rotation of the first generator 1604 with a first prime mover, such as a gas turbine engine. (1802) At the time of commencing rotation of the first generator 1604, the system may be in the startup mode such that the first generator 1604 is the master generator and is supplied a field current *Ifield* 1609 that is dynamically varied to generate dynamically variable electric power at the output 1614 of the first generator 1604. (1804). In response to initiating rotation of the first generator 1604, a constant field current *Ifield* 1649 may be provided to the second generator 1644 to provide constant excitation such that the second generator 1644 operates as a motor. (1806) Dynamically varying the output power of the first generator 1604 may include the startup assist control pulsing the excitation of the first generator 1604 to align the rotors of the second generator 1644 and the loads 1606 with the first generator 1604 such that the second generator 1644 and the loads 1606 begin to rotate synchronously with the first generator 1604. (1808)

Once synchronization has been established (with the first generator 1604 still at relatively low speed), the speed of the first prime mover can be gradually increased up to full speed. In the example of a multi-shaft turbine engine, the prime mover may naturally have a relatively slow, linear, and relatively smooth starting profile such that the turbine engine spins at very low speed for some time before starting to ramp up appreciably in rotational speed of operation. The ramped linearly increasing speed provides a window of time for synchronization with the second generator 1644 and the load 1606 by initiating rotation of the respective rotors. As the system synchronized speed increases, the prime mover(s) of the second generator(s) 1644 may be started, such as by applying some fuel to the gas turbine engine(s). As the prime mover(s) of the slave generator(s) (second generator(s) 1644) ramp up in speed to the rotational speed of the respective LP spool(s) that are already spinning, the load draw (e.g. power consumption) by the second generator(s) 1644 operating as a motor begins to reduce.

During the time when the second generator 1644 and the loads 1606 are synchronously increasing in speed with the first generator 1604, the load power angle control 1728 of the second controller 1704 may determine if the load power angle of the second generator 1644 is optimized to maintain a stiff coupling between the first generator 1604 and the second generator 1644. (1810). For example, the load power angle may be maintained at unity or slightly lagging to maintain the stiff coupling. If a stiff coupling is present, the second controller 1704 may maintain the load power angle unchanged by holding the field current *Ifield* 1649 constant (1806) while continuing to synchronously rotate the first and second generators 1604 and 1644. (1808). If the coupling between the first generator 1604 and the second generator 1644 could be further stiffened by adjusting the constant field current *Ifield* 1649, the load power angle control may adjust the constant excitation by adjusting the field current *Ifield* 1649. (1812) The adjusted constant field current *Ifield* 1649 may be constantly applied to the second generator 1644 to adjust the load power angle by creating an adjust constant excitation (1806) while continuing to synchronously rotate the first and second generators 1604 and 1644 and operate the second generator 1644 as a motor. (1808). As used herein, the term "constant" excitation refers to the level of excitation of the generator remaining unchanged and otherwise not being reactively and dynamically adjusted, but instead being subject to only step changes from one level to another level.

In addition, the active damping control 1720 included in the first controller 1702 may determine when subharmonic oscillations need to be damped by adjustment of the power angle of the electric power generated by the first generator 1604. (1814) In other words, the first controller 1702 may identify torque oscillations between the first generator 1604 and the second generator 1644/the loads 1606 within a mode at a sub harmonic frequency based on, for example, oscillations in the power angle. As previously discussed, damping of the power factor, power angle, or reactive power oscillations may effectively damp out sub-harmonic oscillations in the terminal currents of the generator 1604. Damping of the power angle oscillations may be performed using the controller 1702 and the exciter 1603 during the startup mode by selectively changing the field current *I_{FIELD}* 1609 at the exciter 1603 to counteract the power angle oscillations and resulting torque oscillations by dynamically adjusting the excitation. (1816) The operation then applies the dynamic excitation to generate AC power (1804). If the power angle of the first generator 1604 is not oscillating, the operation determines if the synchronous speed has ramped in a linear fashion to a desired operating speed. (1818)

If the synchronous speed of the first generator 1604 and the second generator 1644 have not reached a predetermined speed, the operation continues to apply the dynamic excitation (1804), synchronous rotate the first and second generators (1806) and other activities, as previously described. If, however, the synchronous speed has reached a predetermined speed, dynamic excitation of the second generator 1644 may be initiated with the excitation voltage output control 1722 of the second generator 1644 to transition the second generator 1644 from operation as a motor to operation as a generator. (1822) The predetermined speed may be, for example, rated operational speed of the prime mover, such as a gas turbine engine. Once sufficient speed is achieved for a stiff effective coupling between machines, the system may transition from the startup mode to the operational mode by increasing the rotational speed of the slave prime mover(s), such as by applying additional fuel to the slave gas turbine engine(s) so that the slave generator(s), such as the second generator 1644, transition from operation as a motor drawing current and voltage to a generator producing current and voltage on the bus 1660.

Once the transition occurs, the load balance control 1712 may balance the load between the master generator (first generator 1604) and the slave generators (second generator 1644). (1824). To transition from the startup mode to the operational mode, the excitation voltage output control 1722 may control the field of the second generator 1644 to smoothly transition into operation as a generator. Transition from operation as a motor to operation as a generator may also include the active damping control 1720 of the second exciter 1704 controlling the field current *Ifield* 1649 to damp current oscillations and maintain power factor, similar to operation of the first generator 1604 both during the startup mode and during the operational mode. (1826) One difference between the startup mode and the operational mode is in the operational mode all the generators are independently, and cooperatively controlled, so the damping control coordination 1714 being to operate in cooperation with the load balance control 1712 to share the load 1606 evenly between the generators and prevent oscillations.

In one or more examples, the operations described may be implemented in hardware, software, firmware, or any combination thereof. If implemented in software, the operations may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. The scope of protection is defined in the appended claims.

## Claims

1. A system (100) comprising:
a prime mover (102) configured to provide mechanical energy to the system (100) by spinning a shaft (110);
a synchronous AC generator (104) comprising a rotor mechanically coupled to the shaft (110);
an exciter (103) mechanically coupled to the shaft (110) and configured to output a variable field current to excite the synchronous AC generator (104);
a plurality of synchronous electric motors (106) electrically direct coupled to the synchronous AC generator (104) and each comprising a rotor rotatable operable to drive one or more mechanical loads (108); and
a controller (112) configured to establish and maintain a magnetic coupling between the rotor of the synchronous AC generator (104) and all of the rotors of the synchronous electric motors (106) by control of a level of the field current during a ramped increase in rotation of the rotor of the synchronous AC generator (104) from zero rotational speed,
**characterised in that** the controller (112) is further configured to control the level of the field current based on a difference in an angle of deflection between a position of the rotor of the synchronous AC generator (104) and a position of each of the rotors of the respective synchronous electric motors (106).

2. The system (100) of claim 1, wherein the controller (112) is configured to control the level of the field current based on a difference in an angle of deflection between the position of the rotor of the synchronous AC generator (104) and an average position of the rotors of the plurality of synchronous electric motors (106).

3. The system (100) of claim 1 or claim 2, wherein the controller (112) is further configured to control the level of the field current by application of an excitation voltage to the exciter (103) with a magnitude and/or frequency to induce a terminal voltage at the synchronous AC generator (104) that causes supply of torque producing current to the synchronous electric motors (106) to commence rotation of the synchronous electric motors (106) by establishment of the magnetic coupling during the ramped increase in rotation of the rotor of the synchronous AC generator (104) from zero rotational speed, wherein the terminal voltage is a minimum voltage needed to generate enough torque producing current to accelerate the one or more mechanical loads (108) from a zero speed during the ramped increase in rotation of the rotor of the synchronous AC generator (104) from zero rotational speed, wherein the controller (112) is further configured to decrease the magnitude of the excitation voltage in response to an increase in a speed of the shaft (110) or an increase in a speed of the one or more mechanical loads (108) to maintain the magnetic coupling during the ramped increase in rotation of the rotor of the synchronous AC generator (104) toward rated rotational speed.

4. The system (100) of any one of claims 1 to 3, wherein: the controller (112) is further configured to control the level of the field current by application of an excitation voltage to the exciter (103) a magnitude of the excitation voltage controlled by the controller (112) to accelerate the synchronous electric motors (106) at a same rate that the prime mover (102) accelerates the synchronous AC generator (104).

5. The system (100) of claim 4, wherein: the controller (112) is further configured to:
set the magnitude of the excitation voltage to a predetermined voltage when the speed of the shaft (110) is at a zero speed; and
set the magnitude of the excitation voltage at less than the predetermined voltage as the prime mover accelerates the speed of the shaft (110) towards rated operational speed of the synchronous AC generator (104).

6. The system (100) as in any of claims 1 to 5, wherein the controller (112) is configured to maintain synchronization of the synchronous electric motors (106) and the synchronous AC generator (104) during the ramped increase in rotation of the rotor of the synchronous AC generator (104) from zero rotational speed by control of the level of the field current during a start-up period of the prime mover (102).

7. The system (100) of claim 1, wherein the controller (112) is configured to control a level of excitation of the exciter in a range between 100% and 150% of a rated level of excitation of the exciter (103) to induce rotation of the plurality of synchronous electric motors (106) so that the magnetic coupling is formed between the synchronous AC generator (104) and the plurality of synchronous electric motors (106).

8. A method comprising:
initiating rotation of a prime mover (102) to commence a ramped increase in rotational speed of a synchronous AC generator (104) from a zero speed condition;
establishing, by a controller (112), a level of a field current to excite the synchronous AC generator (104) to form a magnetic coupling between the synchronous AC generator (104) and a plurality of synchronous electric motors (106) that are electrically coupled to the synchronous AC generator (104) and configured to drive respective mechanical loads (108); and
controlling, by the controller (112), the level of field current to maintain the magnetic coupling during the ramped increase in rotational speed of the synchronous AC generator (104) to a full rated speed condition so that the plurality of synchronous electric motors (106) remain synchronized with the synchronous AC generator (104)
**characterised in that** the level of the field current being controlled by the controller (112) by:
determining a difference in an angle of deflection between a position of the rotor of the synchronous AC generator (104) and a position of each of the rotors of the plurality of synchronous electric motors (106); and
adjusting the field current, by the controller (112), according to the determined difference in the angle of deflection during the ramped increase in rotational speed of the synchronous AC generator (104) to the full rated speed condition.

9. The method of claim 8, wherein the difference in the angle of deflection between the position of the rotor of the synchronous AC generator (104) and the position of each of the rotors of the plurality of synchronous electric motors (106) is a difference in the angle of deflection between the position of the rotor of the synchronous AC generator (104) and an average position of the rotors of the plurality of synchronous electric motors (106).

10. The method of claim 8 or claim 9, wherein establishing, by the controller (112), the level of a field current to excite the synchronous AC generator (104) to form the magnetic coupling between the synchronous AC generator (104) and the plurality of synchronous electric motors (106) comprises applying, by the controller (112), a magnitude of excitation voltage to an exciter to induce a terminal voltage at the synchronous AC generator (104) that causes torque producing current at the plurality of synchronous electric motors (106) to induce synchronous rotation of all the plurality of synchronous electric motors (106) and the respective mechanical loads from zero speed, wherein all the plurality of synchronous electric motors (106) and the respective mechanical loads (108) are in a no-load condition at zero speed, and the magnitude of excitation voltage applied to the exciter (103) to induce the terminal voltage at the synchronous AC generator (104) causes only enough torque producing current at the plurality of synchronous electric motors (106) to induce synchronous rotation under the no-load condition.

11. The method of any one of claims 8 or claim 10, wherein controlling the level of the field current to maintain the magnetic coupling during the ramped increase in rotational speed of the synchronous AC generator (104) to the full rated speed condition comprises variably applying, by the controller (112), an excitation voltage to an exciter (103) at a magnitude and/or frequency to induce a terminal voltage at the synchronous AC generator (104) that causes enough torque producing current at the plurality of synchronous electric motors (106) to drive the respective mechanical loads (108) during the ramped increase.

12. The method of claim 11, wherein variably applying the excitation voltage to the exciter (103) comprises decreasing, by the controller (112), a magnitude of the excitation voltage in response to stiffening of the magnetic coupling between the synchronous AC generator (104) and the plurality of synchronous electric motors (106) during the ramped increase in rotational speed of the synchronous AC generator (104) to the full rated speed condition.

13. The method as in any of claims 8 to 12, wherein establishing, by the controller (112), the level of a field current to excite the synchronous AC generator (104) to form the magnetic coupling between the synchronous AC generator (104) and the plurality of synchronous electric motors (106) comprises:
setting, by the controller (112), the level of field current to a maximum to induce synchronous rotation of all the plurality of synchronous electric motors (106) and the respective mechanical loads from zero speed; and
wherein controlling the level of the field current to maintain the magnetic coupling during the ramped increase in rotational speed of the synchronous AC generator (104) to the full rated speed condition comprises reducing, by the controller (112), the level of field current toward a minimum during the ramped increase in rotational speed of the synchronous AC generator (104) to the full rated speed condition.

14. The method as in any of claims 8 to 13, wherein controlling, by the controller (112), the level of field current to maintain the magnetic coupling during the ramped increase in rotational speed of the synchronous AC generator (104) to the full rated speed condition comprises accelerating the synchronous electric motors (106) synchronously with acceleration of the synchronous AC generator (104) during the ramped increase in rotational speed of the synchronous AC generator (104) to the full rated speed condition and inferring, by the controller (112), a torque deflection angle representative of a difference in a rotor position of the synchronous AC generator (104) and an average rotor position of the plurality of synchronous electric motors (106).

## Patentansprüche

1. System (100), umfassend:
eine Antriebsmaschine (102), die dafür konfiguriert ist, durch Drehen einer Welle (110) das System (100) mit mechanischer Energie zu versorgen;
einen synchronen Wechselstromgenerator (104) umfassend einen Rotor, der mechanisch mit der Welle (110) gekoppelt ist;
einen Erreger (103), der mechanisch mit der Welle (110) gekoppelt und dafür konfiguriert ist, einen variablen Feldstrom zum Erregen des synchronen Wechselstromgenerators (104) auszugeben;
eine Vielzahl von synchronen Elektromotoren (106), die elektrisch direkt mit dem synchronen Wechsel stromgenerator (104) gekoppelt sind und jeweils einen Rotor umfassen, der drehbar betreibbar ist, um eine oder mehrere mechanische Lasten (108) anzutreiben; und
eine Steuerung (112), die konfiguriert ist zum Herstellen und Aufrechterhalten einer magnetischen Kopplung zwischen dem Rotor des synchronen Wechselstromgenerators (104) und sämtlichen der Rotoren der synchronen Elektromotoren (106) durch Steuerung eines Niveaus des Feldstroms während einer rampenförmigen Zunahme der Drehung des Rotors des synchronen Wechselstromgenerators (104) von der Nulldrehzahl aus,
**dadurch gekennzeichnet, dass** die Steuerung (112) ferner konfiguriert ist zum Steuern des Niveaus des Feldstroms auf Basis einer Differenz eines Ablenkwinkels zwischen einer Position des Rotors des synchronen Wechselstromgenerators (104) und einer Position jedes der Rotoren der jeweiligen synchronen Elektromotoren (106).

2. System (100) nach Anspruch 1, wobei die Steuerung (112) konfiguriert ist zum Steuern des Niveaus des Feldstroms auf Basis einer Differenz eines Ablenkwinkels zwischen der Position des Rotors des synchronen Wechselstromgenerators (104) und einer durchschnittlichen Position der Rotoren der Vielzahl von synchronen Elektromotoren (106).

3. System (100) nach Anspruch 1 oder Anspruch 2, wobei die Steuerung (112) ferner konfiguriert ist zum Steuern des Niveaus des Feldstroms durch Anlegen einer Erregungsspannung an den Erreger (103) mit einer Größe und/oder Frequenz zum Induzieren einer Anschlussspannung an dem synchronen Wechselstromgenerator (104), die die Zufuhr von Drehmoment erzeugendem Strom zu den synchronen Elektromotoren (106) bewirkt, um Drehung der synchronen Elektromotoren (106) durch Herstellung der magnetischen Kopplung während der rampenförmigen Zunahme der Drehung des Rotors des synchronen Wechsel stromgenerators (104) von der Nulldrehzahl aus zu beginnen, wobei die Anschlussspannung eine minimale Spannung ist, die benötigt wird, um genügend Drehmoment erzeugenden Strom zu erzeugen, um die eine oder mehreren mechanischen Lasten (108) von einer Nulldrehzahl aus während der rampenförmigen Zunahme der Drehung des Rotors des synchronen Wechselstromgenerators (104) von einer Nulldrehzahl aus zu beschleunigen, wobei die Steuerung (112) ferner konfiguriert ist zum Verringern der Größe der Erregungsspannung als Reaktion auf eine Zunahme einer Drehzahl der Welle (110) oder eine Zunahme einer Drehzahl der einen oder mehreren mechanischen Lasten (108), um die magnetische Kopplung während der rampenförmigen Zunahme der Drehung des Rotors des synchronen Wechselstromgenerators (104) auf die Nenndrehzahl aufrechtzuerhalten.

4. System (100) nach einem der Ansprüche 1 bis 3, wobei: die Steuerung (112) ferner konfiguriert ist zum Steuern des Niveaus des Feldstroms durch Anlegen einer Erregungsspannung an den Erreger (103), wobei eine Größe der Erregungsspannung von der Steuerung (112) gesteuert wird, um die synchronen Elektromotoren (106) mit einer gleichen Rate zu beschleunigen, mit der die Antriebsmaschine (102) den synchronen Wechselstromgenerator (104) beschleunigt.

5. System (100) nach Anspruch 4, wobei: die Steuerung (112) ferner konfiguriert ist zum:
Einstellen der Größe der Erregungsspannung auf eine vorbestimmte Spannung, wenn die Drehzahl der Welle (110) bei einer Nulldrehzahl ist; und
Einstellen der Größe der Erregungsspannung auf weniger als die vorbestimmte Spannung, während die Antriebsmaschine die Drehzahl der Welle (110) auf die Nennbetriebsdrehzahl des synchronen Wechselstromgenerators (104) beschleunigt.

6. System (100) nach einem der Ansprüche 1 bis 5, wobei die Steuerung (112) konfiguriert ist zum Aufrechterhalten der Synchronisation der synchronen Elektromotoren (106) und des synchronen Wechselstromgenerators (104) während der rampenförmigen Zunahme der Drehung des Rotors des synchronen Wechselstromgenerators (104) von der Nulldrehzahl aus durch Steuerung des Niveaus des Feldstroms während einer Anlaufperiode der Antriebsmaschine (102).

7. System (100) nach Anspruch 1, wobei die Steuerung (112) konfiguriert ist zum Steuern eines Erregungsniveaus des Erregers in einem Bereich zwischen 100% und 150% eines Nennerregungsniveaus des Erregers (103), um eine Drehung der Vielzahl von synchronen Elektromotoren (106) zu induzieren, so dass die magnetische Kopplung zwischen dem synchronen Wechselstromgenerator (104) und der Vielzahl von synchronen Elektromotoren (106) hergestellt wird.

8. Verfahren, umfassend:
Einleiten der Drehung einer Antriebsmaschine (102), um eine rampenförmige Zunahme der Drehzahl eines synchronen Wechselstromgenerators (104) von einem Null drehzahlzustand aus zu beginnen;
Festlegen, durch eine Steuerung (112), eines Niveaus eines Feldstroms zum Erregen des synchronen Wechselstromgenerators (104), um eine magnetische Kopplung zwischen dem synchronen Wechselstromgenerator (104) und einer Vielzahl von synchronen Elektromotoren (106) herzustellen, die elektrisch mit dem synchronen Wechselstromgenerator (104) gekoppelt und zum Antreiben jeweiliger mechanischer Lasten (108) konfiguriert sind; und
Steuern, durch die Steuerung (112), des Feldstromniveaus zum Aufrechterhalten der magnetischen Kopplung während der rampenförmigen Zunahme der Drehzahl des synchronen Wechselstromgenerators (104) auf einen Zustand mit voller Nenndrehzahl, so dass die Vielzahl von synchronen Elektromotoren (106) mit dem synchronen Wechselstromgenerator (104) synchronisiert bleiben
**dadurch gekennzeichnet, dass** das Niveau des Feldstroms von der Steuerung (112) gesteuert wird durch:
Bestimmen einer Differenz eines Ablenkwinkels zwischen einer Position des Rotors des synchronen Wechselstromgenerators (104) und einer Position jedes der Rotoren der Vielzahl von synchronen Elektromotoren (106); und
Anpassen des Feldstroms, durch die Steuerung (112), gemäß der ermittelten Differenz des Ablenkwinkels während der rampenförmigen Zunahme der Drehzahl des synchronen Wechselstromgenerators (104) auf den Zustand mit voller Nenndrehzahl.

9. Verfahren nach Anspruch 8, wobei die Differenz des Ablenkwinkels zwischen der Position des Rotors des synchronen Wechselstromgenerators (104) und der Position jedes der Rotoren der Vielzahl von synchronen Elektromotoren (106) eine Differenz des Ablenkwinkels zwischen der Position des Rotors des synchronen Wechselstromgenerators (104) und einer durchschnittlichen Position der Rotoren der Vielzahl von synchronen Elektromotoren (106) ist.

10. Verfahren nach Anspruch 8 oder Anspruch 9, wobei das Festlegen, durch die Steuerung (112), des Niveaus eines Feldstroms zum Erregen des synchronen Wechselstromgenerators (104) zum Herstellen der magnetischen Kopplung zwischen dem synchronen Wechselstromgenerator (104) und der Vielzahl von synchronen Elektromotoren (106) das Anlegen, durch die Steuerung (112), einer Größe einer Erregungsspannung an einen Erreger umfasst, um eine Anschlussspannung an dem synchronen Wechselstromgenerator (104) zu induzieren, die bewirkt, dass Drehmoment erzeugender Strom an der Vielzahl von synchronen Elektromotoren (106) eine synchrone Drehung sämtlicher der Vielzahl von synchronen Elektromotoren (106) und der jeweiligen mechanischen Lasten von der Nulldrehzahl aus induziert, wobei sämtliche der Vielzahl von synchronen Elektromotoren (106) und der jeweiligen mechanischen Lasten (108) in einem Nulllastzustand bei Nulldrehzahl sind, und die Größe der an den Erreger (103) angelegten Erregungsspannung zum Induzieren der Anschlussspannung an dem synchronen Wechselstromgenerator (104) lediglich genügend Drehmoment erzeugenden Strom an der Vielzahl von synchronen Elektromotoren (106) zum Induzieren einer synchronen Drehung im Nulllastzustand bewirkt.

11. Verfahren nach einem von Ansprüchen 8 oder Anspruch 10, wobei das Steuern des Niveaus des Feldstroms zum Aufrechterhalten der magnetischen Kopplung während der rampenförmigen Zunahme der Drehzahl des synchronen Wechselstromgenerators (104) auf den Zustand mit voller Nenndrehzahl das variable Anlegen, durch die Steuerung (112), einer Erregungsspannung an einen Erreger (103) mit einer Größe und/oder Frequenz zum Induzieren einer Anschlussspannung an dem synchronen Wechselstromgenerator (104) umfasst, die genügend Drehmoment erzeugenden Strom an der Vielzahl von synchronen Elektromotoren (106) bewirkt, um die jeweiligen mechanischen Lasten (108) während der rampenförmigen Zunahme anzutreiben.

12. Verfahren nach Anspruch 11, wobei variables Anlegen der Erregungsspannung an den Erreger (103) das Verringern, durch die Steuerung (112), einer Größe der Erregungsspannung als Reaktion auf eine Versteifung der magnetischen Kopplung zwischen dem synchronen Wechselstromgenerator (104) und der Vielzahl von synchronen Elektromotoren (106) während der rampenförmigen Zunahme der Drehzahl des synchronen Wechselstromgenerators (104) auf den Zustand mit voller Nenndrehzahl umfasst.

13. Verfahren nach einem der Ansprüche 8 bis 12, wobei das Festlegen, durch die Steuerung (112), des Niveaus eines Feldstroms zum Erregen des synchronen Wechselstromgenerators (104) zum Herstellen der magnetischen Kopplung zwischen dem synchronen Wechselstromgenerator (104) und der Vielzahl von synchronen Elektromotoren (106) umfasst:
Einstellen, durch die Steuerung (112), des Feldstromniveaus auf ein Maximum zum Induzieren einer synchronen Drehung sämtlicher der Vielzahl von synchronen Elektromotoren (106) und der jeweiligen mechanischen Lasten von der Nulldrehzahl aus; und
wobei das Steuern des Niveaus des Feldstroms zum Aufrechterhalten der magnetischen Kopplung während der rampenförmigen Zunahme der Drehzahl des synchronen Wechselstromgenerators (104) auf den Zustand mit voller Nenndrehzahl das Reduzieren, durch die Steuerung (112), des Feldstromniveaus auf ein Minimum während der rampenförmigen Zunahme der Drehzahl des synchronen Wechselstromgenerators (104) auf den Zustand mit voller Nenndrehzahl umfasst.

14. Verfahren nach einem der Ansprüche 8 bis 13, wobei das Steuern, durch die Steuerung (112), des Feldstromniveaus zum Aufrechterhalten der magnetischen Kopplung während der rampenförmigen Zunahme der Drehzahl des synchronen Wechselstromgenerators (104) auf den Zustand mit voller Nenndrehzahl das Beschleunigen der synchronen Elektromotoren (106) synchron mit der Beschleunigung des synchronen Wechselstromgenerators (104) während der rampenförmigen Zunahme der Drehzahl des synchronen Wechselstromgenerators (104) auf den Zustand mit voller Nenndrehzahl und das Rückschließen, durch die Steuerung (112), auf einen Drehmomentablenkwinkel, der für eine Differenz der Rotorposition des synchronen Wechselstromgenerators (104) und einer durchschnittlichen Rotorposition der Vielzahl von synchronen Elektromotoren (106) repräsentativ ist, umfasst.

## Revendications

1. Système (100) comprenant :
un moteur principal (102) configuré pour délivrer une énergie mécanique au système (100) en faisant tourner un arbre (110) ;
un générateur CA synchrone (104) comprenant un rotor couplé mécaniquement à l'arbre (110) ;
un excitateur (103) couplé mécaniquement à l'arbre (110) et configuré pour émettre un courant de champ variable pour exciter le générateur CA synchrone (104) ;
une pluralité de moteurs électriques synchrones (106) couplés électriquement en direct au générateur CA synchrone (104) et comprenant chacun un rotor rotatif utilisable pour entraîner une ou plusieurs charges mécaniques (108) ; et
un contrôleur (112) configuré pour établir et maintenir un couplage magnétique entre le rotor du générateur CA synchrone (104) et tous les rotors des moteurs électriques synchrones (106) par commande d'un niveau du courant de champ pendant une augmentation progressive de la rotation du rotor du générateur CA synchrone (104) à partir d'une vitesse de rotation nulle,
**caractérisé en ce que** le contrôleur (112) est en outre configuré pour commander le niveau du courant de champ sur la base d'une différence d'angle de déviation entre une position du rotor du générateur CA synchrone (104) et une position de chacun des rotors des moteurs électriques synchrones respectifs (106).

2. Système (100) selon la revendication 1, dans lequel le contrôleur (112) est configuré pour commander le niveau du courant de champ sur la base d'une différence dans un angle de déviation entre la position du rotor du générateur CA synchrone (104) et une position moyenne des rotors de la pluralité de moteurs électriques synchrones (106).

3. Système (100) selon la revendication 1 ou la revendication 2, dans lequel le contrôleur (112) est en outre configuré pour commander le niveau du courant de champ par application d'une tension d'excitation à l'excitateur (103) avec une amplitude et/ou une fréquence pour induire une tension aux bornes au niveau du générateur CA synchrone (104) ce qui provoque la délivrance d'un courant de production de couple aux moteurs électriques synchrones (106) pour commencer la rotation des moteurs électriques synchrones (106) par l'établissement du couplage magnétique pendant l'augmentation progressive de la rotation du rotor du générateur CA synchrone (104) à partir d'une vitesse de rotation nulle, dans lequel la tension aux bornes est une tension minimale nécessaire pour générer suffisamment de courant de production de couple pour accélérer l'une ou plusieurs charges mécaniques (108) à partir d'une vitesse nulle pendant l'augmentation progressive de la rotation du rotor du générateur CA synchrone (104) à partir d'une vitesse de rotation nulle, dans lequel le contrôleur (112) est en outre configuré pour diminuer l'amplitude de la tension d'excitation en réponse à une augmentation d'une vitesse de l'arbre (110) ou à une augmentation d'une vitesse de l'une ou plusieurs charges mécaniques (108) pour maintenir le couplage magnétique pendant l'augmentation progressive de la rotation du rotor du générateur CA synchrone (104) vers la vitesse de rotation nominale.

4. Système (100) selon l'une quelconque des revendications 1 à 3, dans lequel : le contrôleur (112) est en outre configuré pour commander le niveau du courant de champ par application d'une tension d'excitation à l'excitateur (103) une amplitude de la tension d'excitation commandée par le contrôleur (112) pour accélérer les moteurs électriques synchrones (106) à la même vitesse que le moteur principal (102) accélère le générateur CA synchrone (104).

5. Système (100) selon la revendication 4, dans lequel : le contrôleur (112) est en outre configuré pour :
régler l'amplitude de la tension d'excitation à une tension prédéterminée lorsque la vitesse de l'arbre (110) est à une vitesse nulle ; et
régler l'amplitude de la tension d'excitation à une valeur inférieure à la tension prédéterminée lorsque le moteur principal accélère la vitesse de l'arbre (110) vers la vitesse de fonctionnement nominale du générateur CA synchrone (104).

6. Système (100) selon l'une quelconque des revendications 1 à 5, dans lequel le contrôleur (112) est configuré pour maintenir la synchronisation des moteurs électriques synchrones (106) et du générateur CA synchrone (104) pendant l'augmentation progressive de la rotation du rotor du générateur CA synchrone (104) à partir d'une vitesse de rotation nulle par commande du niveau du courant de champ pendant une période de démarrage du moteur principal (102).

7. Système (100) selon la revendication 1, dans lequel le contrôleur (112) est configuré pour commander un niveau d'excitation de l'excitateur dans une plage entre 100 % et 150 % d'un niveau nominal d'excitation de l'excitateur (103) pour induire une rotation de la pluralité de moteurs électriques synchrones (106) de sorte que le couplage magnétique soit formé entre le générateur CA synchrone (104) et la pluralité de moteurs électriques synchrones (106).

8. Procédé comprenant :
l'initiation de la rotation d'un moteur principal (102) pour commencer une augmentation progressive de la vitesse de rotation d'un générateur CA synchrone (104) à partir d'une condition de vitesse nulle ;
l'établissement, par un contrôleur (112), d'un niveau d'un courant de champ pour exciter le générateur CA synchrone (104) afin de former un couplage magnétique entre le générateur CA synchrone (104) et une pluralité de moteurs électriques synchrones (106) qui sont électriquement couplés au générateur CA synchrone (104) et configurés pour entraîner des charges mécaniques respectives (108) ; et
la commande, par le contrôleur (112), du niveau de courant de champ pour maintenir le couplage magnétique pendant l'augmentation progressive de la vitesse de rotation du générateur CA synchrone (104) jusqu'à une condition de pleine vitesse nominale de sorte que la pluralité de moteurs électriques synchrones (106) restent synchronisés avec le générateur CA synchrone (104) ;
**caractérisé en ce que** le niveau du courant de champ étant contrôlé par le contrôleur (112) par :
la détermination d'une différence dans un angle de déviation entre une position du rotor du générateur CA synchrone (104) et une position de chacun des rotors de la pluralité de moteurs électriques synchrones (106) ; et
l'ajustement du courant de champ, par le contrôleur (112), selon la différence déterminée dans l'angle de déviation pendant l'augmentation progressive de la vitesse de rotation du générateur CA synchrone (104) jusqu'à la condition de pleine vitesse nominale.

9. Procédé selon la revendication 8, dans lequel la différence d'angle de déviation entre la position du rotor du générateur CA synchrone (104) et la position de chacun des rotors de la pluralité de moteurs électriques synchrones (106) est une différence de l'angle de déviation entre la position du rotor du générateur CA synchrone (104) et une position moyenne des rotors de la pluralité de moteurs électriques synchrones (106).

10. Procédé selon la revendication 8 ou la revendication 9, dans lequel l'établissement, par le contrôleur (112), du niveau d'un courant de champ pour exciter le générateur CA synchrone (104) pour former le couplage magnétique entre le générateur CA synchrone (104) et la pluralité de moteurs électriques synchrones (106) comprend l'application, par le contrôleur (112), d'une amplitude de tension d'excitation à un excitateur pour induire une tension aux bornes au niveau du générateur CA synchrone (104) qui provoque un courant de production de couple au niveau de la pluralité de moteurs électriques synchrones (106) pour induire une rotation synchrone de l'ensemble de la pluralité de moteurs électriques synchrones (106) et des charges mécaniques respectives à partir d'une vitesse nulle, dans lequel l'ensemble de la pluralité de moteurs électriques synchrones (106) et des charges mécaniques respectives (108) sont dans une condition sans charge à vitesse nulle, et l'amplitude de la tension d'excitation appliquée à l'excitateur (103) pour induire la tension aux bornes au niveau du générateur CA synchrone (104) provoque uniquement un courant de production de couple au niveau de la pluralité de moteurs électriques synchrones (106) suffisant pour induire une rotation synchrone dans la condition sans charge.

11. Procédé selon l'une quelconque des revendications 8 ou 10, dans lequel la commande du niveau du courant de champ pour maintenir le couplage magnétique pendant l'augmentation progressive de la vitesse de rotation du générateur CA synchrone (104) jusqu'à la condition de pleine vitesse nominale comprend l'application variable, par le contrôleur (112), d'une tension d'excitation à un excitateur (103) à une amplitude et/ou une fréquence pour induire une tension aux bornes au niveau du générateur CA synchrone (104) qui provoque un courant de production de couple suffisant au niveau de la pluralité de moteurs électriques synchrones (106) pour entraîner les charges mécaniques respectives (108) pendant l'augmentation progressive.

12. Procédé selon la revendication 11, dans lequel l'application variable de la tension d'excitation à l'excitateur (103) comprend la diminution, par le contrôleur (112), d'une amplitude de la tension d'excitation en réponse au raidissement du couplage magnétique entre le générateur CA synchrone (104) et la pluralité de moteurs électriques synchrones (106) pendant l'augmentation progressive de la vitesse de rotation du générateur CA synchrone (104) jusqu'à la condition de pleine vitesse nominale.

13. Procédé selon l'une quelconque des revendications 8 à 12, dans lequel l'établissement, par le contrôleur (112), du niveau d'un courant de champ pour exciter le générateur CA synchrone (104) pour former le couplage magnétique entre le générateur CA synchrone (104) et la pluralité de moteurs électriques synchrones (106) comprend :
le réglage, par le contrôleur (112), du niveau de courant de champ à un maximum pour induire une rotation synchrone de l'ensemble de la pluralité de moteurs électriques synchrones (106) et des charges mécaniques respectives à partir de la vitesse nulle ; et
dans lequel la commande du niveau du courant de champ pour maintenir le couplage magnétique pendant l'augmentation progressive de la vitesse de rotation du générateur CA synchrone (104) jusqu'à la condition de pleine vitesse nominale comprend la réduction, par le contrôleur (112), du niveau de courant de champ vers un minimum pendant l'augmentation progressive de la vitesse de rotation du générateur CA synchrone (104) jusqu'à la condition de pleine vitesse nominale.

14. Procédé selon l'une quelconque des revendications 8 à 13, dans lequel la commande, par le contrôleur (112), du niveau de courant de champ pour maintenir le couplage magnétique pendant l'augmentation progressive de la vitesse de rotation du générateur CA synchrone (104) jusqu'à la condition de pleine vitesse nominale comprend l'accélération des moteurs électriques synchrones (106) de manière synchrone avec l'accélération du générateur CA synchrone (104) pendant l'augmentation progressive de la vitesse de rotation du générateur CA synchrone (104) jusqu'à la condition de pleine vitesse nominale et la déduction, par le contrôleur (112), d'un angle de déviation de couple représentatif d'une différence entre une position du rotor du générateur CA synchrone (104) et une position de rotor moyenne de la pluralité de moteurs électriques synchrones (106).
